# EUROPÄISCHE PATENTSCHRIFT

(11) **EP 2 035 507 B1**
(45) Veröffentlichungstag und Bekanntmachung des Hinweises auf die Patenterteilung: **17.11.2010**
(21) Anmeldenummer: 07765428.3
(22) Anmeldetag: 14.06.2007
(51) Int. Cl.: C09B 62/44, C09B 62/475, C09B 62/513, C09B 67/22

(54) **FARBSTOFFMISCHUNGEN VON FASERREAKTIVEN AZOFARBSTOFFEN, IHRE HERSTELLUNG UND IHRE VERWENDUNG**
DYE MIXTURES OF FIBRE-REACTIVE AZO DYES, PRODUCTION AND USE THEREOF
MÉLANGES DE COLORANTS AZO RÉAGISSANT AVEC DES FIBRES, PRODUCTION ET UTILISATION DESDITS MÉLANGES

(30) Priorität: 20.06.2006 DE 102006028229
(43) Veröffentlichungstag der Anmeldung: 18.03.2009
(73) Patentinhaber: DyStar Colours Deutschland GmbH, 65926 Frankfurt am Main (DE)
(72) Erfinder: EHRENBERG, Stefan, 65795 Hattersheim (DE)
(86) Internationale Anmeldenummer: PCT/EP2007/055916
(87) Internationale Veröffentlichungsnummer: WO 2007/147774

(56) Entgegenhaltungen:
- EP-A- 0 785 237
- EP-A- 1 013 720
- WO-A-03/033599
- WO-A-2005/080508
- DE-A1- 10 337 636

## Beschreibung

Die Erfindung liegt auf dem technischen Gebiet der faserreaktiven Azofarbstoffe.

Faserreaktive Tetraazofarbstoffe, ein Verfahren zu deren Herstellung und ihre Verwendung zum Färben oder Bedrucken von textilen Fasermaterialien werden in den Dokumenten WO 03/033599 A und EP-A-0 785 237 offenbart.

Farbstoffmischungen faserreaktiver Azofarbstoffe und deren Verwendung zum Färben von Hydroxygruppen-haltigem Material in blauen bis schwarzen Farbtönen sind beispielsweise aus den Dokumenten US 5,445,654, US 5,611,821 und EP 0 870 807 A1 bekannt. Diese besitzen jedoch gewisse anwendungstechnische Mängel, wie beispielsweise eine zu große Abhängigkeit der Farbausbeute von wechselnden Färbeparametern im Färbeprozeß, oder liefern Färbungen mit noch nicht ausreichenden Echtheiten, was letztendlich die Wirtschaftlichkeit des Färbeprozesses beeinträchtigt.

Infolgedessen besteht weiterhin ein Bedarf nach neuen Reaktivfarbstoffen bzw. Reaktivfarbstoffmischungen mit verbesserten Eigenschaften, wie hohe Substantivität bei gleichzeitig guter Auswaschbarkeit von nicht fixierten Anteilen. Sie müssen darüberhinaus zu Färbungen mit guten Echtheiten führen.

Mit der vorliegenden Erfindung wurden nunmehr Farbstoffmischungen gefunden, die diese oben beschriebenen Eigenschaften in hohem Maße besitzen. Die neuen Farbstoffmischungen zeichnen sich vor allem durch hohe Fixierausbeuten und leichte Auswaschbarkeit der nicht auf der Faser fixierten Anteile aus. Zudem weisen die Färbungen gute Allgemeinechtheiten, wie beispielsweise hohe Lichtechtheit auf und zeigen darüberhinaus eine geringe Tendenz des Anfärbens von Polyamid bei Baumwolle/Polyamid-Mischgewebe.

Die Erfindung betrifft Farbstoffmischungen, die mindestens einen Farbstoff der allgemeinen Formel (I) 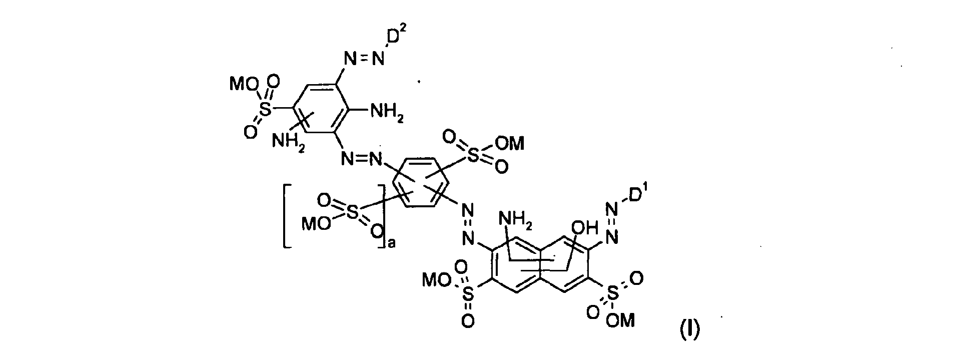 und mindestens einen Farbstoff der allgemeinen Formel (II) 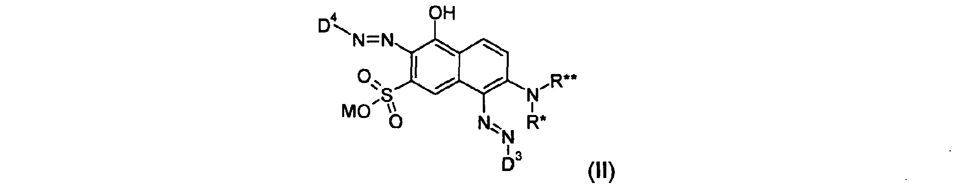 und/oder mindestens einen Farbstoff der allgemeinen Formel (III) 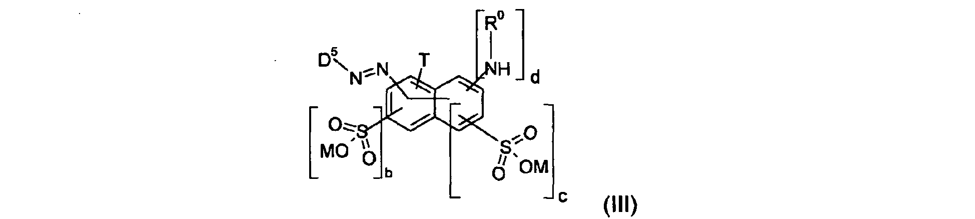 enthalten, worin
D¹ bis D⁵ unabhängig voneinander eine Gruppe der allgemeinen Formel (IV) 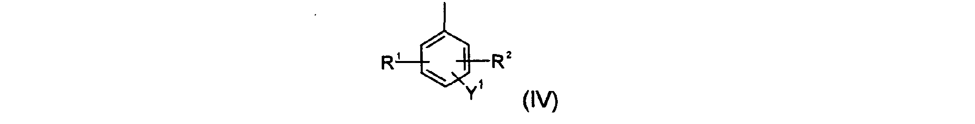 sind, worin
R¹ und R² unabhängig voneinander für Wasserstoff, (C₁-C₄)-Alkyl, (C₁-C₄)-Alkoxy,
Hydroxy, Sulfo, Carboxy, Cyano, Nitro, Amido, Ureido oder Halogen,
Y¹ für Wasserstoff oder eine Gruppe der Formel -SO₂-Z, -NH-CO-(CH₂)ₘ-SO₂-Z, -NH-CO-CH(Hal)-CH₂-Hal oder -NH-CO-CH(Hal)=CH₂,
Z für -CH=CH₂, -CH₂CH₂Z¹ oder Hydroxy,
Z¹ für Hydroxy oder eine unter Alkaliwirkung abspaltbare Gruppe und
Hal für Chlor oder Brom stehen; oder
D¹ bis D⁵ unabhängig voneinander eine Gruppe der allgemeinen Formel (V) 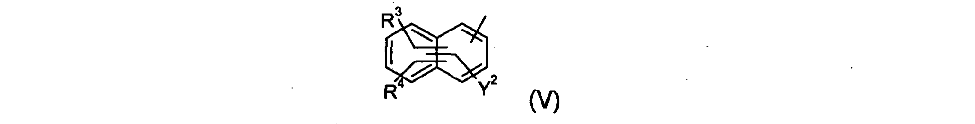 sind, worin
R³ und R⁴ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen und Y² eine der Bedeutungen von Y¹ hat; oder
D¹ bis D⁵ unabhängig voneinander eine Gruppe der allgemeinen Formel (VI) 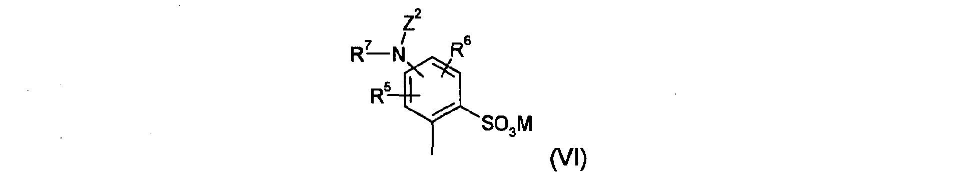 sind, worin
R⁵ und R⁶ unabhängig voneinander eine der Bedeutungen von R¹ oder R² haben;
R⁷ für Wasserstoff, (C₁-C₄)-Alkyl, unsubstituiertes oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl steht; und
Z² eine Gruppe der allgemeinen Formel (VII), (VIII) oder (IX) 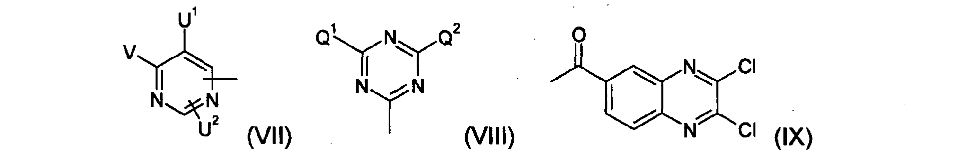 bedeutet, worin
V für Fluor oder Chlor;
U¹ und U² unabhängig voneinander für Wasserstoff, Fluor oder Chlor; und
Q¹und Q² unabhängig voneinander für Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (X) oder (XI) 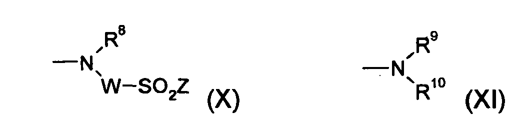 stehen, worin
R⁸ Wasserstoff, (C₁-C₆)-Alkyl, Sulfo-(C₁-C₆)-Alkyl, unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl ist;
R⁹ und R¹⁰ unabhängig voneinander eine der Bedeutungen von R⁸ haben oder zusammen eine Gruppe der Formel -(CH₂)ⱼ- oder -(CH₂)₂-E-(CH₂)₂- bilden, wobei j 4 oder 5 ist und E für Sauerstoff, Schwefel, Sulfonyl oder -NR¹¹ steht und R¹¹ für (C₁-C₆)-Alkyl bedeutet;
W für unsubstituiertes Phenylen, durch 1 oder 2 Substituenten aus der Reihe (C₁-C₄)-Alkyl, (C₁-C₄)-Alkoxy, Carboxy, Sulfo, Chlor und Brom substituiertes Phenylen, unsubstituiertes Naphthylen, durch ein oder zwei Sulfogruppen substituiertes Naphthylen, (C₂-C₆)-Alkylen, durch Sauerstoff, Schwefel, Sulfonyl, Amino, Carbonyl oder Carbonamido unterbrochenes (C₂-C₆)-Alkylen, (C₁-C₄)-Alkylen-phenylen, (C₁-C₄)-Alkylen-naphtylen, unsubstituiertes Phenylen-CONH-Phenylen oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenylen-CONH-Phenylen steht; und
Z die obengenannte Bedeutung hat; oder
D¹ bis D⁵ unabhängig voneinander eine Gruppe der allgemeinen Formel (XII) 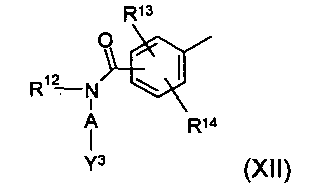 sind, worin
R¹² für Wasserstoff, (C₁-C₄)-Alkyl, unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl;
R¹³ und R¹⁴ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; A eine Phenylengruppe der allgemeinen Formel (XIII) 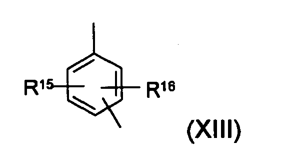 bedeutet, worin
R¹⁵ und R¹⁶ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; oder
A eine Naphthylengruppe der allgemeinen Formel (XIV) 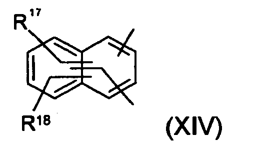 bedeutet, worin
R¹⁷ und R¹⁸ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; oder
A eine Polymethylengruppe der allgemeinen Formel (XV)

-(CR¹⁹R²⁰)ₑ- (XV)

bedeutet, worin
R¹⁹ und R²⁰ unabhängig voneinander für Wasserstoff, (C₁-C₄)-Alkyl, (C₁-C₄)-Alkoxy, Hydroxy, Cyano, Amido, Halogen oder Aryl stehen; und
Y³ für Wasserstoff oder eine Gruppe der Formel -SO₂-Z steht und Z wie oben angegeben definiert ist;
R* und R** unabhängig voneinander für Wasserstoff, (C₁-C₄)-Alkyl oder -CH₂-SO₃M stehen;
R⁰ Wasserstoff, eine der oben definierten Gruppen der allgemeinen Formeln (VII) oder (VIII) oder eine Gruppe der allgemeinen Formel (XVI) 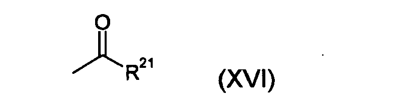 bedeutet, worin
R²¹ für (C₁-C₆)-Alkyl, Sulfo-(C₁-C₆)-Alkyl, Carboxy-(C₁-C₆)-Alkyl, unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl steht;
oder R⁰ für eine Gruppe der allgemeinen Formel (XVII) 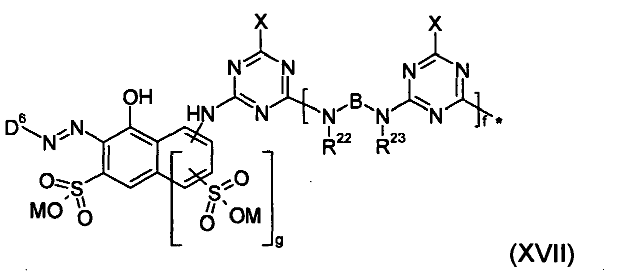 steht, worin
D⁶ eine der Bedeutungen von D¹ bis D⁵ besitzt;
X Halogen oder Hydroxy ist;
B für (C₂-C₆)-Alkylen oder durch Sauerstoff, Schwefel, Sulfonyl, Amino, Carbonyl oder Carbonamido unterbrochenes (C₂-C₆)-Alkylen steht;
R²² und R²³ unabhängig voneinander für Wasserstoff, unsubstituiertes (C₁-C₄)-Alkyl oder durch (C₁-C₄)-Alkoxy, Hydroxy, Cyano, Amido, Halogen substituiertes (C₁-C₄)-Alkyl stehen;
oder R⁰ für eine Gruppe der allgemeinen Formel allgemeinen Formel (XVIII) 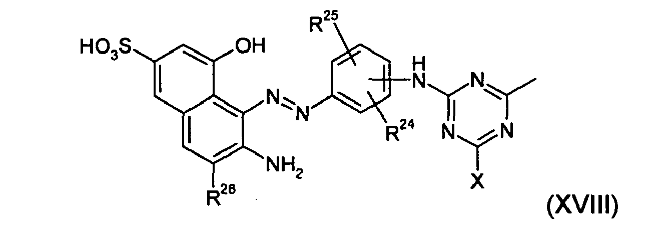 steht, worin
R²⁴ und R²⁵ unabhängig voneinander für Wasserstoff, (C₁-C₄)-Alkyl, (C₁-C₄)-Alkoxy, Sulfo, Carboxy, Amido, Ureido oder Halogen stehen;
R²⁶ für Wasserstoff oder Sulfo steht; und
X wie oben angegeben definiert ist;
T für Hydroxy oder NH₂ steht, wobei bei T gleich NH₂ d für 0 steht;
M Wasserstoff, ein Alkalimetall oder ein Äquivalent eines Erdalkalimetalls bedeutet; und
a für 0 oder 1;
b, c und d unabhängig voneinander für 0 oder 1;
e ganze Zahl größer 1;
f für 0 oder 1; und
g für 0 oder 1 stehen;
wobei die Farbstoffe der allgemeinen Formeln (I), (II), (III) jeweils mindestens eine faserreaktive Gruppe der Formeln -SO₂-Z oder -Z² enthalten.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

(C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl. Analoges gilt für (C₁-C₄)-Alkoxy-, sowie für (C₁-C₄)-Alkylengruppen. (C₁-C₆)-Alkyl-, Alkoxy- bzw. Alkylengruppen können darüberhinaus auch noch Pentyl und Hexyl bzw. Pentoxy und Hexoxy bzw. Pentylen und Hexylen bedeuten.

Arylgruppen sind insbesondere die Phenyl- und die Naphthylgruppe, wobei Phenyl bevorzugt ist.

Halogen ist insbesondere Fluor, Chlor und Brom, wobei Fluor und Chlor bevorzugt sind.

Alkalisch abspaltbare Substituenten Z¹ sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist die Sulfatogruppe Z ist bevorzugt Vinyl, β-Chlorethyl und insbesondere bevorzugt β-Sulfatoethyl.

Die Gruppen "Sulfo", "Carboxy", "Thiosulfato", "Phosphato", und "Sulfato" schließen sowohl deren Säureform als auch deren Salzform ein. Demgemäß entsprechen Sulfogruppen der -SO₃M, Thiosulfatogruppen der -S-SO₃M, Carboxylgruppen der Formel -COOM, Phosphatogruppen der -OPO₃M₂ und Sulfatogruppen der Formel -OSO₃M, wobei M jeweils wie oben angegeben definiert ist.

Die Farbstoffe der allgemeinen Formeln (I), (II) und (III) können innerhalb der Bedeutung von Z unterschiedliche faserreaktive Gruppen -SO₂Z besitzen. Insbesondere können die faserreaktiven Gruppen -SO₂Z zum einen Vinylsulfonylgruppen und zum anderen Gruppen -CH₂CH₂Z¹, bevorzugt β-Sulfatoethylsulfonyl-Gruppen, bedeuten. Enthalten die Farbstoffe der allgemeinen Formel (I), (II) und (III) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

Die Reste R¹ und R² sind bevorzugt Wasserstoff, (C₁-C₄)-Alkyl, (C₁-C₄)-Alkoxy, Sulfo oder Carboxy und besonders bevorzugt Wasserstoff, Methyl, Methoxy oder Sulfo.
Die Reste R³ bis R⁶ und R¹² bis R²⁰ sind bevorzugt Wasserstoff, R³ bis R⁶, R¹⁷ und R¹⁸ sind außerdem bevorzugt Sulfo.

Die Reste R⁷ und R⁸ sind bevorzugt Wasserstoff, Methyl oder Phenyl. R⁹ und R¹⁰ sind bevorzugt Wasserstoff, Methyl, 2-Sulfoethyl, 2-, 3- oder 4-Sulfophenyl oder sie bedeuten zusammen -(CH₂)₂-O-(CH₂)₂-.

In für D¹ bis D⁶ stehenden Gruppen der allgemeinen Formel (V) ist die Diazogruppe bevorzugt in β-Stellung an den Naphthalinkern gebunden.

Beispiele für Gruppen der allgemeinen Formeln (IV) und (V) sind 2-(β-Sulfatoethyl-sulfonyl)-phenyl, 3-(β-Sulfatoethylsulfonyl)-phenyl, 4-(β-Sulfato-ethylsulfonyl)-phenyl, 2-Carboxy-5-(β-sulfatoethylsulfonyl)-phenyl, 2-Chlor-4-(β-sulfatoethylsulfonyl)-phenyl, 2-Chlor-5-(β-sulfatoethylsulfonyl)-phenyl, 2-Brom-4-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Methoxy-5-(β-sulfatoethylsulfonyl)-phenyl, 2-Ethoxy-5-(β-sulfatoethyl-sulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methyl-4-(β-sulfatoethyl-sulfonyl)-phenyl, 2-, 3- und 4-(β-Thiosulfatoethylsulfonyl)-phenyl, 2-Methoxy-5-(β-thiosulfatoethyl-sulfonyl)-phenyl, 2-Sulfo-4-(β-phosphatoethylsulfonyl)-phenyl, 2-, 3- und 4-Vinylsulfonyl-phenyl, 2-Sulfo-4-vinylsulfonyl-phenyl, 2-Chlor-4-(β-chlorethylsulfonyl)-phenyl, 2-Chlor-5-(β-chlorethylsulfonyl)-phenyl, 3- und 4-(β-Acetoxyethylsulfonyl)-phenyl, 6- und 8-(β-Sulfatoethylsulfonyl)-naphth-2-yl, 6-(β-Sulfatoethylsulfonyl)-1-sulfo-naphth-2-yl und 8-(β-Sulfatoethylsulfonyl)-6-sulfo-naphth-2-yl.

Bevorzugt sind 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 3- und 4-Vinylsulfonyl-phenyl, 3-(α,β-Dibrompropionylamino)-phenyl, 4-(α-Bromacryloylamino)-phenyl, 2-Sulfo-4-(α,β-Dibrompropionylamino)-phenyl, 2-Sulfo-4-(α-Bromacryloylamino)-phenyl, 2-Sulfo-5-(α,β-Dibrompropionylamino)-phenyl und 2-Sulfo-5-(α-Bromacryloylamino)-phenyl.

In bevorzugten Gruppen der allgemeinen Formel (VI) bedeuten R⁵ Wasserstoff, R⁶ Wasserstoff oder Sulfo und R⁷ Wasserstoff, Methyl oder Phenyl.

In außerdem bevorzugten Gruppen der allgemeinen Formel (VI) steht Z² für eine Gruppe der allgemeinen Formel (VII), insbesondere für 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 4,5-Difluor-pyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl oder 4-Chlor-pyrimidin-6-yl.

In weiterhin bevorzugten Gruppen der allgemeinen Formel (VI) steht Z² für eine Gruppe der allgemeinen Formel (VIII).

Sofern Q¹ oder Q² in der allgemeinen Formel (VIII) für eine Gruppe der allgemeinen Formel (X) steht, so stehen bevorzugt R⁸ für Wasserstoff, Methyl oder Phenyl und W für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen, 1,2-Ethylen oder 1,3-Propylen.

Beispiele für die Gruppen Q¹ und Q² sind Fluor, Chlor, Hydroxy, Methoxy, Ethoxy, Phenoxy, 3-Sulfophenoxy, 4-Sulfophenoxy, Methylmercapto, Cyanamido, Amino, Methylamino, Ethylamino, Morpholino, Piperidino, Phenylamino, Methylphenylamino, 2-Sulfophenylamino, 3-Sulfophenylamino, 4-Sulfophenylamino, 2,4-Disulfophenylamino, 2,5-Disulfophenylamino, 2-Sulfoethylamino, N-Methyl-2-sulfoethylamino, Pyridino, 3-Carboxypyridino, 4-Carboxypyridino, 3-Carbamoylpyridino, 4-Carbamoylpyridino, 2-(2-Sulfatoethylsulfonyl)-phenylamino, 3-(2-Sulfatoethylsulfonyl)-phenylamino, 4-(2-Sulfatoethylsulfonyl)-phenylamino, N-Ethyl-3-(2-sulfatoethylsulfonyl)-phenylamino, N-Ethyl-4-(2-sulfatoethylsulfonyl)-phenylamino, 2-Carboxy-5-(2-sulfatoethylsulfonyl)-phenylamino), 2-Chlor-4-(2-sulfatoethylsulfonyl)-phenylamino, 2-Chlor-5-(2-sulfatoethylsulfonyl)-phenylamino, 2-Brom-4-(2-sulfatoethylsulfonyl)-phenylamino, 2-Sulfo-4-(2-sulfatoethylsulfonyl)-phenylamino, 2-Sulfo-5-(2-sulfatoethylsulfonyl)-phenylamino, 2-Methoxy-5-(2-sulfatoethylsulfonyl)-phenylamino, 2,5-Dimethoxy-4-(2-sulfatoethylsulfonyl)-phenylamino, 2-Methoxy-5-methyl-4-(2-sulfatoethylsulfonyl)-phenylamino, 2-Methyl-4-(2-sulfatoethylsulfonyl)-phenylamino, 2-(Vinylsulfonyl)-phenylamino, 3-(Vinylsulfonyl)-phenylamino, 4-(Vinylsulfonyl)-phenylamino), N-Ethyl-3-(vinylsulfonyl)-phenylamino, N-Ethyl-4-(vinylsulfonyl)-phenylamino, 6-(2-Sulfatoethylsulfonyl)-naphth-2-ylamino, 8-(2-Sulfatoethylsulfonyl)-naphth-2-ylamino, 8-(2-Sulfatoethylsulfonyl)-6-sulfo-naphth-2-ylamino, 3-(2-(2-Sulfatoethylsulfonyl)-ethylcarbamoyl)-phenylamino, 4-(2-(2-Sulfatoethylsulfonyl)-ethylcarbamoyl)-phenylamino, 3-(2-(Vinylsulfonyl)-ethylcarbamoyl)-phenylamino, 4-(2-(2-Vinylsulfonyl)-ethylcarbamoyl)-phenylamino, 4-(N-Methyl-2-(2-sulfatoethylsulfonyl)-ethylcarbamoyl)-phenylamino, 4-(N-Phenyl-2-(2-sulfatoethylsulfonyl)-ethylcarbamoyl)-phenylamino, 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethy-Isulfonyl)-phenylcarbamoyl)-phenylamino, 3-(2-Sulfatoethylsulfonyl)-propylamino, N-Methyl-N-(2-(2-sulfatoethylsulfonyl)-ethyl)-amino, N-Phenyl-N-(2-(2-sulfatoethylsulfonyl)-ethyl)-amino und N-Phenyl-N-(2-(2-sulfatoethylsulfonyl)-propyl)-amino.

Bevorzugt stehen die Gruppen Q¹ und Q² in der allgemeinen Formel (5) unabhängig voneinander für Fluor, Chlor, Cyanamido, Morpholino, 2-Sulfophenylamino, 3-Sulfophenylamino, 4-Sulfophenylamino, N-Methyl-2-sulfoethylamino, 3-Carboxypyridino, 4-Carboxypyridino, 3-Carbamoylpyridino, 4-Carbamoylpyridino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, N-Methyl-N-(2-(2-sulfatoethylsulfonyl)-ethyl)-amino oder N-Phenyl-N-(2-(2-sulfatoethylsulfonyl)-ethyl)-amino.

Besonders bevorzugt stehen die Gruppen Q¹ und Q² in der allgemeinen Formel (VIII) unabhängig voneinander für Fluor, Chlor, Cyanamido, Morpholino, 2-Sulfophenylamino, 3-Sulfophenylamino, 4-Sulfophenylamino, 3-(2-Sulfatoethyl-sulfonyl)-phenylamino, 4-(2-Sulfatoethylsulfonyl)-phenylamino, 3-(Vinylsulfonyl)-phenylamino, 4-(Vinylsulfonyl)-phenylamino), N-Methyl-N-(2-(2-sulfatoethyl-sulfonyl)-ethyl)-amino oder N-Phenyl-N-(2-(2-sulfatoethylsulfonyl)-ethyl)-amino.

In bevorzugten Gruppen der allgemeinen Formel (XII) bedeuten R¹³ Wasserstoff, R¹⁴ Wasserstoff oder Sulfo und R¹² Wasserstoff, Methyl, Phenyl oder Sulfophenyl. In außerdem bevorzugten Gruppen der allgemeinen Formel (XII) steht die Carbonamid-Gruppe -CO-N(R¹²)-A-X³ bevorzugt in para- oder meta-Position zur Diazogruppe.

In weiterhin bevorzugten Gruppen der allgemeinen Formel (XII) steht A für eine Gruppe der allgemeinen Formel (XIII), worin R¹⁵ und R¹⁶ Wasserstoff bedeuten und sofern Y³ für -SO₂-Z steht, diese bevorzugt in meta- oder para-Stellung zum Stickstoffatom steht.

In weiterhin bevorzugten Gruppen der allgemeinen Formel (XII) steht A für eine Gruppe der allgemeinen Formel (XIV), worin R¹⁷ und R¹⁸ Wasserstoff bedeuten und die Carbonamidgruppe -N(R¹²)-CO- ist in β-Stellung an den Naphthalinkern gebunden.

In weiterhin bevorzugten Gruppen der allgemeinen Formel (XII) steht A für eine Gruppe der allgemeinen Formel (XV), worin R¹⁹ und R²⁰ Wasserstoff bedeuten und k für die Zahl 2 oder 3 steht.

Beispiele für A sind insbesondere 1,2-Phenylen, 1,3-Phenylen, 1,4-Phenylen, 2-Chlor-1,4-phenylen, 2-Chlor-1,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-1,4-phenylen, 2-Methyl-1,4-phenylen, 2,6-Naphthylen, 2,8-Naphthylen, 1-Sulfo-2,6-naphthylen, 6-Sulfo-2,8-naphthylen, 1,2-Ethylen und 1,3-Propylen..

Besonders bevorzugt steht A für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen, 1,2-Ethylen oder 1,3-Propylen, wobei im Falle der beiden zuletzt genannten Alkylengruppen der Rest R¹² bevorzugt Phenyl oder 2-Sulfophenyl bedeutet.

Die Reste R* und R** bedeuten unabhängig voneinander bevorzugt Wasserstoff, Methyl oder -CH₂-SO₃M, wobei Wasserstoff und -CH₂-SO₃M besonders bevorzugt sind.

Der Rest T ist bevorzugt in α-Position an den Naphthalinkern gebunden und bedeutet bevorzugt Hydroxy.

R⁰ steht bevorzugt für Wasserstoff, eine Gruppe der allgemeinen Formel (XVI) worin R²¹ Methyl bedeutet, 2,4-Difluor-pyrimidin-6-yl, 5-Chlor-2,4-difluor-pyrimidin-6-yl oder für eine Gruppe der allgemeinen Formel (5) mit den oben angegebenen besonders bevorzugten Gruppen Q¹ und Q² oder für eine Gruppe der allgemeinen Formel (XVII), worin X bevorzugt für Fluor, Chlor oder Hydroxy und besonders bevorzugt für Chlor und g bevorzugt für 1 stehen.

In der allgemeinen Formel (XVII) stehen R²² und R²³ bevorzugt unabhängig voneinander für Wasserstoff oder Methyl.

In der allgemeinen Formel (XVIII) stehen R²⁴ und R²⁵ bevorzugt für Wasserstoff. b und d stehen bevorzugt für 1 und c steht bevorzugt für 0 oder 1.

Die Reste D¹ bis D⁶ stehen bevorzugt für 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 3- oder 4-Vinylsulfonyl-phenyl, 2-Sulfo-4-(vinylsulfonyl)-phenyl, 2-Methoxy-5-(vinylsulfonyl)-phenyl, 2,5-Dimethoxy-4-(vinylsulfonyl)-phenyl oder 2-Methoxy-5-methyl-4-(vinylsulfonyl)-phenyl.

Bevorzugte erfindungsgemäße Farbstoffmischungen enthalten mindestens einen Farbstoff der allgemeinen Formel (la) 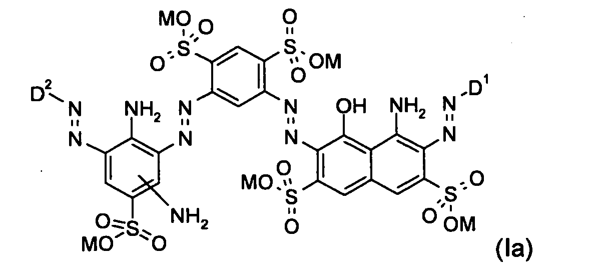 oder der Formel (Ib) 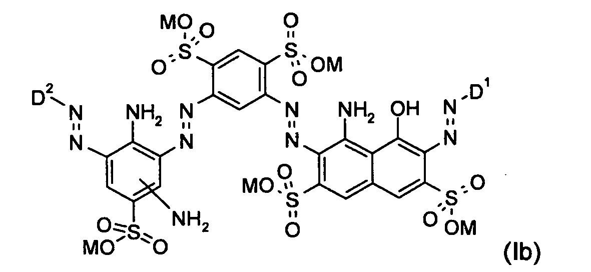 mindestens einen Farbstoff der allgemeinen Formel (IIa) 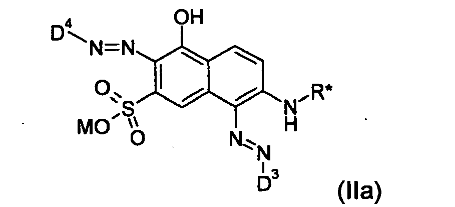 und/oder mindestens einen Farbstoff der allgemeinen Formel (IIIa) 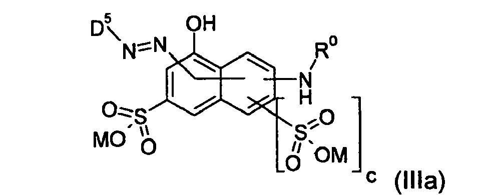 worin D¹ bis D⁵, R*, R⁰, M und c wie oben angegeben definiert sind.

Dabei umfasst der Farbstoff der allgemeinen Formel (IIIa) insbesondere den Farbstoff der allgemeinen Formel (IIIb) 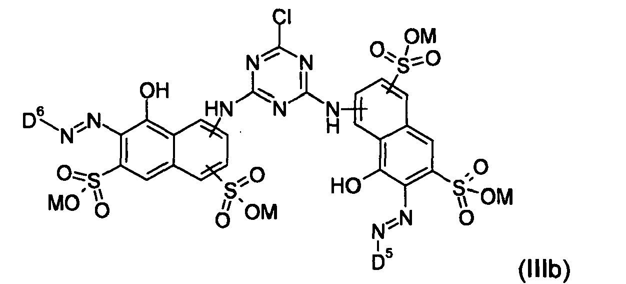 und/oder den Farbstoff der allgemeinen Formel (IIIc) 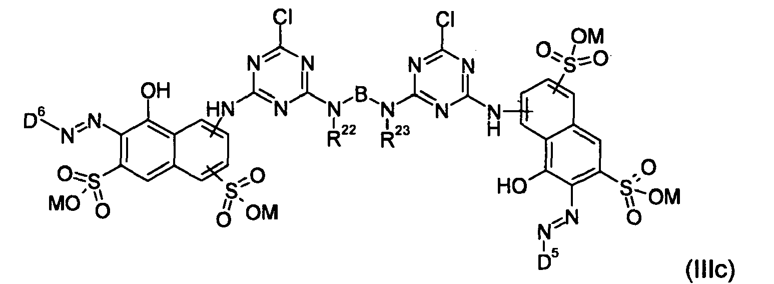 worin D⁵, D⁶, B, R²², R²³ und M wie oben angegeben definiert sind.

Besonders bevorzugte Farbstoffmischungen enthalten mindestens einen Farbstoff der allgemeinen Formel (Ic) 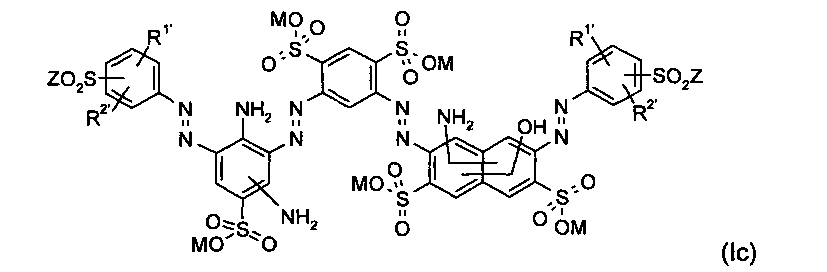 und mindestens einen Farbstoff der allgemeinen Formel (IIb) 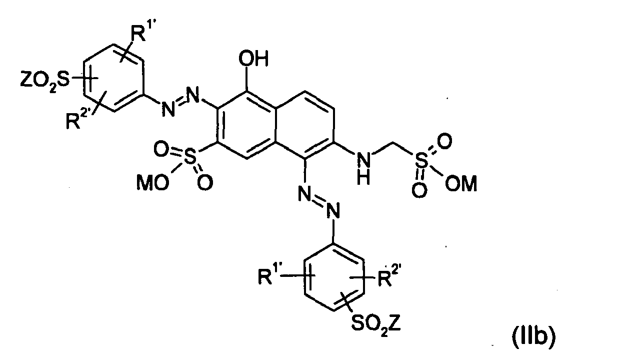 worin
R^{1'} und R^{2'} unabhängig voneinander für Wasserstoff, Methyl, Methoxy oder Sulfo stehen und Z und M wie oben angegeben definiert sind.

Weitere besonders bevorzugte Farbstoffmischungen enthalten mindestens einen Farbstoff der allgemeinen Formel (Ic) und mindestens einen Farbstoff der allgemeinen Formel (IIId) 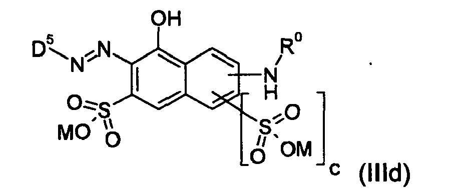 wobei D⁵, R⁰, M und c wie oben angegeben definiert sind.
Dabei umfasst der Farbstoff der allgemeinen Formel (IIId) insbesondere den Farbstoff der allgemeinen Formel (IIIe) 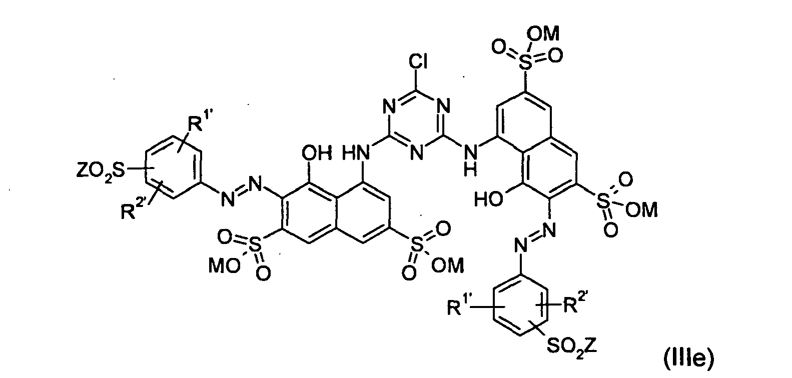 worin

R^{1'} und R^{2'} unabhängig voneinander für Wasserstoff, Methyl, Methoxy oder Sulfo stehen und Z und M wie oben angegeben definiert sind.

Die erfindungsgemäßen Farbstoffmischungen enthalten die Farbstoffe der allgemeinen Formel (I) bevorzugt in einer Menge von 1 bis 99 Gew.-%, besonders bevorzugt 10 bis 90 Gew.-% und Farbstoffe der allgemeinen Formeln (II) oder (III) bevorzugt in einer Menge von 1 bis 99 Gew.-%, bevorzugt 10 bis 90 Gew.-%.

Die erfindungsgemäßen Farbstoffmischungen können zusätzlich zu den Farbstoffen der Formeln (I), (II) bzw. (III) einen oder mehrere Farbstoffe der allgemeinen Formel (XIX) 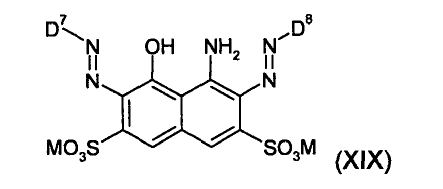 enthalten, worin D⁷ und D⁸ unabhängig voneinander eine der Bedeutungen von D¹ haben und M wie oben angegeben definiert ist.

Sofern die erfindungsgemäßen Farbstoffmischungen einen oder mehrere Farbstoffe der allgemeinen Formel (XIX) enthalten, so liegen diese bevorzugt in Mengen von 0,01 bis 50 Gew.-% und besonders bevorzugt in Mengen von 0,01 bis 20 Gew.-% vor.

Die erfindungsgemäßen Farbstoffmischungen können als Präparation in fester oder in flüssiger (gelöster) Form vorliegen. In fester Form enthalten sie, so weit erforderlich, die bei wasserlöslichen und insbesondere faserreaktiven Farbstoffen üblichen Elektrolytsalze, wie Natriumchlorid, Kaliumchlorid und Natriumsulfat. Desweiteren können sie die in Handelsfarbstoffen üblichen Hilfsmittel enthalten, wie beispielsweise Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, außerdem Färbehilfsmittel, Entstaubungsmittel und geringe Mengen an Sikkativen.

Falls sie in flüssiger, wäßriger Lösung (wobei dieser Begriff Verdickungsmittel enthaltende Produkte umfasst, etwa Druckpasten) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die Präparation, enthalten. Die Puffersubstanzen liegen in der Regel in einer Gesamtmenge von bis zu 5 Gew.-%, bezogen auf die Präparation, vor.

Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%, wobei der Elektrolytsalzgehalt in diesen wäßrigen Lösungen bevorzugt unterhalb 10 Gew.-%, bezogen auf die wäßrige Lösung, beträgt. Die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können beispielsweise dadurch hergestellt werden, dass die Farbstoffe der allgemeinen Formeln (I), (II) bzw. (III), sowie gegebenenfalls der allgemeinen Formel (XIX) in dem gewünschten Mischungsverhältnis miteinander gemischt werden. Die Farbstoffe können dabei in den Mischungsprozess sowohl in Form einer wäßrigen Lösung, insbesondere auch in Form der bei ihrer Herstellung anfallenden Syntheselösungen, als auch als feste Substanz, etwa in Form von Farbstoffpulvern oder -granulaten, eingesetzt werden. Der Fachmann ist mit diesen Mischungsverfahren vertraut.

Alternativ können erfindungsgemäße Farbstoffmischungen auch durch dem Fachmann geläufige Diazotierung und Kupplung geeigneter Mischungen von Diazo-und Kupplungskomponenten in den gewünschten Mengenverhältnissen erhalten werden.

Erfindungsgemäße Farbstoffmischungen, die Farbstoffe der allgemeinen Formeln (I), (II), (III) und/oder (XIX) enthalten, die Gruppen der Formel -SO₂-Z aufweisen, in denen Z für -CH=CH₂ steht, können auch aus entsprechenden erfindungsgemäßen Farbstoffmischungen, in denen Z β-Chlorethyl,
β-Thiosulfatoethyl oder β-Sulfatoethyl bedeutet, erhalten werden, indem letztgenannte Gruppen mit der erforderlichen Menge an Alkali ganz oder teilweise in -CH=CH2 überführt werden. Diese Überführung erfolgt in einer dem Fachmann geläufigen Art und Weise.

Die erfindungsgemäßen Farbstoffmischungen werden aus wäßriger Lösung in an und für sich bekannter Weise durch Aussalzen, beispielsweise mit Kochsalz oder Kaliumchlorid, oder durch Sprühtrocknung bzw. Eindampfen isoliert.

Die Farbstoffe der allgemeinen Formeln (II), (III) und (XIX) sind bekannt. Sie sind beispielsweise in WO 97/25377 A1 (Formel (II)), DE 27 48 965 A1 (Formel (III)) und US 2,657,205 (Formel (XIX)) beschrieben und können nach dem Fachmann bekannten Methoden hergestellt werden.

Dageben sind die Farbstoffe der allgemeinen Formel (I) noch nicht bekannt und somit ebenfalls Gegenstand vorliegender Erfindung.

Diese betrifft somit Farbstoffe der allgemeinen Formel (I) 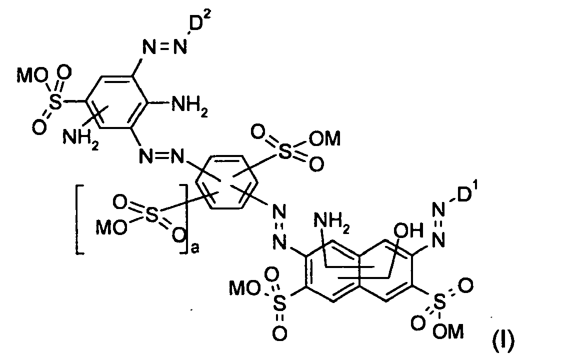 worin D¹, D², a und M wie oben angegeben definiert sind.

Bevorzugte Farbstoffe der allgemeinen Formel (I) sind solche, in denen D¹, D², a und M die oben definierten bevorzugten bzw. besonders bevorzugten Bedeutungen haben. Bevorzugt sind somit Farbstoffe der oben definierten allgemeinen Formeln (Ia) und (Ib), während Farbstoffe der oben definierten allgemeinen Formel (Ic) besonders bevorzugt sind.

Die Farbstoffe der allgemeinen Formel (I) können dadurch hergestellt werden, dass sie aus Verbindungen der allgemeinen Formeln (XX) bis (XXIV) 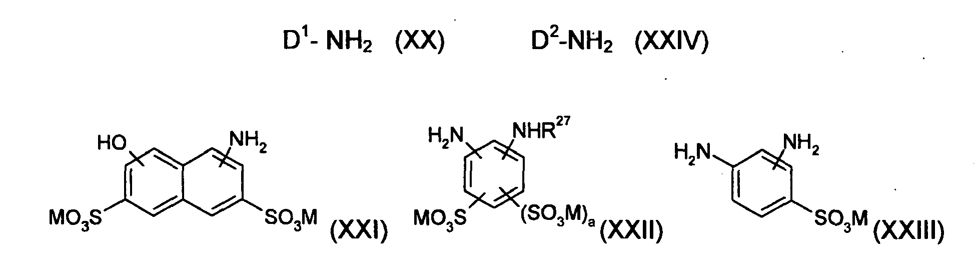 worin D¹, D², a und M wie oben angegebend definiert sind und R²⁷ für eine Schutzgruppe, insbesondere für eine Acylgruppe wie Acetyl oder Maleinyl, steht, in Diazotierungs- und Kupplungsreaktionen in beliebiger Reihenfolge aufgebaut werden. Die Schutzgruppen R²⁷ können nach Durchführung des betreffenden Reaktionsschrittes nach üblichen, dem Fachmann bekannten Verfahren, Acylgruppen insbesondere durch Verseifung, wieder abgespalten und die Synthese des erfindungsgemäßen Farbstoffes fortgesetzt werden.

Beispielsweise kann man so vorgehen, dass man ein Amin der allgemeinen Formel (XX) diazotiert, mit etwa 1 Moläquivalent einer Verbindung der allgemeinen Formel (XXIa) 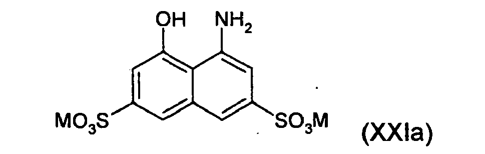 zu einer Verbindung der allgemeinen Formel (XXIV) 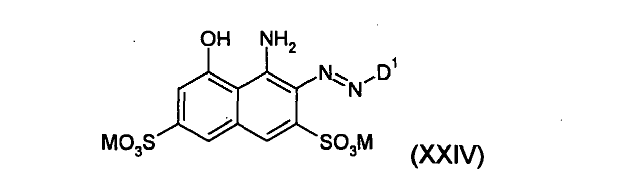 umsetzt, diese mit etwa 1 Moläquivalent eines diazotierten Amins der allgemeinen Formel (XXIIa) 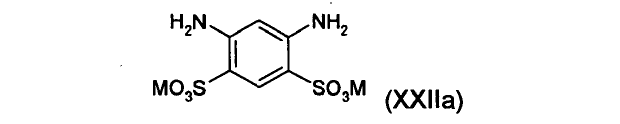 umsetzt, sodann das erhaltene Produkt der allgemeinen Formel (XXV) 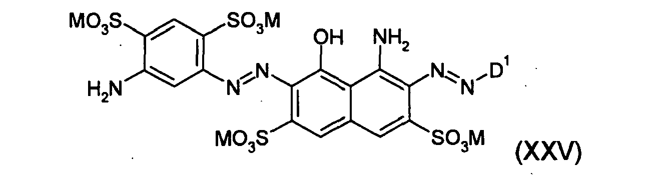 diazotiert und schließlich mit etwa 1 Moläquivalent einer Verbindung der allgemeinen Formel (XXVI) 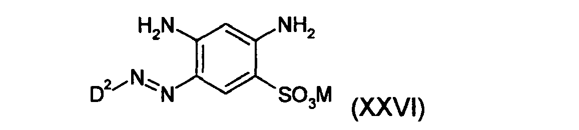 zum Farbstoff der allgemeinen Formel (I) umsetzt.

Die Verbindung der Formel (XXVI) ihrerseits kann durch Diazotierung des Amins der Formel (XXIV) und Kupplung auf eine Verbindung der Formel (XXIIIa) 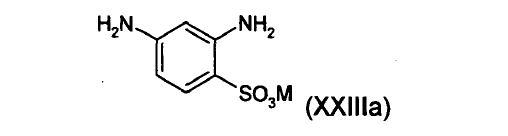 erhalten werden.

Die Diazotierung der Amine der allgemeinen Formeln (XX), (XXII), (XXIV) und (XXV) erfolgt in an sich bekannter Weise, z.B. mit einem Nitrit, z.B. einem Alkalinitrit, in einem mineralsauren Medium, z.B. in einem salzsauren Medium, bei Temperaturen von beispielsweise -5°C bis 40°C, vorzugsweise bei 0°C bis 20°C.

Die Kupplungen auf die Kupplungskomponenten (XXI), (XXIV) und (XXVI) erfolgen ebenfalls in an sich bekannterweise Weise, bei sauren, neutralen bis schwach alkalischen pH-Werten, z.B.einem pH-Wert von 0 bis 8 und Temperaturen von -5°C und 40°C, vorzugsweise 0 bis 30°C.

Dabei findet die Kupplung zu der Verbindung der Formel (XXIV) in saurem Medium, z.B. einem pH-Wert von 0 bis 4, und die Kupplungen zu den Verbindungen der Formeln (XXV) und (I) bei erhöhten pH-Werten, in schwach saurem, neutralen oder schwach alkalischen Medium, z.B. einem pH-Wert von 4 bis 8 statt.

In einer alternativen Vorgehensweise kann eine Verbindung der allgemeinen Formel (XXIIa) diazotiert und in saurem Medium, beispielsweise bei einem pH-Wert von 0 bis 4, auf eine Verbindung der allgemeinen Formel (XXIa) zu der Verbindung der allgemeinen Formel (XXVII) 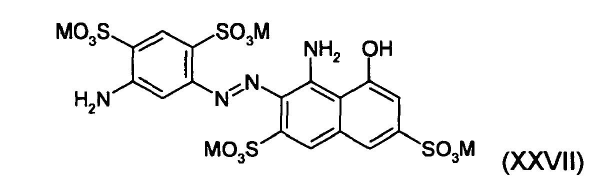 gekuppelt werden.

Anschließend kann die Verbindung der allgemeinen Formel (XX) diazotiert und bei erhöhten pH-Werten, in schwach saurem, neutralen oder schwach alkalischen Medium, z.B. einem pH-Wert von 4 bis 8, auf die Verbindung der allgemeinen Formel (XXVII) gekuppelt werden, so dass die Verbindung der allgemeinen Formel (XXVIII) 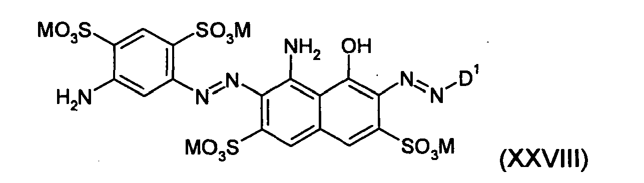 entsteht.

Diese kann schließlich analog zur Verbindung der allgemeinen Formel (XXV) diazotiert und auf eine Verbindung der allgemeinen Formel (XXVI) zum Farbstoff der allgemeinen Formel (I) gekuppelt werden.

In einer weiteren Alternative können die Verbindungen der allgemeinen Formeln (XXV) und (XXVIII) diazotiert und mit der Verbindung der Formel (XXIIIa) umgesetzt werden, gefolgt von einer Umsetzung mit einem diazotierten Amin der allgemeinen Formel (XXIV).

Die erfindungsgemäßen Farbstoffmischungen und Farbstoffe der allgemeinen Formel (I) besitzen wertvolle anwendungstechnische Eigenschaften und können zum Färben und Bedrucken von Hydroxy-gruppenhaltigen Materialien verwendet werden. Die genannten Materialien können beispielsweise in Form von Flächengebilden wie Papier, in Form von Folien oder in Form einer Masse vorliegen. Insbesondere liegen sie aber in Form von Fasern der genannten Materialien vor.

So werden die erfindungsgemäßen Farbstoffmischungen und Farbstoffe der allgemeinen Formel (I) zum Färben und Bedrucken cellulosehaltiger Fasermaterialien aller Art verwendet. Bevorzugt eignen sie sich auch zum Färben oder Bedrucken von Mischgeweben aus Polyamid mit Baumwolle.

Es ist auch möglich, mit den erfindungsgemäßen Farbstoffmischungen und Farbstoffen der allgemeinen Formel (I) Textilien oder Papier nach dem Inkjet-Verfahren zu bedrucken.

Die erfindungsgemäßen Farbstoffmischungen und Farbstoffe der allgemeinen Formel (I) liefern bei diesen Anwendungen grüne bis schwarze Färbungen mit sehr guten Echtheitseigenschaften.

Die vorliegende Erfindung betrifft somit auch die Verwendung der erfindungsgemäßen Farbstoffmischungen und Farbstoffe der allgemeinen Formel (I) zum Färben oder Bedrucken von Hydroxy-gruppenhaltigen Materialien bzw. Verfahren zum Färben oder Bedrucken solcher Materialien in an und für sich üblichen Verfahrensweisen, bei welchen man eine erfindungsgemäße Farbstoffmischung oder einen oder mehrere erfindungsgemäße Farbstoffe der allgemeinen Formel (I) als Farbmittel einsetzt.

Vorteilhafterweise können die bei der Synthese anfallenden Lösungen der erfindungsgemäßen Farbstoffmischungen und Farbstoffe der allgemeinen Formel (I), gegebenenfalls nach Zusatz einer Puffersubstanz, gegebenenfalls auch nach Konzentrieren oder Verdünnen, direkt als Flüssigpräparation der färberischen Verwendung zugeführt werden.

Unter dem Begriff Fasermaterialien oder Fasern werden im Rahmen der vorliegenden Erfindung insbesondere Textilfasern verstanden, die als Gewebe, Garne oder in Form von Strängen oder Wickelkörpern vorliegen können.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Die erfindungsgemäßen Farbstoffmischungen und Farbstoffe der allgemeinen Formel (I) lassen sich auf den genannten Materialein, insbesondere auf den genannten Fasermaterialien, nach den für wasserlösliche, insbesondere nach den für faserreaktive Farbstoffe bekannten Anwendungstechniken applizieren und fixieren. Die Färbeflotten und Druckpasten können außer den erfindungsgemäßen Farbstoffmischungen und Farbstoffen der allgemeinen Formel (I) und Wasser weitere Zusätze enthalten. Zusätze sind beispielsweise Netzmittel, Antischaummittel, Egalisiermittel und die Eigenschaften des Textilmaterials beeinflussende Mittel, wie Weichmachungsmittel, Zusätze zur Flammfestausrüstung und schmutz-, wasser- und ölabweisende oder wasserenthärtende Mittel. Insbesondere Druckpasten können auch natürliche oder synthetische Verdicker, wie beispielsweise Alginate und Celluloseether, enthalten. In den Färbebädern und Druckpasten können die Farbstoffmengen je nach gewünschter Farbtiefe in weiten Grenzen variieren. Im allgemeinen liegen die Farbstoffe der allgemeinen Formel (I) in Mengen von 0,01 bis 15 Gew.%, insbesondere in Mengen von 0,1 bis 10 Gew. % bezogen auf das Färbegut bzw. die Druckpaste vor.

Auf Cellulosefasern erhält man nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, Farbausbeuten. Vorzugsweise wird beim Ausziehverfahren bei einem pH von 9 bis 13, insbesondere bei einem pH von 10 bis 12 gefärbt. Das Flottenverhältnis kann innerhalb eines weiten Bereiches gewählt werden und liegt beispielsweise zwischen 1:3 und 1:50, vorzugsweise zwischen 1:5 und 1:30. Man färbt bevorzugt in wässrigem Bad bei Temperaturen zwischen 40 und 105°C, gegebenenfalls in Gegenwart von üblichen Färbereihilfsmitteln. Zur Erhöhung der Nassechtheiten des gefärbten Materials kann in einer Nachbehandlung nicht fixierter Farbstoff entfernt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Farbstoffmischungen und Farbstoffe der allgemeinen Formel (I) zeichnen sich durch hohe Reaktivität, gutes Fixiervermögen, sehr gutes Aufbauvermögen, sowie hohe Licht- und Schweißlichtechtheit aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Sie eignen sich auch besonders zum Druck auf Baumwolle.

Die erfindungsgemäßen Farbstoffmischungen und Farbstoffe der allgemeinen Formel (I) zeichnen sich dadurch aus, dass sich nach dem Färbeprozess auf dem Fasermaterial nicht fixierte Farbstoffanteile sehr leicht auswaschen lassen, ohne dass Weißwäsche, die sich mit in dem Waschprozess befindet, durch den sich ablösenden Farbstoff angeschmutzt wird. Hieraus ergeben sich Vorteile für den Färbeprozess, in dem Waschzyklen und damit Kosten eingespart werden.

Die mit den erfindungsgemäßen Farbstoffen der allgemeinen Formel (I) hergestellten Färbungen und Drucke besitzen eine hohe Farbstärke und eine hohe Faser-Farbstoff-Bindungs-stabilität sowohl in saurem als auch in alkalischem Bereich, weiterhin eine gute Lichtechtheit und sehr gute Nassechtheits-eigenschaften, wie Wasch-, Wasser-, Seewasser-, Überfärbe- und Schweißechtheiten sowie gute Plissierechtheit, Bügelechtheit und Reibechtheit.

Die vorliegende Erfindung betrifft auch Tinten für den digitalen Textildruck nach dem Ink-Jet Verfahren, die dadurch gekennzeichnet sind, dass sie eine erfindungsgemäße Farbstoffmischung bzw. einen erfindungsgemäßen Farbstoff der allgemeinen Formel (I) enthalten.

Die erfindungsgemäßen Tinten enthalten einen oder mehrere der erfindungsgemäßen Farbstoffe der allgemeinen Formel (I) bzw. die erfindugsgemäße Farbstoffmischung beispielsweise in Mengen von 0,1 Gew.-% bis 50 Gew.-%, bevorzugt in Mengen von 1 Gew.-% bis 30 Gew.-% und besonders bevorzugt in Mengen von 1 Gew.-% bis 15 Gew.-% bezogen auf das Gesamtgewicht der Tinte. Selbstverständlich können die Tinten auch Mischungen aus erfindungsgemäßen Farbstoffmischungen bzw. Farbstoffen der allgemeinen Formel (I) und anderen Farbstoffen, die im Textildruck Verwendung finden, enthalten.

Für den Einsatz der Tinten im Continuous flow Verfahren kann durch Elektrolytzusatz eine Leitfähigkeit von 0,5 bis 25 mS/m eingestellt werden.

Als Elektrolyt eignen sich beispielsweise: Lithiumnitrat, Kaliumnitrit.

Die erfindungsgemäßen Tinten können organische Lösungsmittel mit einem Gesamtgehalt von 1-50%, bevorzugt von 5-30 Gew.-% enthalten.

Geeignete organische Lösungsmittel sind beispielsweise Alkohole, z. B. Methanol, Ethanol, 1-Propanol, Isopropanol, 1-Butanol, tert. Butanol, Pentylalkohol, mehrwertige Alkohole z. B.: 1,2-Ethandiol, 1,2,3-Propantriol, Butandiol, 1,3-Butandiol, 1,4-Butandiol, 1,2-Propandiol, 2,3-Propandiol, Pentandiol, 1,4-Pentandiol, 1,5-Pentandiol, Hexandiol, D,L-1,2-Hexandiol, 1,6-Hexandiol, 1,2,6-Hexantriol, 1,2-Octandiol, Polyalkylenglykole, z. B.: Polyethylenglykol, Polypropylenglykol, Alkylenglykole mit 2 bis 8 Alkylengruppen, z. B.: Monoethylenglykol, Diethylenglykol, Triethylenglykol, Tetraethylenglykol, Thioglykol, Thiodiglykol, Butyltriglykol, Hexylenglykol, Propylenglykol, Dipropylenglykol, Tripropylenglykol, niedrige Alkylether mehrwertiger Alkohole, z. B.: Ethylenglykolmonomethylether, Ethylenglykolmonoethylether, Ethylenglykolmonobutylether, Diethylenglykolmonomethylether, Diethylenglykolmonoethylether, Diethylenglykolmonobutylether, Diethylenglykolmonohexylether, Triethylenglykolmonomethylether, Triethylenglykolmonobutylether, Tripropylenglykolmonomethylether, Tetraethylenglykolmonomethylether, Tetraethylenglykolmonobutylether, Tetraethylenglykoldimethylether, Propylenglykolmonomethylether, Propylenglykolmonoethylether, Propylenglykolmonobutylether, Tripropylenglykolisopropylether, Polyalkylenglykolether, wie z. B.: Polyethylenglokolmonomethylether, Polypropylenglykolglycerolether, Polyethylenglykoltridecytether, Polyethylenglykolnonylphenylether,

Amine, wie z. B.: Methylamin, Ethylamin, Triethylamin, Diethylamin, Dimethylamin, Trimethylamin, Dibutylamin, Diethanolamin, Triethanolamin, N-Formylethanolamin, Ethylendiamin, Harnstoffderivate, wie z. B.: Harnstoff, Thioharnstoff, N-Methylharnstoff, N,N'- epsilon Dimethylharnstoff, Ethylenharnstoff, 1,1,3,3-Tetramethylharnstoff, N-Acetylethanolamin,

Amide, wie z. B.: Dimethylformamid, Dimethylacetamid, Acetamid, Ketone oder Ketoalkohole, wie z. B.: Aceton, Diacetonalkohol, cyclische Ether, wie z. B.; Tetrahydrofuran, Trimethylolethan, Trimethylolpropan, 2- Butoxyethanol, Benzylalkohol, 2-Butoxyethanol, Gamma-butyrolacton, epsilon -Caprolactam, ferner Sulfolan, Dimethylsulfolan, Methylsulfolan, 2,4-Dimethylsulfolan, Dimethylsulfon, Butadiensulfon, Dimethylsulfoxid, Dibutylsulfoxid, N-Cyclohexyl-Pyrrolidon, N- Methyl-2-Pyrrolidon, N-Ethyl-Pyrrolidon, 2-Pyrrolidon, 1-(2-Hydroxyethyl)-2- Pyrrolidon, 1-(3-Hydroxypropyl)-2-Pyrrolidon, 1,3-Dimethyl-2-imidazolidinon, 1,3- Dimethyl-2-imidazolinon, 1,3-Bismethoxymethylimidazolidin, 2-(2- Methoxyethoxy)ethanol, 2-(2-Ethoxyethoxy)ethanol, 2-(2-Butoxyethoxy) ethanol, 2- (2-Propoxyethoxy)ethanol, Pyridin, Piperidin, Butyrolaceton, Trimethylpropan, 1,2-Dimethoxypropan, Dioxan, Ethylacetat, Ethylendiamintetraacetat, Ethylpenthylether, 1,2-Dimethoxypropan und Trimethylpropan.

Weiterhin können die erfindungsgemäßen Tinten die üblichen Zusatzstoffe enthalten, wie beispielsweise Viskositätsmoderatoren um Viskositäten im Bereich von 1,5 bis 40,0 mPas in einem Temperaturbereich von 20 bis 50 °C einzustellen. Bevorzugte Tinten haben eine Viskosität von 1,5 bis 20 mPas und besonders bevorzugte Tinten haben eine Viskosität von 1,5 bis 15 mPas.

Als Viskositätsmoderatoren eignen sich rheologische Additive beispielsweise: Polyvinylcaprolactam, Polyvinylpyrrolidon sowie deren Co-Polymere Polyetherpolyol, Assoziatiwerdicker, Polyharnstoff, Polyurethan, Natriumalginate, modifizierte Galaktomannane, Polyetherharnstoff, Polyurethan, nichtionogene Celluloseether. Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.

Als oberflächenaktive Substanzen eignen sich beispielsweise: Tenside aller Art, bevorzugt nichtionogene Tenside, Butyldiglykol und1,2 Hexandiol.

Weiterhin können die Tinten noch übliche Zusätze, wie beispielsweise Stoffe zur

Hemmung des Pilz- und Bakterienwachstums in Mengen von 0,01 bis 1 Gew.-% bezogen auf das Gesamtgewicht der Tinte enthalten.

Die erfindungsgemäßen Tinten können in üblicher Weise durch Mischen der Komponenten in Wasser hergestellt werden.

Die erfindungsgemäßen Tinten eignen sich für den Einsatz in Tintenstrahldruckverfahren zum Bedrucken der verschiedensten vorpräparierten Materialien, wie Seide, Leder, Wolle, cellulosehaltiger Fasermaterialien aller Art und Polyurethanen, und insbesondere Polyamidfasern. Die erfindungsgemäßen Drucktinten sind auch zum Bedrucken von vorbehandelten hydroxygruppen-haltigen bzw. aminogruppenhaltigen Fasern geeignet, die in Mischgeweben enthalten sind, z. B. von Gemischen aus Baumwolle, Seide, Wolle mit Polyesterfasern oder Polyamidfasern.

Im Gegensatz zum konventionellen Textildruck, bei dem die Druckfarbe bereits sämtliche Fixierchemikalien und Verdickungsmittel für einen Reaktivfarbstoff enthält, müssen beim Ink-Jet-Druck die Hilfsmittel in einem separaten Vorbehandlungsschritt auf das textile Substrat aufgebracht werden.

Die Vorbehandlung des textilen Substrates, wie zum Beispiel Cellulose- und Celluloseregeneratfasem sowie Seide und Wolle - erfolgt vor dem Bedrucken mit einer wässrigen alkalischen Flotte. Zur Fixierung von Reaktivfarbstoffen benötigt man Alkali, beispielsweise Natriumcarbonat, Natriumbicarbonat, Natriumacetat, Trinatriumphosphat, Natriumsilikat, Natriumhydroxid, Alkalispender wie zum Beispiel Natriumchloracetat, Natriumformiat, hydrotrope Substanzen wie zum Beispiel Harnstoff, Reduktionsinhibitoren, wie zum Beispiel Natriumnitrobenzolsulfonate, sowie Verdickungsmittel, die das Fliessen der Motive beim Aufbringen der Druckfarbe verhindern, dies sind beispielsweise Natriumalginate, modifizierte Polyacrylate oder hochveretherte Galaktomannane.

Diese Reagenzien zur Vorpräparierung werden mit geeigneten Auftragsgeräten, beispielsweise mit einem 2- oder 3-Walzenfoulard, mit berührungslosen Sprühtechnologien, mittels Schaumauftrag oder mit entsprechend angepassten Ink-Jet Technologien in definierter Menge gleichmäßig auf das textile Substrat aufgebracht und anschließend getrocknet.

Nach dem Bedrucken wird das textile Fasermaterial bei 120 bis 150 °C getrocknet und anschließend fixiert.

Die Fixierung der mit Reaktivfarbstoffen hergestellten Ink-Jet-Drucke kann erfolgen bei Raumtemperatur, oder mit Sattdampf, mit überhitztem Dampf, mit Heißluft, mit Mikrowellen, mit Infrarotstrahlung, mit Laser- oder Elektronenstrahlen oder mit anderen geeigneten Energieübertragungsarten.

### Man unterscheidet ein- und zweiphasige Fixierungsprozesse:

Bei der einphasigen Fixierung befinden sich die zur Fixierung notwendigen Chemikalien bereits auf dem textilen Substrat.

Bei der zweiphasigen Fixierung kann diese Vorbehandlung unterbleiben. Zur Fixierung wird nur Alkali benötigt, das nach dem Ink-Jet-Druck vor dem Fixierprozess ohne Zwischentrocknung aufgebracht wird. Auf weitere Zusätze wie Harnstoff oder Verdickungsmittel kann verzichtet werden.

Im Anschluss an die Fixierung wird die Drucknachbehandlung durchgeführt, die die Voraussetzung für gute Echtheiten, hohe Brillanz und einen einwandfreien Weißfond ist.

Die mit den erfindungsgemäßen Tinten hergestellten Drucke besitzen, eine hohe Farbstärke und eine hohe Faser-Farbstoff-Bindungsstabilität sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweißechtheiten, sowie eine gute Plissierechtheit, Bügelechtheit und Reibechtheit.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze; wie Natrium-oder Kaliumsalze, in die Synthese eingesetzt werden.

### Beispiel 1

Nach Zugabe von 17,5 Teilen 40 %-iger Natriumnitritlösung zu einer neutralen Lösung von 26,8 Teilen 1,3-Diaminobenzol-4,6-disulfonsäure in 300 Teilen Wasser wird die erhaltene Mischung schnell zu einer Mischung von 200 Teilen Eis und 35 Teile 31 %-iger Salzsäure gegeben. Man rührt 10 min. nach und zerstört den Nitritüberschuss durch Zugabe von Amidosulfonsäure.

Zu der Diazotierungslösung wird eine Lösung von 69,1 Teilen der Verbindung der Formel (XXIX) 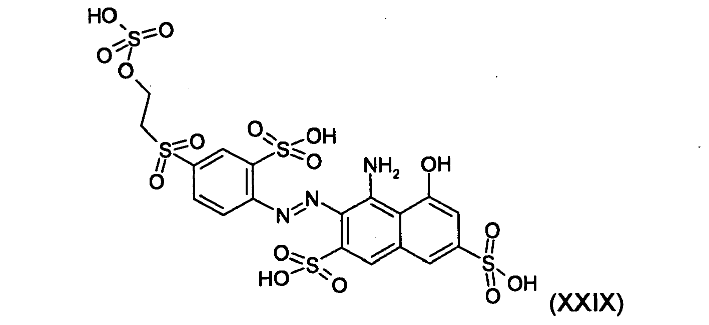 bekannt z.B. aus WO 2004/088031, in 1000 Teilen Wasser gegeben. Mit 15 %-iger Sodalösung wird der pH-Wert auf 5,5 gestellt und gehalten. Nach beendeter Kupplung wird die erhaltene Lösung auf 10 °C abgekühlt und mit 18 Teilen 40 %-iger Natriumnitritlösung versetzt. Die Lösung wird innerhalb von 15 min. zu einer Mischung von 200 Teilen Eis und 35 Teilen 31 %-iger Salzsäure gegeben. Man rührt 60 min. nach und zerstört den Nitritüberschuss durch Zugabe von Amidosulfonsäure.

Anschließend werden 45,6 Teile der Verbindung der Formel (XXX) 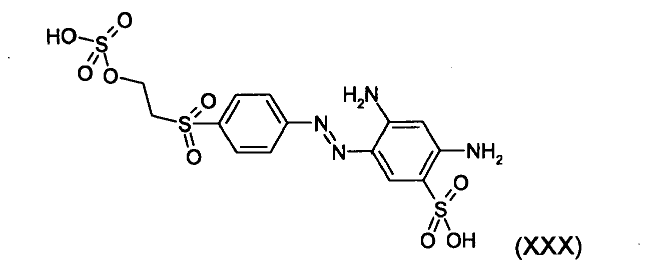 bekannt z.B. aus EP 0 870 807 A1, zugegeben.

Mit 15 %-iger Sodalösung wird der pH-Wert auf 5,5 gestellt und gehalten.

Die Temperatur wird bei 5 -10 °C gehalten. Nach beendeter Kupplung wird der erfindungsgemäße Farbstoff der Formel (Id) 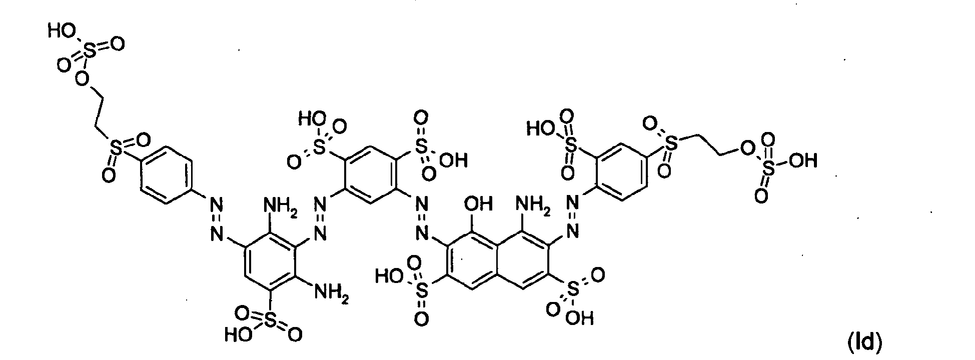 (in Form der freien Säure geschrieben) in üblicher Weise als Alkalisalz, wie Natriumsalz, isoliert, beispielsweise durch Aussalzen mit Natriumchlorid und getrocknet. Der Farbstoff liefert unter den für Reaktivfabstoffe üblichen Färbebedingungen auf Baumwolle grüne Färbungen mit guten Echtheiten.

### Beispiel 2

Nach Zugabe von 17,5 Teilen 40 %-iger Natriumnitritlösung zu einer neutralen Lösung von 26,8 Teilen 1,3-Diaminobenzol-4,6-disulfonsäure in 300 Teilen Wasser wird die erhaltene Mischung schnell zu einer Mischung von 200 Teilen Eis und 35 Teile 31 %-iger Salzsäure gegeben. Man rührt 10 min. nach und zerstört den Nitritüberschuss durch Zugabe von Amidosulfonsäure.
Zu der Diazotierung wird eine Lösung von 61,1 Teilen der Verbindung der Formel (XXXI) 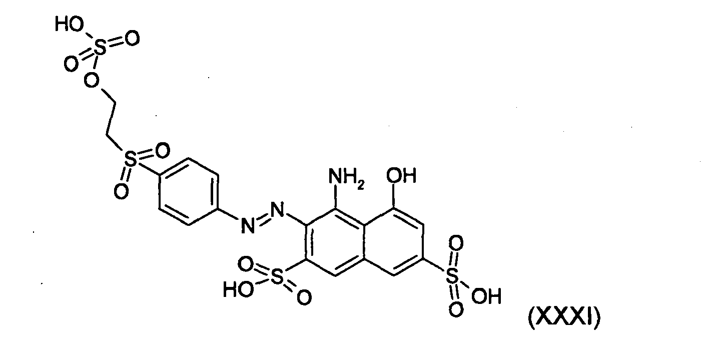 in 300 Teilen Wasser gegeben.
Mit 15 %-iger Sodalösung wird der pH-Wert auf 5,5 gestellt und gehalten.
Nach beendeter Kupplung wird die erhaltene Lösung auf 10 °C abgekühlt und mit 18 Teilen 40 %-iger Natriumnitritlösung versetzt. Die Lösung wird innerhalb von 15 min. zu einer Mischung von 200 Teilen Eis und 35 Teilen 31 %-iger Salzsäure gegeben. Man rührt 60 min. nach und zerstört den Nitritüberschuss durch Zugabe von Amidosulfonsäure.

Anschließend werden 53,2 Teile der Verbindung der Formel (XXXII) 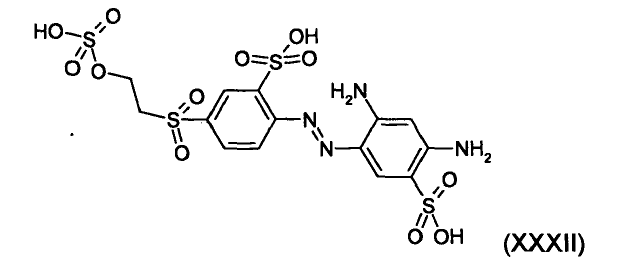 bekannt z.B. aus EP 0 870 807 A1, zugegeben.

Mit 15 %-iger Sodalösung wird der pH-Wert auf 5,5 gestellt und gehalten. Die Temperatur wird bei 5 -10 °C gehalten. Nach beendeter Kupplung wird der erfindungsgemäße Farbstoff der Formel (Ie) 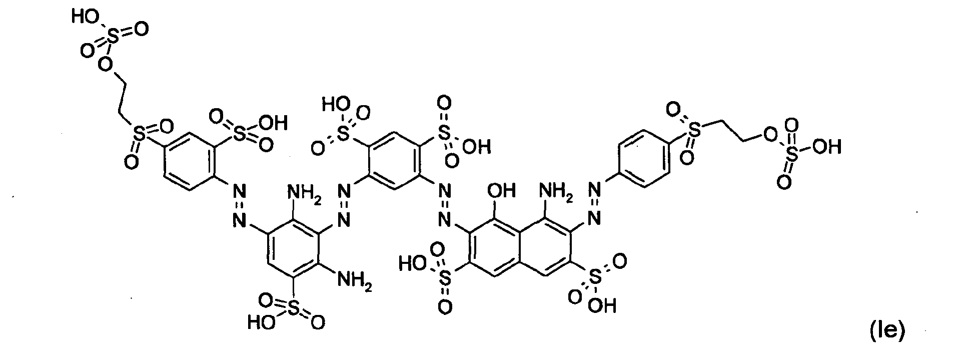 (in Form der freien Säure geschrieben) in üblicher Weise als Alkalisalz, wie Kaliumsalz, isoliert, beispielsweise durch Aussalzen mit Kaliumchlorid und getrocknet. Der Farbstoff liefert unter den für Reaktivfabstoffe üblichen Färbebedingungen auf Baumwolle grüne Färbungen mit guten Echtheiten.

### Beispiel 3

Nach Zugabe von 17,5 Teilen 40 %-iger Natriumnitritlösung zu einer neutralen Lösung von 26,8 Teilen 1,3-Diaminobenzol-4,6-disutfonsäure in 300 Teilen Wasser wird die erhaltene Mischung schnell zu einer Mischung von 200 Teilen Eis und 35 Teile 31 %-iger Salzsäure gegeben. Man rührt 10 min. nach und zerstört den Nitritüberschuss durch Zugabe von Amidosulfonsäure.

Zu der Diazotierung wird eine Lösung von 91,1 Teilen der Verbindung der Formel (XXXIII) 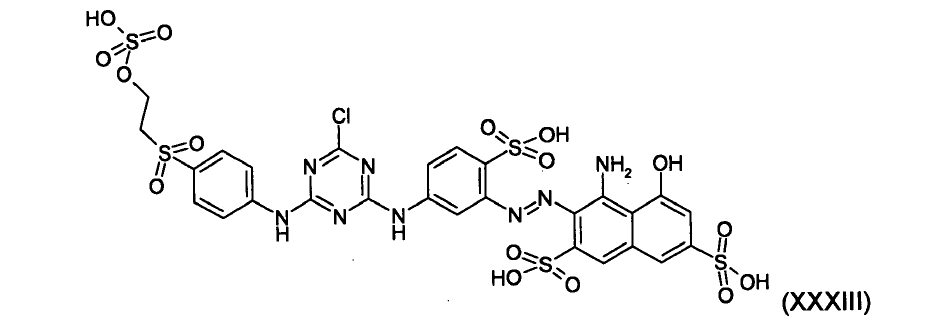 in 1000 Teilen Wasser gegeben.
Mit 15 %-iger Sodalösung wird der pH-Wert auf 5,5 gestellt und gehalten.

Nach beendeter Kupplung wird die erhaltene Lösung auf 10 °C abgekühlt und mit 18 Teilen 40 %-iger Natriumnitritlösung versetzt. Die Lösung wird innerhalb von 15 min. zu einer Mischung von 200 Teilen Eis und 35 Teilen 31 %-iger Salzsäure gegeben. Man rührt 60 min. nach und zerstört den Nitritüberschuss durch Zugabe von Amidosulfonsäure.

Anschließend werden 53,2 Teile der Verbindung der Formel (XXXII) - siehe Beispiel 2 - zugegeben.

Mit 15 %-iger Sodalösung wird der pH-Wert auf 5,5 gestellt und gehalten.

Die Temperatur wird bei 5 - 10 °C gehalten. Nach beendeter Kupplung wird der erfindungsgemäße Farbstoff der Formel (If) 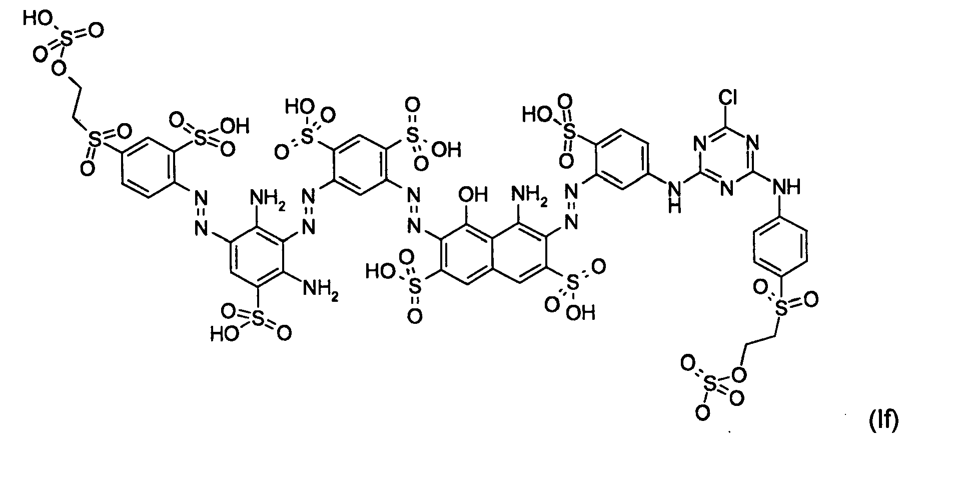 (in Form der freien Säure geschrieben) durch Aussalzen mit Natriumchlorid isoliert und getrocknet. Der Farbstoff liefert unter den für Reaktivfabstoffe üblichen Färbebedingungen auf Baumwolle grüne Färbungen.

### Beispiel 4

### a) Man löst 28,1 Teile 4-(2'-Sulfatoethylsulfonyl)-anilin in 250 Teilen Wasser durch Neutralisation mit festem Natriumhydrogencarbonat. In die Lösung gibt man 4,2 Teile Natriumfluorid und kühlt durch Zugabe von Eis auf 0°C bis 5°C ab.

Man tropft nun innerhalb von 5 min. 13,3 Teile Trifluortriazin zu. Nach beendeter Zugabe rührt man weitere 15 min. nach. Dann tropft man eine auf 0 bis 5°C abgekühlte, neutralisierte Lösung von 18,8 Teilen 2,4-Diaminobenzol-sulfonsäure in Wasser zu und stellt den pH-Wert auf 6,0 bis 6,5 ein.

Die Temperatur wird bei 0 bis 5°C gehalten. Nach beendeter Reaktion wird die erhaltene Lösung filtriert und das Filtrat mit 6,9 g Natriumnitrit versetzt.

Die Lösung mit einer Temperatur von ca. 10 °C, wenn erforderlich abkühlen, wird innerhalb von 30 min. auf eine Mischung von 100 Teilen Eis und 60 Teilen 31 %-ige Salzsäure gegeben. Man rührt eine Stunde nach und zerstört den Nitritüberschuß durch Zugabe von Amidosulfonsäure.

Die saure Diazotierung wird innerhalb von 20 min. bei 2 - 5°C zu einer neutralen Lösung von 17,9 Teilen 1,3-Phenylendiamin-4-sulfonsäure in 250 Teilen Wasser gegeben. Der pH-Wert wird mit 15 %-iger Sodalösung bei 4,5 - 5,5.

### b) Nach Zugabe von 17,5 Teilen 40 %-iger Natriumnitritlösung zu einer neutralen Lösung von 26,8 Teilen 1,3-Diaminobenzol-4,6-disulfonsäure in 300 Teilen Wasser wird die erhaltene Mischung schnell zu einer Mischung von 200 Teilen Eis und 35 Teile 31 %-iger Salzsäure gegeben. Man rührt 10 min. nach und zerstört den Nitritüberschuss durch Zugabe von Amidosulfonsäure.

Zu der Diazotierung wird eine Lösung von 61,1 Teilen der Verbindung der Formel (XXXI) - siehe Beispiel 2 - in 300 Teilen Wasser gegeben.

Mit 15 %-iger Sodalösung wird der pH-Wert auf 5,5 gestellt und gehalten.

Nach beendeter Kupplung wird die erhaltene Lösung auf 10 °C abgekühlt und mit 18 Teilen 40 %-iger Natriumnitritlösung versetzt. Die Lösung wird innerhalb von 15 min. zu einer Mischung von 200 Teilen Eis und 35 Teilen 31 %-iger Salzsäure gegeben. Man rührt 60 min. nach und zerstört den Nitritüberschuss durch Zugabe von Amidosulfonsäure.

Anschließend wird die unter a) erhaltene Reaktionsmischung zugegeben. Mit 15 %-iger Sodalösung wird der pH-Wert auf 5,5 gestellt und gehalten.

Die Temperatur wird bei 5 - 10 °C gehalten. Nach beendeter Kupplung wird der erfindungsgemäße Farbstoff der Formel (Ig) 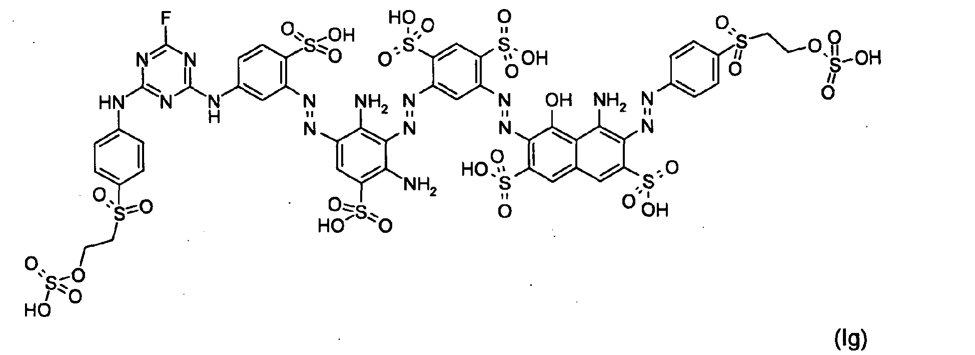 (in Form der freien Säure geschrieben) durch Aussalzen mit Natriumchlorid isoliert und getrocknet. Der Farbstoff liefert unter den für Reaktivfabstoffe üblichen Färbebedingungen auf Baumwolle grüne Färbungen.

Die Verbindungen der nachstehenden Beispiele 5 bis 14 können analog zu den in den Beispielen 1 bis 4 beschriebenen Verfahren hergestellt werden.

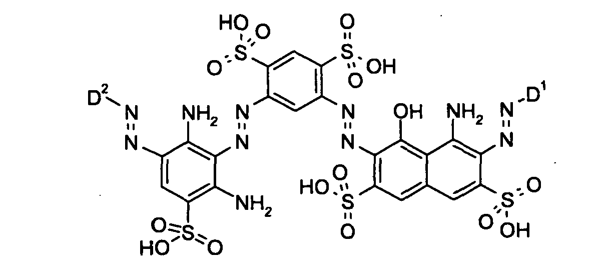

| Beispiel | D² | D¹ | Farbton |
|---|---|---|---|
| 5 | 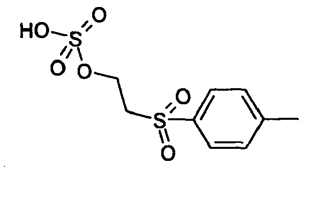 | 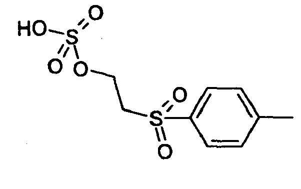 | grün |
| 6 | 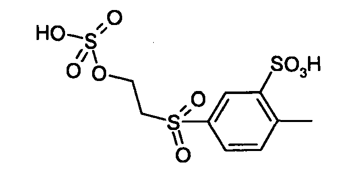 | 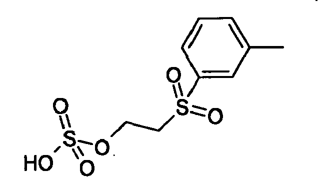 | grün |
| 7 | 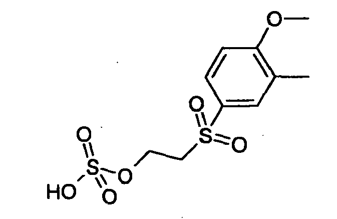 | 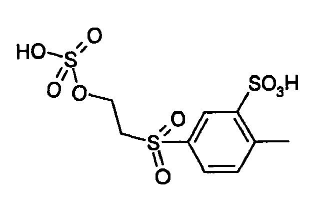 | grün |
| 8 | 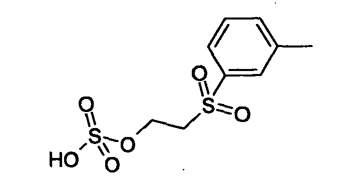 | 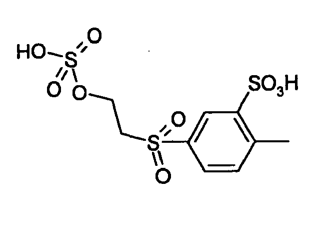 | grün |
| 9 | 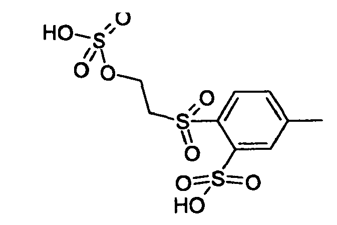 | 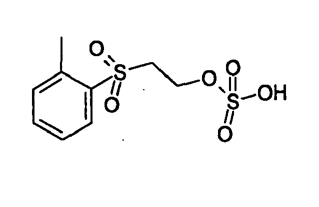 | grün |
| 10 | 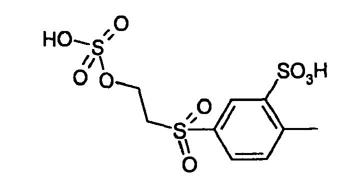 | 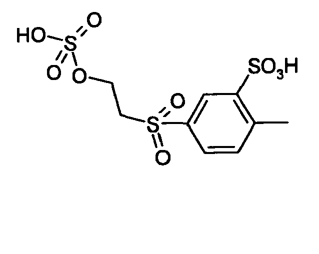 | grün |
| 11 | 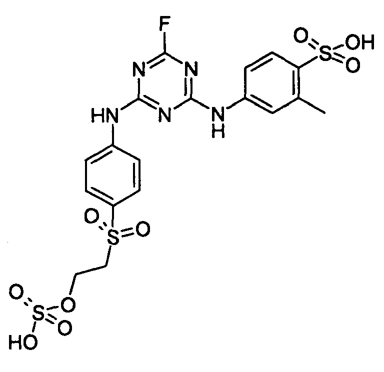 | 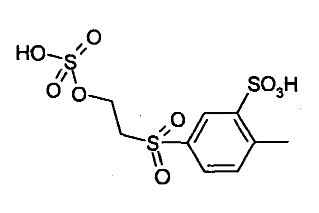 | grün |
| 12 | 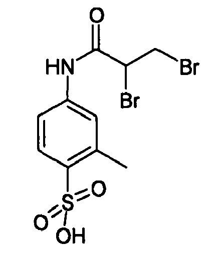 | 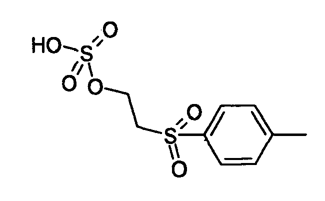 | grün |
| 13 | 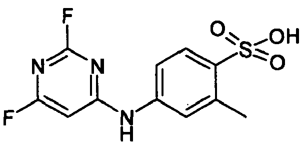 | 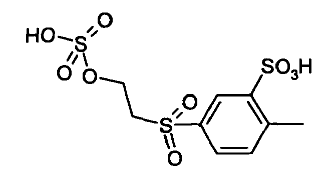 | grün |
| 14 | 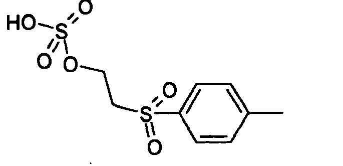 | 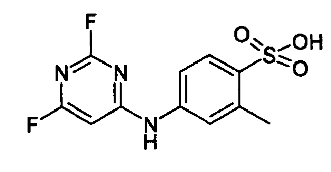 | grün |

### Beispiel 15

Nach Zugabe von 17,5 Teilen 40 %-iger Natriumnitritlösung zu einer neutralen Lösung von 26,8 Teilen 1,3-Diaminobenzol-4,6-disulfonsäure in 300 Teilen Wasser wird die erhaltene Mischung schnell zu einer Mischung von 200 Teilen Eis und 35 Teile 31 %-iger Salzsäure gegeben. Man rührt 10 min. nach und zerstört den Nitritüberschuss durch Zugabe von Amidosulfonsäure.

Zu der Diazotierung wird eine Lösung von 58,0 Teilen der Verbindung der Formel (XXXI) - siehe Beispiel 2 - in 300 Teilen Wasser gegeben.

Mit 15 %-iger Sodalösung wird der pH-Wert auf 5,5 gestellt und gehalten.

Nach beendeter Kupplung wird die erhaltene Lösung auf 10 °C abgekühlt und mit 18 Teilen 40 %-iger Natriumnitritlösung versetzt. Die Lösung wird innerhalb von 15 min. zu einer Mischung von 200 Teilen Eis und 35 Teilen 31 %-iger Salzsäure gegeben. Man rührt 60 min. nach und zerstört den Nitritüberschuss durch Zugabe von Amidosulfonsäure. Zu der Diazotierung wird eine bei pH = 5 hergestellte Lösung von 18,8 Teilen 2,4-Diaminobenzol-sulfonsäure in 150 Teilen Wasser gegeben. Bei einem mit gesättigter Natriumhydrogencarbonat gehaltenen pH-Wert von 1,6 - 2,0 und einer Temperatur von 0 - 5°C wird die Kupplung durchgeführt.

Nach beendeter Kupplung wird die Verbindung der Formel (XXXIV) 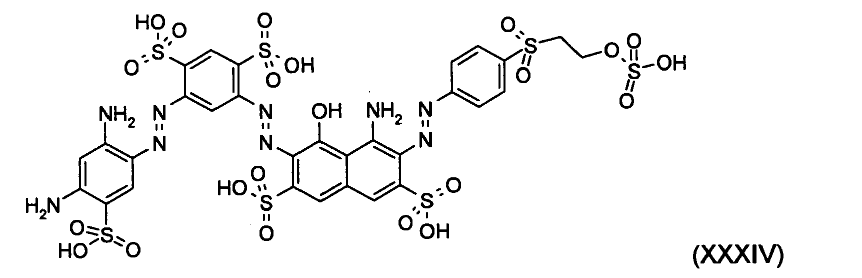 durch Aussalzen mit Natriumchlorid isoliert.
126,7 Teile der Verbindung der Formel (XXXIV) mit einem Gehalt von 43% werden in ca. 1000 Teilen Wasser bei pH = 5 - 5,5 gelöst. Zu dieser Lösung wird eine nach üblichem Verfahren mit Natriumnitrit und Salzsäure diazotierte Lösung von 14,2 Teilen 4-(2'-Sulfatoethylsulfonyl)-anilin in 130 Teilen Wasser gegeben. Der pH - Wert wird mit 15 % iger Sodalösung bei 5,0 - 5,5 gehalten.

Nach beendeter Kupplung wird der erfindungsgemäße Farbstoff der Formel (Ih) 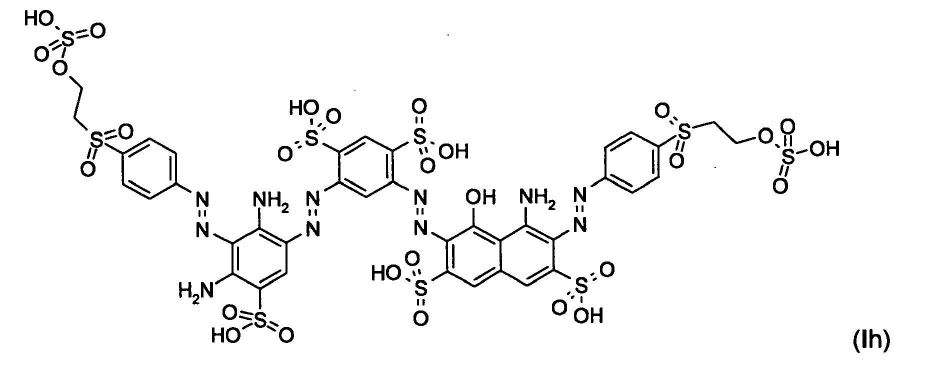 (in Form der freien Säure geschrieben) durch Aussalzen mit Natriumchlorid isoliert und getrocknet. Der Farbstoff liefert unter den für Reaktivfabstoffe üblichen Färbebedingungen auf Baumwolle grüne Färbungen.

Die Farbstoffe der nachstehenden Beispiele 16 bis 25 können ebenfalls analog zu den vorstehend beschriebenen Verfahren hergestellt werden.

| | | | |
|---|---|---|---|
| 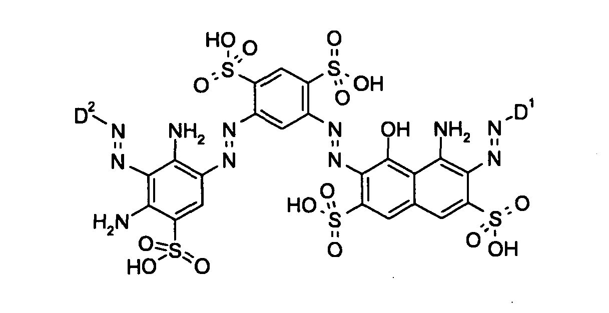 | | | |

| Beispiel | D² | D¹ | Farbton |
|---|---|---|---|
| 16 | 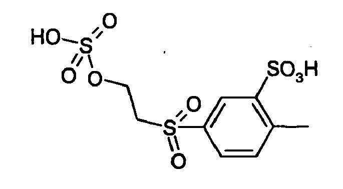 | 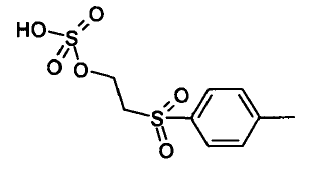 | grün |
| 17 | 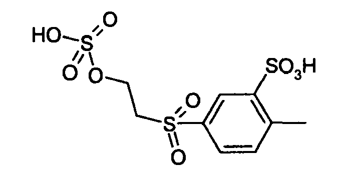 | 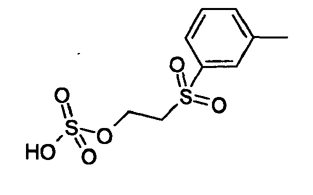 | grün |
| 18 | 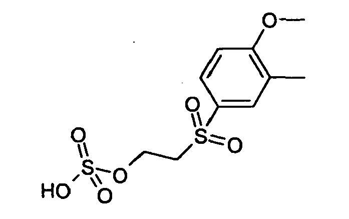 | 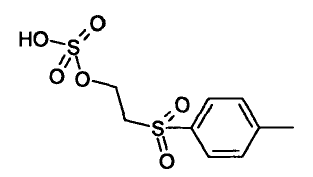 | grün |
| 19 | 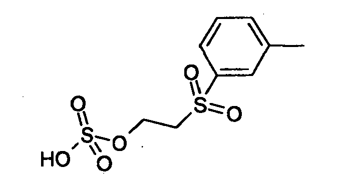 | 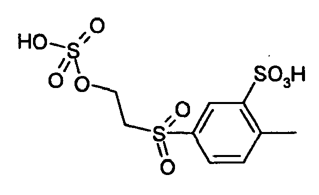 | grün |
| 20 | 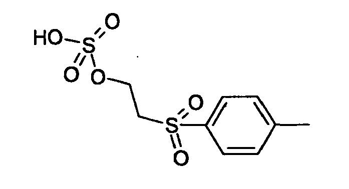 | 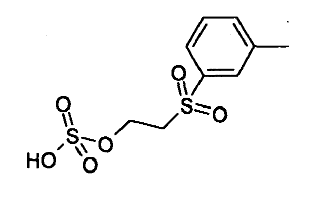 | grün |
| 21 | 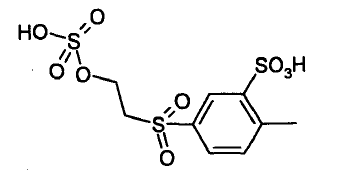 | 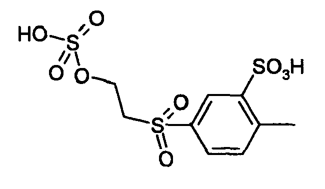 | grün |
| 22 | 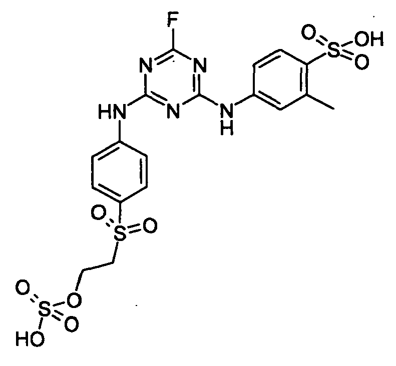 | 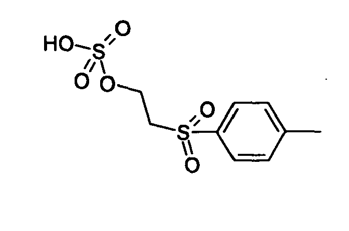 | grün |
| 23 | 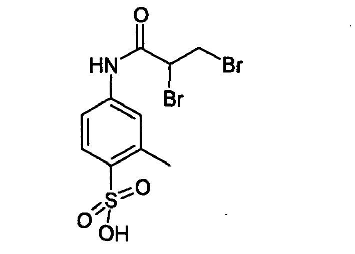 | 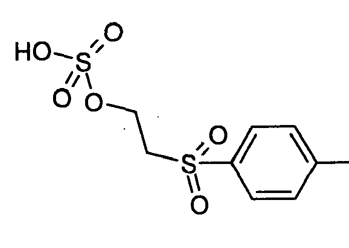 | grün |
| 24 | 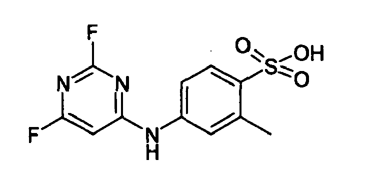 | 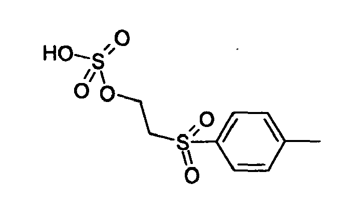 | grün |
| 25 | 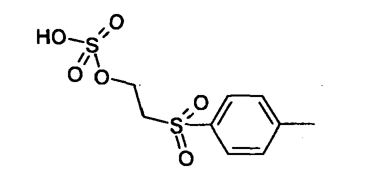 | 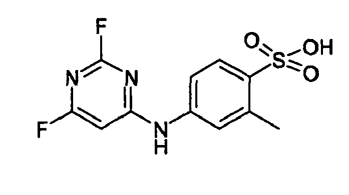 | grün |

### Beispiel 26

Nach Zugabe von 17,5 Teilen 40 %-iger Natriumnitritlösung zu einer neutralen Lösung von 26,8 Teilen 1,3-Diaminobenzol-4,6-disulfonsäure in 300 Teilen Wasser wird die erhaltene Mischung schnell zu einer Mischung von 200 Teilen Eis und 35 Teile 31 %-iger Salzsäure gegeben. Man rührt 10 min. nach und zerstört den Nitritüberschuss durch Zugabe von Amidosulfonsäure.

Eine Lösung von 30,3 Teilen 1-Amino-8-hydroxy-3,6-disulfonsäure in 200 Teilen Wasser mit einem pH - Wert von 5,5 wird innerhalb von 10 Minuten zur Diazoniumsalzlösung gegeben. Die Kupplung wird bei 0-5 °C durchgeführt. Der pH-Wert wird mit 10 %iger Natriumbicarbonatlösung bei 1,6 - 2,0 gehalten. Nach beendeter Kupplung wird der pH-Wert auf 5,0 angehoben und die Kühlung entfernt. 34,22 Teile 4-(β-Sulfatoethylsulfonyl)anilin-2-sulfonsäure werden in 300 Teilen Wasser mit 15 % iger Sodalösung neutral gelöst und sofort auf 0 °C abgekühlt. 6,7 Teile Natriumnitrit, 50 Teile Eis und 30 Teile konzentrierte Salzsäure werden zugegeben. Nach 2 Stunden wird überschüssiges Nitrit mit Amidosulfonsäure zerstört. Die Diazotierung wird anschließend zum Monoazofarbstoff gegeben. Mit 15 %iger Sodalösung wird der pH-Wert bei 5,0 - 5,5 gehalten. Nach beendeter Kupplung wird die Reaktionsmischung mit 6,7 Teilen Natriumnitrit versetzt und innerhalb von 15 Minuten auf eine gekühlte Vorlage aus 35 Teilen 31% iger Salzsäure und 300 Teilen Eis gegeben. Die Diazotierung wird bei 0-5°C durchgeführt.

Nach 60 Minuten wird überschüssiges Nitrit zerstört. In die Diazotierung werden 24 Teile der Verbindung der Formel (XXX) - siehe Beispiel 1 - gegeben. Der pH - Wert wird mit 15 %iger Sodalösung auf 5,0 - 5,5 gestellt und gehalten. Die Temperatur wird bei 5 - 10 °C gehalten.

Die Reaktion wird dünnschichtchromatisch verfolgt. Wenn erforderlich, werden weitere Mengen der Verbindung der Formel (XXX) bis zur vollständigen Kupplung nachgesetzt.

Der erfindungsgemäße Farbstoff der Formel (Ij) 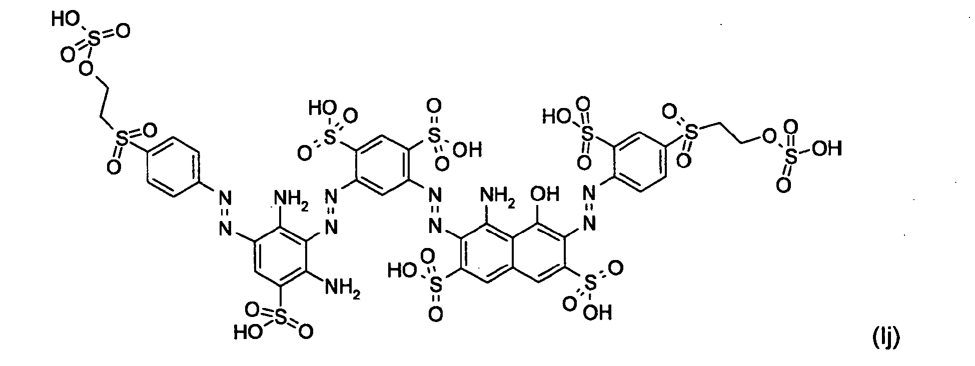 (in Form der freien Säure geschrieben) kann mit Ethanol gefällt, isoliert und getrocknet werden. Der Farbstoff liefert unter den für Reaktivfabstoffe üblichen Färbebedingungen auf Baumwolle grünstichig blaue Färbungen.

Die Farbstoffe der nachstehenden Beispiele 27 bis 36 können ebenfalls analog zu den vorstehend beschriebenen Verfahren hergestellt werden.

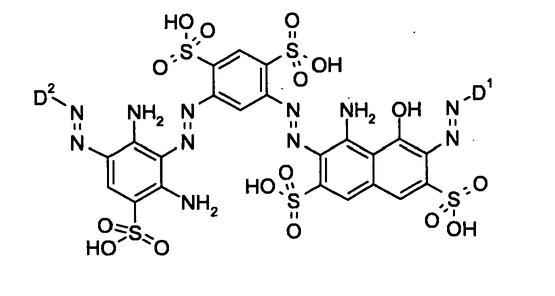

| Beispiel | D² | D¹ | Farbton |
|---|---|---|---|
| 27 | 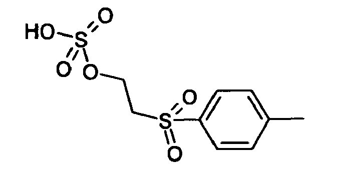 | 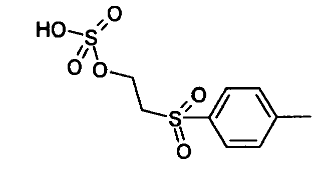 | grün |
| 28 | 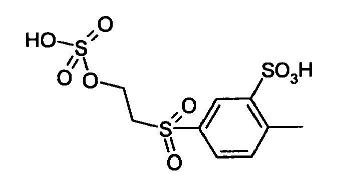 | 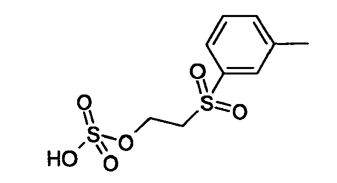 | grün |
| 29 | 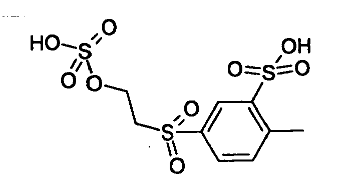 | 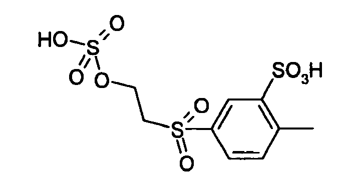 | grün |
| 30 | 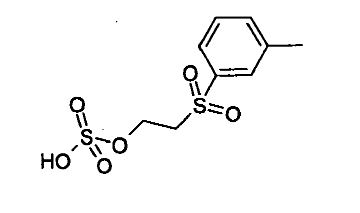 | 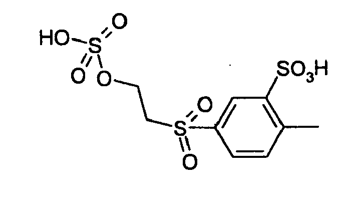 | grün |
| 31 | 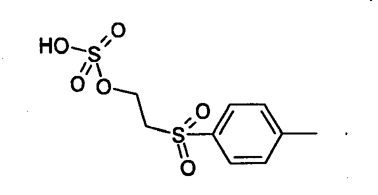 | 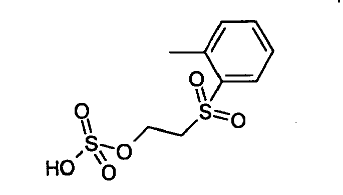 | grün |
| 32 | 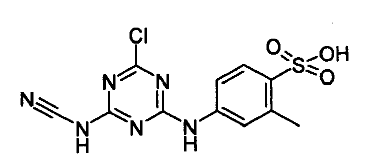 | 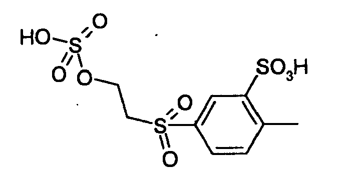 | grün |
| 33 | 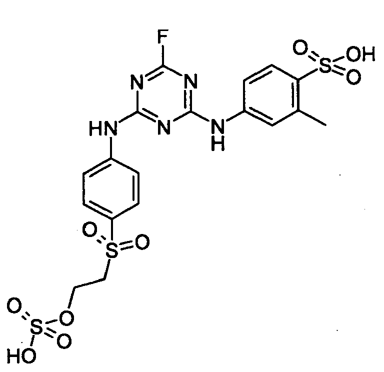 | 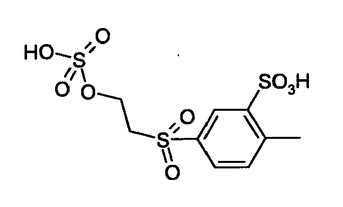 | grün |
| 34 | 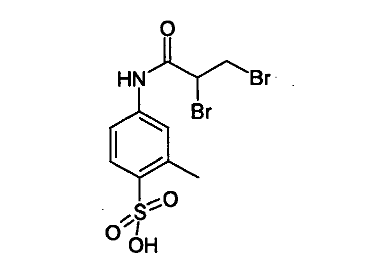 | 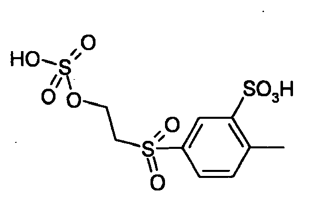 | grün |
| 35 | 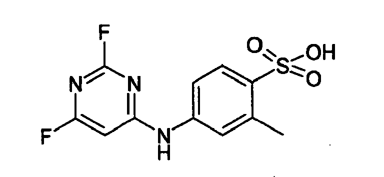 | 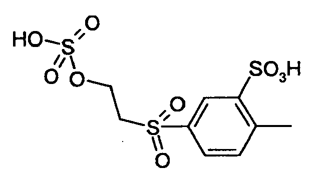 | grün |
| 36 | 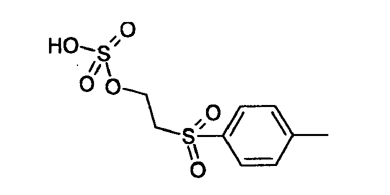 | 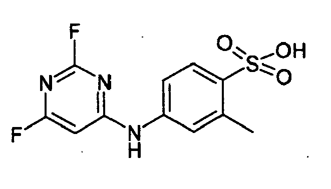 | grün |

### Beispiel 37

Eine Lösung von 18,8 Teilen 2,4-Diaminobenzolsulfonsäure in 100 Teilen Wasser wird bei einem pH-Wert von 6,0 innerhalb von 1 Std. mit 10 Teilen Maleinsäureanhydrid versetzt. Dann wird 30 Minuten nachgerührt. Während der Acylierung wird der pH-Wert mit 15 %-iger Sodalösung bei 6,0 gehalten.

Nach Zugabe von 17,5 Teilen 40 %-iger Natriumnitritlösung wird die erhaltene Mischung schnell zu einer Mischung von 200 Teilen Eis und 35 Teile 31 %-iger Salzsäure gegeben. Man rührt 30 Min. bei 5 - 10 °C nach und zerstört den Nitritüberschuss durch Zugabe von Amidosulfonsäure.

Zu der Diazotierung wird eine Lösung von 69,1 Teilen der Verbindung der Formel (XXIX) - siehe Beispiel 1 - in 1000 Teilen Wasser gegeben.

Mit 15 %-iger Sodalösung wird der pH-Wert auf 5,5 gestellt und gehalten.

Nach beendeter Kupplung wird die Reaktionsmischung 1 Std. bei 80 °C und einem pH Wert von 1,0 -1,5 gerührt. Anschließend wird der pH-Wert mit 15 %-iger Sodalösung auf 5,5 gestellt, die erhaltene Lösung auf 20 °C abgekühlt und mit 18 Teilen 40 %-iger Natriumnitritlösung versetzt. Die Lösung wird innerhalb von 15 Min. zu einer Mischung von 200 Teilen Eis und 35 Teilen 31 %-iger Salzsäure gegeben. Man rührt 60 min. nach und zerstört den Nitritüberschuss durch Zugabe von Amidosulfonsäure.

Anschließend werden 45,6 Teile der Verbindung der Formel (XXX) - siehe Beispiel 1 - zugegeben.

Mit 15 %-iger Sodalösung wird der pH-Wert auf 5,5 gestellt und gehalten.

Die Temperatur wird bei 5 - 10 °C gehalten. Nach beendeter Kupplung wird der erfindungsgemäße Farbstoff der Formel (Ik) 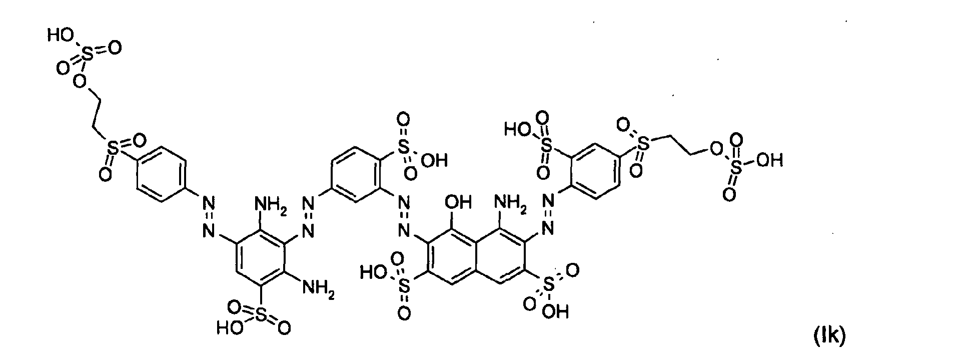 (in Form der freien Säure geschrieben) in üblicher Weise als Alkalisalz, wie Natriumsalz, isoliert, beispielsweise durch Fällung mit Ethanol und getrocknet. Der Farbstoff liefert unter den für Reaktivfabstoffe üblichen Färbebedingungen auf Baumwolle grüne Färbungen mit guten Echtheiten.

Die Farbstoffe der nachstehenden Beispiele 38 bis 47 können ebenfalls analog zu den vorstehend beschriebenen Verfahren hergestellt werden.

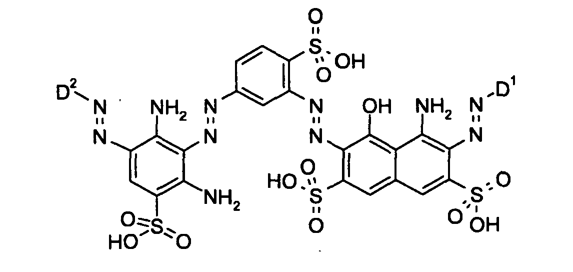

| Beispiel | D² | D¹ | Farbton |
|---|---|---|---|
| 38 | 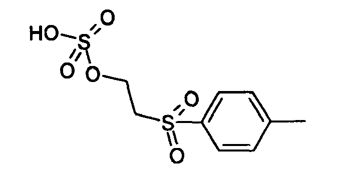 | 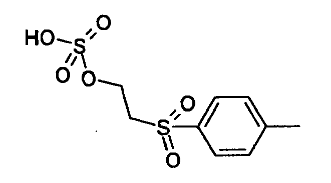 | grün |
| 39 | 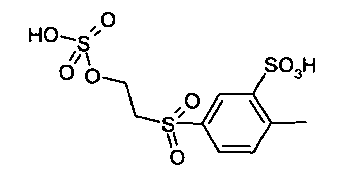 | 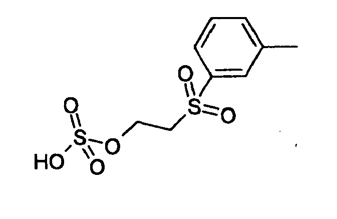 | grün |
| 40 | 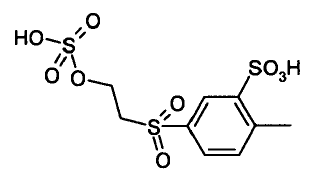 | 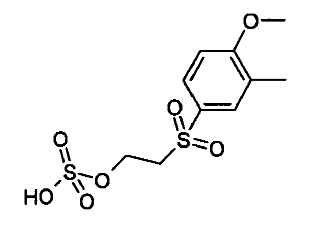 | grün |
| 41 | 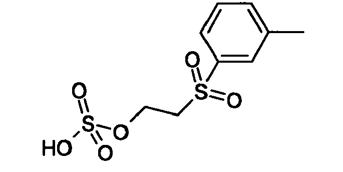 | 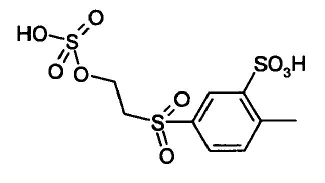 | grün |
| 42 | 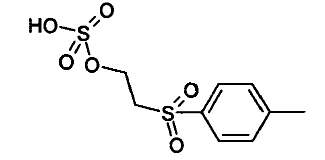 | 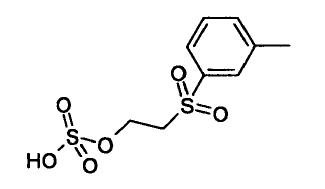 | grün |
| 43 | 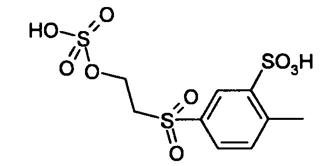 | 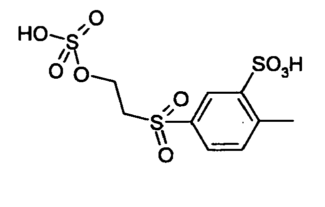 | grün |
| 44 | 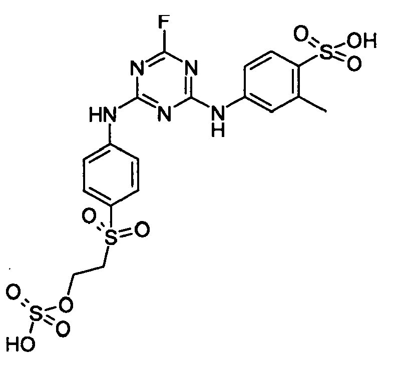 | 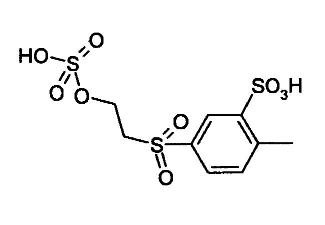 | grün |
| 45 | 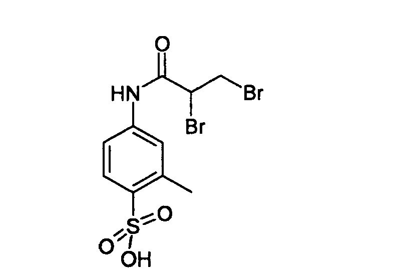 | 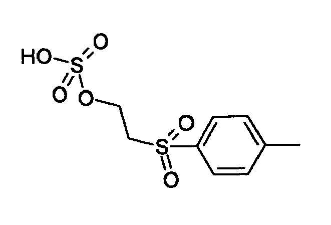 | grün |
| 46 | 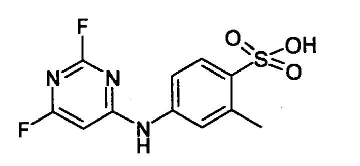 | 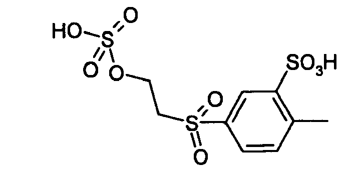 | grün |
| 47 | 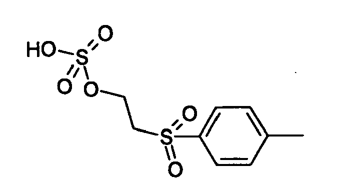 | 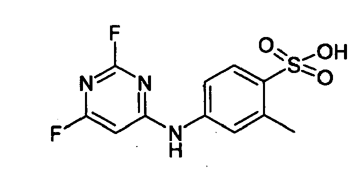 | grün |

Die Farbstoffe der nachstehenden Beispiele 48 bis 55 können analog zu dem in Beispiel 37 beschriebenen Verfahren hergestellt werden.

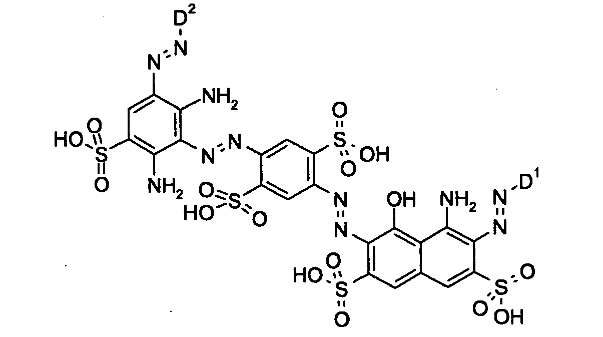

| Beispiel | D² | D¹ | Farbton |
|---|---|---|---|
| 48 | 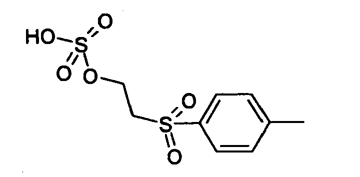 | 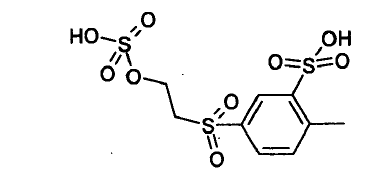 | grün |
| 49 | 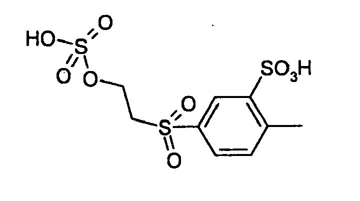 | 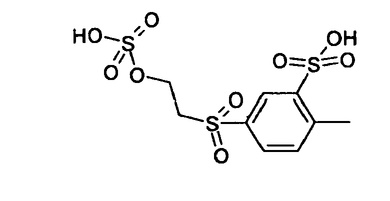 | grün |
| 50 | 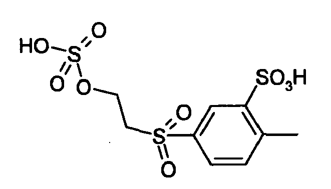 | 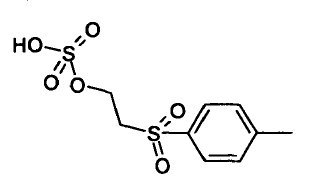 | grün |
| 51 | 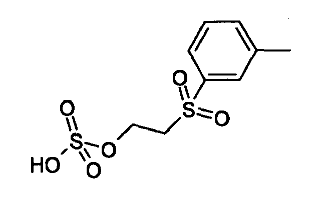 | 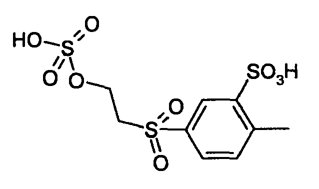 | grün |
| 52 | 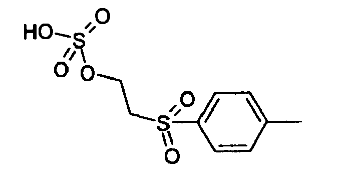 | 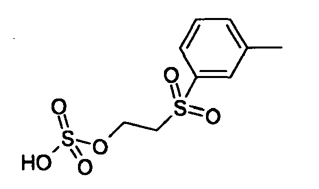 | grün |
| 53 | 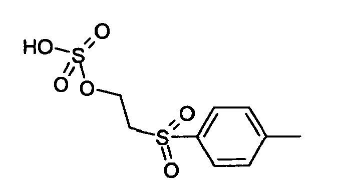 | 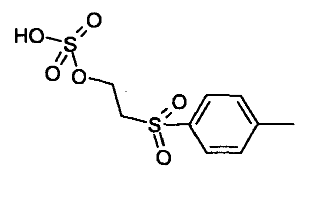 | grün |
| 54 | 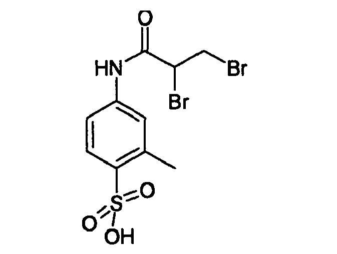 | 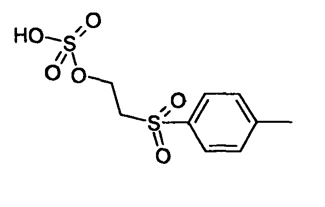 | grün |
| 55 | 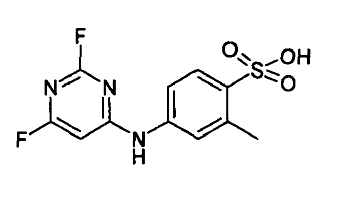 | 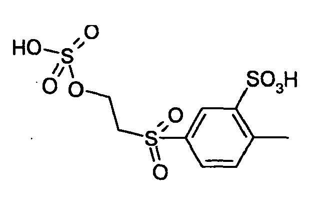 | grün |

### Beispiel 56

### 3,4 Teile des Farbstoffes der Formel le gemäß Beispiel 2 und 0,6 Teile des Farbstoffes der Formel (IIc)

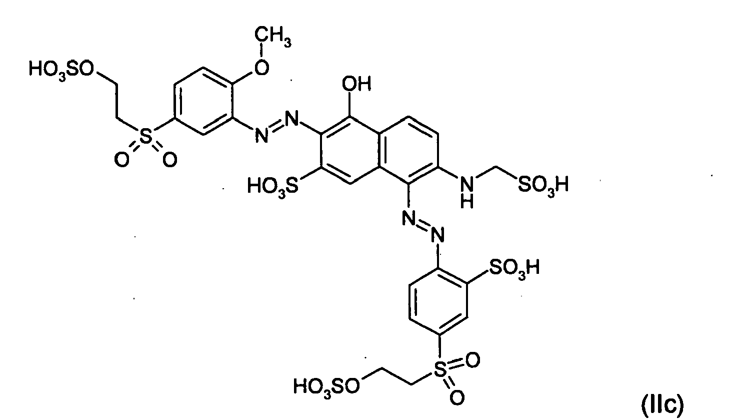

und 60 Teile Natriumchlorid werden in 1000 Teilen Wasser gelöst und 20 Teile Natriumcarbonat und gegebenenfalls 1 Teil eines Benetzungsmittel zugesetzt. In dieses Färbebad gibt man 100g eines Baumwollgewebes. Die Temperatur des Färbebades wird zunächst 10 Minuten bei 25 °C gehalten, dann innerhalb von 30 Minuten auf 60 °C erhöht und diese Temperatur weitere 60 Minuten gehalten. Danach wird die gefärbte Ware zunächst 2 Minuten mit Trinkwasser und anschließend 5 Minuten mit E-Waser gespült. Man neutralisiert die gefärbte Ware bei 40 °C in 1000 Teilen einer wässrigen Lösung, die 1 Teil einer 50 %igen Essigsäure enthält, in 10 Minuten.

Mit E-Wasser wird bei 70 °C nachgespült und dann 15 Minuten mit einem Waschmittel kochend geseift, noch mal gespült und getrocknet. Man erhält eine farbstarke schwarze Färbung mit sehr guten Echtheitseigenschaften.

### Beispiel 57

In ein Färbebad, welches 2,9 Teile des Farbstoffes der Formel (Id) gemäß Beispiel 1 und 1,1 Teile des Farbstoffes der Formel (IId) 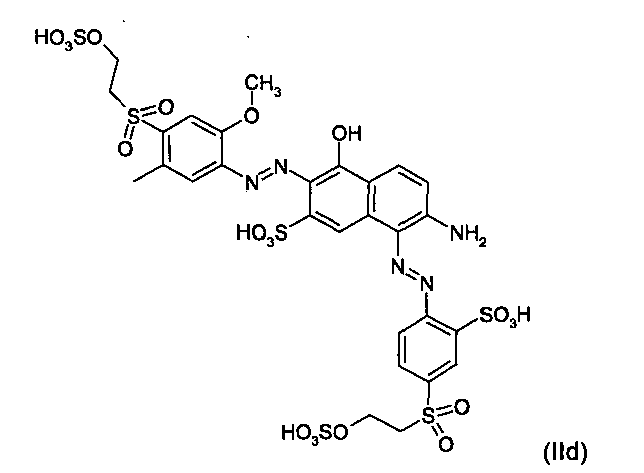 und 50 Teile Natriumchlorid in 1000 Teilen Wasser enthält gibt man bei einer Temperatur von 30 °C 100 Teile eines Bauwollgewebes. Die Temperatur des Färbebades wird innerhalb von 30 Minuten auf 80°C erhöpht und weitere 45 Minuten gehalten. Anschliessend wird die Temperatur innerhalb von 15 Minuten auf 60°C gesenkt, es werden 15 Teile Natriumcarbonat zugegeben, und die Temperatur des Färbebades wird weitere 45 Minuten bei 70°C gehalten. Danach wird das gefärbte Gewebe in üblicher Weise gespült und getrocknet. Man erhält ein schwarz gefärbtes Baumwollgewebe mit guten Allgemeinechtheiten.

### Beispiel 58

### 6,6 Teile des Farbstoffes aus Beispiel 16 und 1,4 Teile des Farbstoffs der Formel (IIIf)

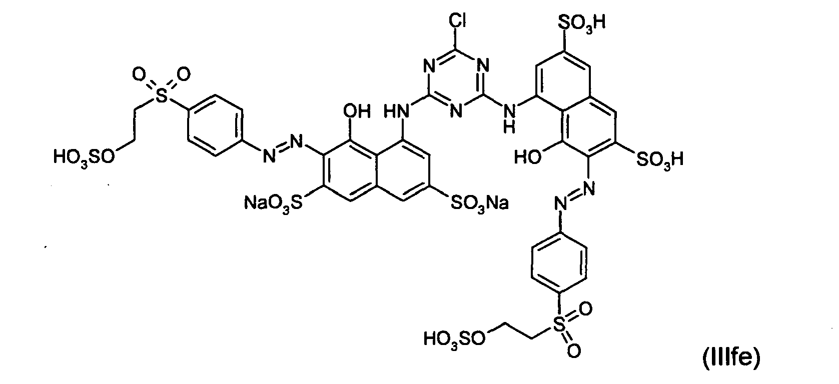

und 80 Teile Natriumchlorid werden in 1000 Teilen Wasser gelöst und 20 Teile Natriumcarbonat und gegebenenfalls 1 Teil eines Benetzungsmittel zugesetzt. In dieses Färbebad gibt man 100g eines Baumwollgewebes. Die Temperatur des Färbebades wird zunächst 10 Minuten bei 25 °C gehalten, dann innerhalb von 30 Minuten auf 60 °C erhöht und diese Temperatur weitere 80 Minuten gehalten. Danach wird die gefärbte Ware wie üblich gewaschen und getrocknet. Man erhält ein schwarz gefärbtes Baumwollgewebe mit guten Allgemeinechtheiten.

### Beispiel 59

25 Teile eines elektrolythaltigen Farbstoffpulvers, das den grünen Farbstoff aus Beispiel 7 in 60%-igem Anteil enthält und 10 Teile eines elektrolythaltigen Farbstoffpulvers, das den roten Farbstoff der Formel (IIc) in 75%-igem Anteil enthält, werden mechanisch miteinander gemischt.

Die resultierende, erfindungsgemäße Farbstoffmischung liefert unter den für Reaktivfarbstoffe üblichen Färbebedingungen auf Baumwolle schwarze Färbungen.

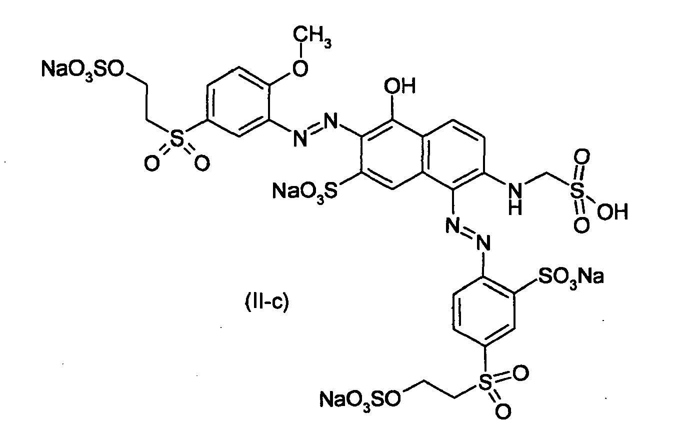

### Beispiel 60

140 Teile eines elektrolythaltigen Farbstoffpulvers, das den grünen Farbstoff der Formel Id gemäß Beispiel 1 in 50 %-igem Anteil enthält und 43 Teile eines elektrolythaltigen Farbstoffpulvers, das den roten Farbstoff der Formel (IIc) gemäß Beispiel 56 in 70%-igem Anteil enthält, werden in 1000 Teilen Wasser gelöst und die erhaltene Farbstofflösung auf pH 5,5-6,5 eingestellt. Durch Eindampfen oder Sprühtrocknung dieser Farbstofflösung erhält man eine Farbstoffmischung, die auf Baumwolle unter den für Reaktivfarbstoffe üblichen Färbebedingungen schwarze Färbungen und Drucke liefert.

### Beispiel 61

140 Teile eines elektrolythaltigen Farbstoffpulvers, das den grünen Farbstoff der Formel Id gemäß Beispiel 1 in 50% -igem Anteil enthält, 43 Teile eines elektrolythaltigen Farbstoffpulvers, das den roten Farbstoff der Formel (IIc) gemäß Beispiel 56 in 70%-igem Anteil enthält und 100 Teile eines elektrolythaltigen Farbstoffpulvers, das den Farbstoff der Formel (XIXa) 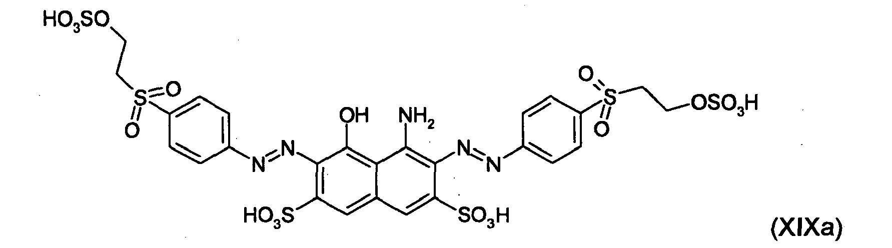 in 65 %igem Anteil enthält, werden in 1000 Teilen Wasser gelöst und die erhaltene Farbstofflösung auf pH 5,5-6,5 eingestellt. Durch Eindampfen oder Sprühtrocknung dieser Farbstofflösung erhält man eine Farbstoffmischung, die auf Baumwolle unter den für Reaktivfarbstoffe üblichen Färbebedingungen blau-schwarze Färbungen und Drucke liefert.

Die nachfolgenden Beispiele 62 bis 183 betreffen weitere erfindungsgemäße Mischungen der Farbstoffe der allgemeinen Formeln (I) mit Farbstoffem der allgemeinen Formeln (II) und/oder (III), die jeweils in Form der freien Sulfonsäure angegeben sind und die durch mechanisches Mischen hergestellt werden können. Die Mischungsverhältnisse sind in Gewichtsprozent angegeben. Die Farbstoffmischungen liefern nach den für Reaktivfarbstoffe üblichen Färbemethoden, beispielsweise auf Baumwolle, blau-schwarze bis grün-schwarze Färbungen.

| Beispiel | Farbstoff der allgemeinen Formel (I) gemäß Beispiel | Farbstoff der allgemeinen Formel (II) oder (III) | Verhältnis (I) : (II) oder (III) |
|---|---|---|---|
| 62 | 5 | IIc | 70 : 30 |
| 63 | 6 | IIc | 80 : 20 |
| 64 | 7 | IIc | 75 : 25 |
| 65 | 8 | IIc | 80 : 20 |
| 66 | 9 | IIc | 25 : 75 |
| 67 | 11 | IIc | 67 : 33 |

| Beispiel | Farbstoff der allgemeinen Formel (I) gemäß Beispiel | Farbstoff der allgemeinen Formel (II) oder (III) | Verhältnis (I) : (II) oder (III) |
|---|---|---|---|
| 68 | 12 | IIc | 90 :10 |
| 69 | 13 | IIc | 80 : 20 |
| 70 | 14 | IIc | 90 : 10 |
| 71 | 16 | IIc | 85 : 15 |
| 72 | 17 | IIc | 80 : 20 |
| 73 | 20 | IIc | 80 : 20 |
| 74 | 22 | IIc | 75 : 25 |
| 75 | 24 | IIc | 90 :10 |
| 76 | 26 | IIc | 80 : 20 |
| 77 | 27 | IIc | 75 : 25 |
| 78 | 28 | IIc | 80 : 20 |
| 79 | 29 | IIc | 80 :20 |
| 80 | 30 | IIc | 77 :23 |
| 81 | 31 | IIc | 80 : 20 |
| 82 | 32 | IIc | 85 : 15 |
| 83 | 33 | IIc | 80 : 20 |
| 84 | 34 | IIc | 80 : 20 |
| 85 | 37 | IIc | 80 : 20 |
| 86 | 48 | IIc | 80 : 20 |
| 87 | 5 | IIIf | 70 : 30 |
| 88 | 6 | IIIf | 80 : 20 |
| 89 | 7 | IIIf | 75 : 25 |
| 90 | 8 | IIIf | 80 : 20 |
| 91 | 9 | IIIf | 25 : 75 |
| 92 | 11 | IIIf | 67 : 33 |
| 93 | 12 | IIIf | 90 :10 |
| 94 | 13 | IIIf | 80 : 20 |
| 95 | 14 | IIIf | 90 : 10 |
| 96 | 16 | IIIf | 85 : 15 |

| Beispiel | Farbstoff der allgemeinen Formel (I) gemäß Beispiel | Farbstoff der allgemeinen Formel (II) oder (III) | Verhältnis (I) : (II) oder (III) |
|---|---|---|---|
| 97 | 17 | IIIf | 80 : 20 |
| 98 | 20 | IIIf | 80 : 20 |
| 99 | 22 | IIIf | 75 : 25 |
| 100 | 24 | IIIf | 90 : 10 |
| 101 | 26 | IIIf | 80 : 20 |
| 102 | 27 | IIIf | 75 : 25 |
| 103 | 28 | IIIf | 80 : 20 |
| 104 | 29 | IIIf | 80 : 20 |
| 105 | 30 | IIIf | 77 : 23 |
| 106 | 31 | IIIf | 80 : 20 |
| 107 | 32 | IIIf | 85 : 15 |
| 108 | 33 | IIIf | 80 : 20 |
| 109 | 34 | IIIf | 80 : 20 |
| 110 | 37 | IIIf | 80 : 20 |
| 111 | 48 | IIIf | 80 : 20 |
| 112 | 1 | IId | 75 : 25 |
| 113 | 7 | IId | 85 : 15 |
| 114 | 16 | IId | 80 : 20 |
| 115 | 26 | IId | 86 : 14 |
| 116 | 1 | 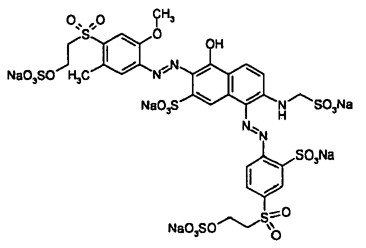 | 80 : 20 |
| 117 | 2 | dito | 77 : 23 |
| 118 | 7 | dito | 80 : 20 |
| 119 | 16 | dito | 70 : 30 |

| Beispiel | Farbstoff der allgemeinen Formel (I) gemäß Beispiel | Farbstoff der allgemeinen Formel (II) oder (III) | Verhältnis (I) : (II) oder (III) |
|---|---|---|---|
| 120 | 2 | 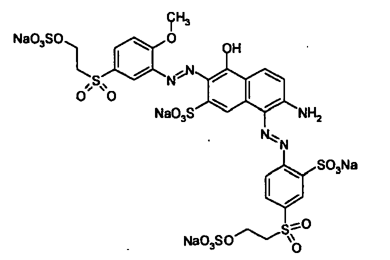 | |
| 121 | 16 | dito | 80 : 20 |
| 122 | 1 | 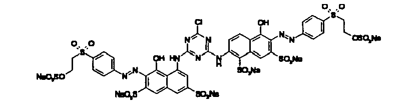 | 80 : 20 |
| 123 | 2 | dito | 90 : 10 |
| 124 | 7 | 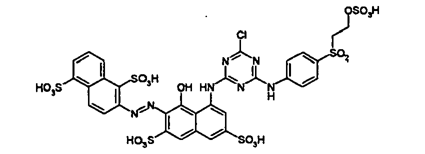 | 77 : 23 |
| 125 | 2 | dito | 70 : 30 |
| 126 | 16 | dito | 85 : 15 |
| 127 | 1 | 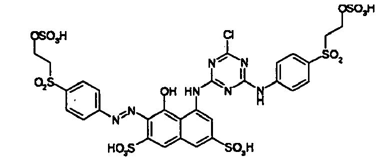 | 80 : 20 |
| 128 | 2 | dito | 90 : 10 |
| 129 | 7 | 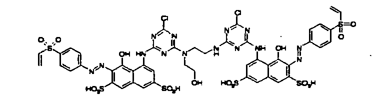 | 81 : 19 |
| 130 | 2 | dito | 80 : 20 |
| 131 | 26 | dito | 70 : 30 |

| Beispiel | Farbstoff der allgemeinen Formel (I) gemäß Beispiel | Farbstoff der allgemeinen Formel (II) oder (III) | Verhältnis (I) : (II) oder (III) |
|---|---|---|---|
| 132 | 1 | 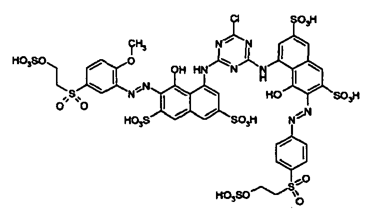 | 80 : 20 |
| 133 | 2 | dito | 90 : 10 |
| 134 | 26 | dito | 70 : 30 |
| 135 | 3 | dito | 95 : 05 |
| 136 | 13 | dito | 70 : 30 |
| 137 | 2 | 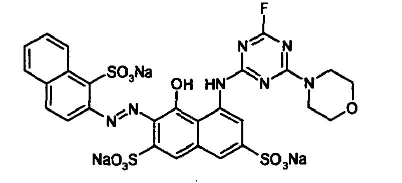 | 65 : 35 |
| 138 | 7 | 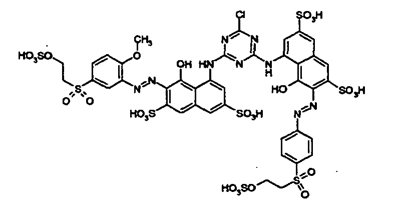 | 62 : 38 |
| 139 | 30 | 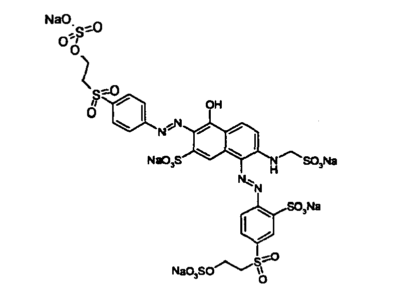 | 50 : 50 |
| 140 | 31 | dito | 60 : 40 |

| Beispiel | Farbstoff der allgemeinen Formel (I) gemäß Beispiel | Farbstoff der allgemeinen Formel (II) oder (III) | Farbstoff der allgemeinen Formel (XIX) | Verhältnis (I) : (II) oder (III) |
|---|---|---|---|---|
| 141 | 2 | IIc | XIXa | 56:14:30 |
| 142 | 7 | IIc | XIXa | 56:14:30 |
| 143 | 2 | IIIf | 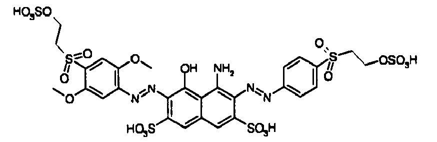 | 50:20:30 |
| 144 | 1 | IId | dito | 50:20:30 |
| 145 | 2 | IIIf | XIXa | 45:40:15 |
| 146 | 1 | IIIf | 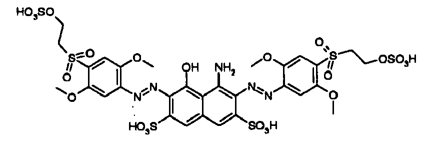 | 40:40:20 |
| 147 | 2 | IIc | dito | 25:50:25 |
| 148 | 7 | IIIf | dito | 30:20:50 |
| 149 | 1 | IIIf | 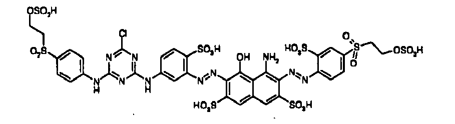 | 60:15:25 |
| 150 | 6 | 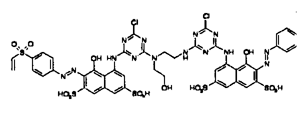 | dito | 60:15:25 |

| Beispiel | Farbstoff der allgemeinen Formel (I) gemäß Beispiel | Farbstoff der allgemeinen Formel (II) oder (III) | Farbstoff der allgemeinen Formel (XIX) | Verhältnis |
|---|---|---|---|---|
| 151 | 1 | dito | XIXa | 60:15:25 |
| 152 | 2 | 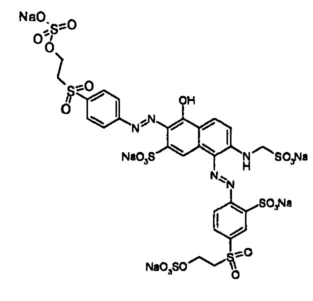 | 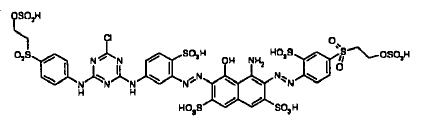 | 60:15:25 |
| 153 | 7 | IIIf | 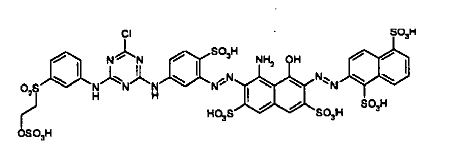 | 50:12:38 |
| 154 | 26 | IIc | dito | 60:15:25 |
| 155 | 1 | IId | 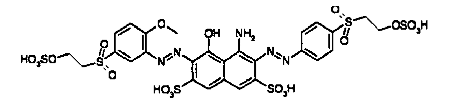 | 60:20:20 |
| 156 | 2 | IIc | dito | 30:10:60 |

| Beispiel | Farbstoff der allgemeinen Formel (I) gemäß Beispiel | Farbstoff der allgemeinen Formel (II) oder (III) | Farbstoff der allgemeinen Formel (XIX) | Verhältnis |
|---|---|---|---|---|
| 157 | 1 | IId | 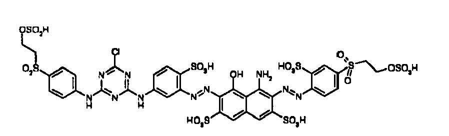 | 32:8:60 |
| 158 | 2 | 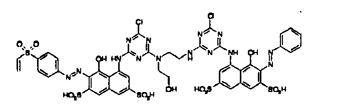 | dito | 20:10:70 |
| 159 | 7 | IIIf | 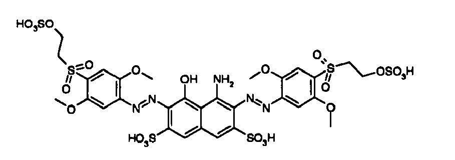 | 20:20:60 |
| 160 | 26 | IIIf | XIXa | 20:20:60 |
| 161 | 27 | 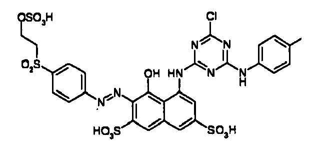 | XIXa | 50:13:37 |
| 162 | 26 | IIIf | 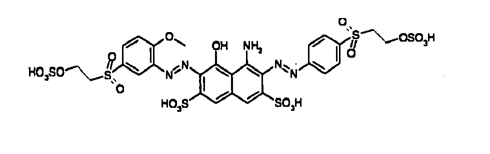 | 50:15:35 |

### Beispiel 163

Ein textiles Flächengebilde, bestehend aus mercerisierter Baumwolle wird mit einer Flotte, enthaltend 35 g/l Natriumcarbonat kalz, 100 g/l Harnstoff und 150 g/l einer niedrigviskosen Na-Alginatlösung (6%) foulardiert und dann getrocknet. Die Flottenaufnahme beträgt 70%.
Auf das so vorbehandelte Textil wird eine wässrige Tinte, enthaltend
2% des Farbstoffes der Formel (Id)
20% Sulfolan
0,01% Mergal K9N
77,99% Wasser
mit einem Drop-on-Demand (Bubble-Jet) Ink-Jet Druckkopf aufgedruckt. Der Druck wird vollständig getrocknet. Die Fixierung erfolgt mittels Sattdampf bei 102° C während 8 Minuten. Anschließend wird der Druck warm gespült, mit heißem Wasser bei 95 ° C einer Echtheitswäsche unterzogen, warm gespült und dann getrocknet. Man erhält einen Druck mit hervorragenden Gebrauchsechtheiten.

### Beispiel 164

Das in Beispiel 163 beschriebene Verfahren wird wiederholt, wobei aber an Stelle des Farbstoffes der Formel (Id) die Farbstoffmischung gemäß Beispiel 58 eingesetzt wird. Man erhält einen Druck mit hervorragenden Gebrauchsechtheiten.

## Patentansprüche

1. Farbstoffmischung, die mindestens einen Farbstoff der allgemeinen Formel (I) 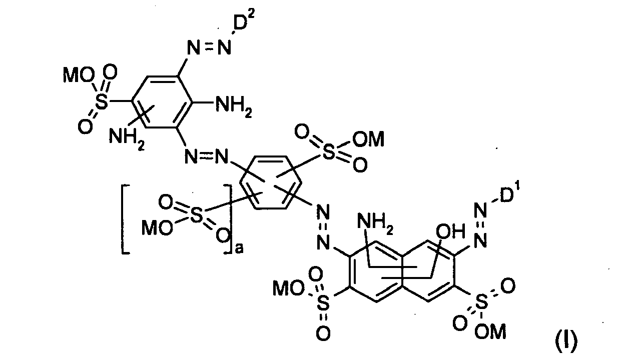 und mindestens einen Farbstoff der allgemeinen Formel (II) 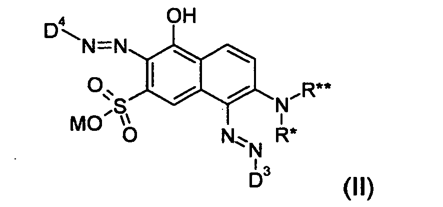 und/oder mindestens einen Farbstoff der allgemeinen Formel (III) 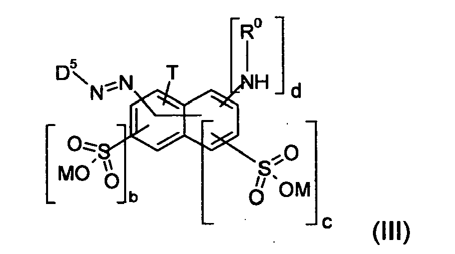 enthält, worin
D¹ bis D⁵ unabhängig voneinander eine Gruppe der allgemeinen Formel (IV) 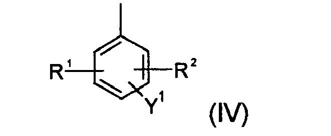 sind, worin
R¹ und R² unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen,
Y¹ für Wasserstoff oder eine Gruppe der Formel -SO₂-Z, -NH-CO-(CH₂)ₘ-SO₂-Z, -NH-CO-CH(Hal)-CH₂-Hal oder -NH-CO-CH(Hal)=CH₂,
Z für -CH=CH₂, -CH₂CH₂Z¹ oder Hydroxy,
Z¹ für Hydroxy oder eine unter Alkaliwirkung abspaltbare Gruppe und
Hal für Chlor oder Brom stehen; oder
D¹ bis D⁵ unabhängig voneinander eine Gruppe der allgemeinen Formel (V) 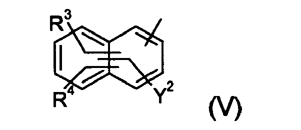 sind, worin
R³ und R⁴ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen und Y² eine der Bedeutungen von Y¹ hat; oder
D¹ bis D⁵ unabhängig voneinander eine Gruppe der allgemeinen Formel (VI) 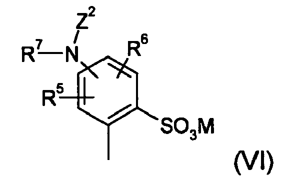 sind, worin
R⁵ und R⁶ unabhängig voneinander eine der Bedeutungen von R¹ oder R² haben;
R⁷ für Wasserstoff, (C₁-C₄)-Alkyl, unsubstituiertes oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl steht; und
Z² eine Gruppe der allgemeinen Formel (VII), (VIII) oder (IX) 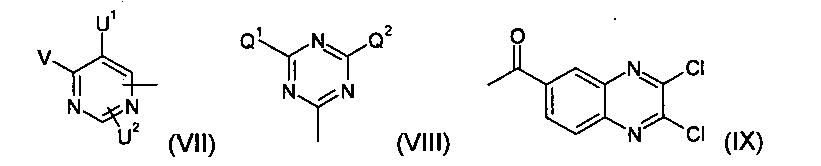 bedeutet, worin
V für Fluor oder Chlor;
U¹ und U² unabhängig voneinander für Wasserstoff, Fluor oder Chlor; und
Q¹ und Q² unabhängig voneinander für Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (X) oder (XI) 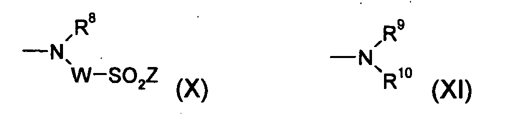 stehen, worin
R⁸ Wasserstoff, (C₁-C₆)-Alkyl, Sulfo-(C₁-C₆)-Alkyl, unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl ist;
R⁹ und R¹⁰ unabhängig voneinander eine der Bedeutungen von R⁸ haben oder zusammen eine Gruppe der Formel -(CH₂)ⱼ- oder -(CH₂)₂-E-(CH₂)₂- bilden, wobei j 4 oder 5 ist und E für Sauerstoff, Schwefel, Sulfonyl oder -NR¹¹ steht und R¹¹ für (C₁-C₆)-Alkyl bedeutet;
W für unsubstituiertes Phenylen, durch 1 oder 2 Substituenten aus der Reihe (C₁-C₄)-Alkyl, (C₁-C₄)-Alkoxy, Carboxy, Sulfo, Chlor und Brom substituiertes Phenylen, unsubstituiertes Naphthylen, durch ein oder zwei Sulfogruppen substituiertes Naphthylen, (C₂-C₆)-Alkylen, durch Sauerstoff, Schwefel, Sulfonyl, Amino, Carbonyl oder Carbonamido unterbrochenes (C₂-C₆)-Alkylen, (C₁-C₄)-Alkylen-phenylen, (C₁-C₄)-Alkylen-naphtylen, unsubstituiertes Phenylen-CONH-Phenylen oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenylen-CONH-Phenylen steht; und
Z die obengenannte Bedeutung hat; oder
D¹ bis D⁵ unabhängig voneinander eine Gruppe der allgemeinen Formel (XII) 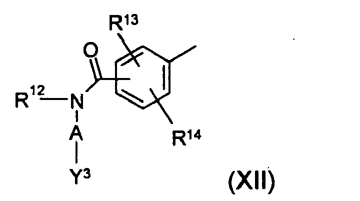 sind, worin
R¹² für Wasserstoff, (C₁-C₄)-Alkyl, unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl;
R¹³ und R¹⁴ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; A eine Phenylengruppe der allgemeinen Formel (XIII) 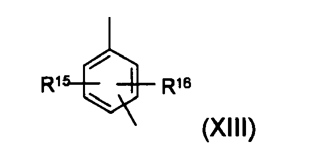 bedeutet, worin
R¹⁵ und R¹⁶ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; oder A eine Naphthylengruppe der allgemeinen Formel (XIV) 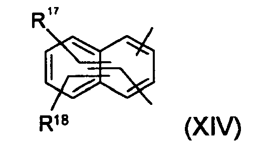 bedeutet, worin
R¹⁷ und R¹⁸ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; oder A eine Polymethylengruppe der allgemeinen Formel (XV)
-(CR¹⁹R²⁰)ₑ- (XV) (XV)
bedeutet, worin
R¹⁹ und R²⁰ unabhängig voneinander für Wasserstoff, (C₁-C₄)-Alkyl, (C₁-C₄)-Alkoxy, Hydroxy, Cyano, Amido, Halogen oder Aryl stehen; und
Y³ für Wasserstoff oder eine Gruppe der Formel -SO₂-Z steht und Z wie oben angegeben definiert ist;
R* und R** unabhängig voneinander für Wasserstoff, (C₁-C₄)-Alkyl oder -CH₂-SO₃M stehen;
R⁰ Wasserstoff, eine der oben definierten Gruppen der allgemeinen Formeln (VII) oder (VIII) oder eine Gruppe der allgemeinen Formel (XVI) 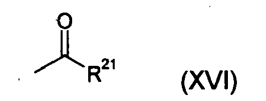 bedeutet, worin
R²¹ für (C₁-C₆)-Alkyl, Sulfo-(C₁-C₆)-Alkyl, Carboxy-(C₁-C₆)-Alkyl, unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl steht;
oder R⁰ für eine Gruppe der allgemeinen Formel (XVII) 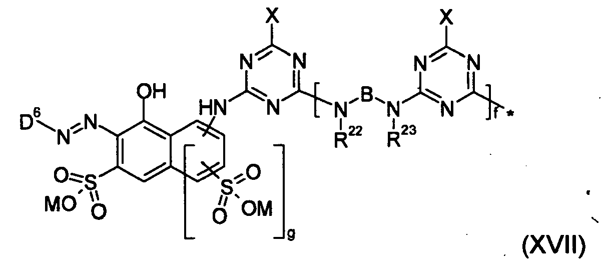 steht, worin
D⁶ eine der Bedeutungen von D¹ bis D⁵ besitzt;
X Halogen oder Hydroxy ist;
B für (C₂-C₆)-Alkylen oder durch Sauerstoff, Schwefel, Sulfonyl, Amino, Carbonyl oder Carbonamido unterbrochenes (C₂-C₆)-Alkylen steht;
R²² und R²³ unabhängig voneinander für Wasserstoff, unsubstituiertes (C₁-C₄)-Alkyl oder durch (C₁-C₄)-Alkoxy, Hydroxy, Cyano, Amido, Halogen substituiertes (C₁-C₄)-Alkyl stehen;
oder R⁰ für eine Gruppe der allgemeinen Formel (XVIII) 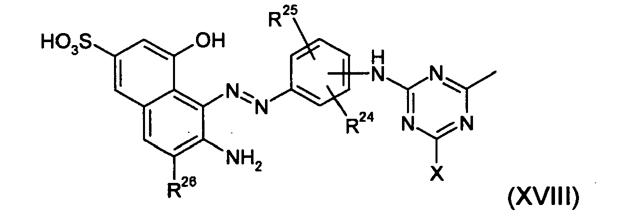 steht, worin
R²⁴ und R²⁵ unabhängig voneinander für Wasserstoff, (C₁-C₄)-Alkyl, (C₁-C₄)-Alkoxy, Sulfo, Carboxy, Amido, Ureido oder Halogen stehen;
R²⁶ für Wasserstoff oder Sulfo steht; und
X wie oben angegeben definiert ist;
T für Hydroxy oder NH₂ steht, wobei bei T gleich NH₂ d für 0 steht;
M Wasserstoff, ein Alkalimetall oder ein Äquivalent eines Erdalkalimetalls bedeutet; und
a für 0 oder 1;
b, c und d unabhängig voneinander für 0 oder 1;
e ganze Zahl größer 1;
f für 0 oder 1; und
g für 0 oder 1 stehen;
wobei die Farbstoffe der allgemeinen Formeln (I), (II), (III) jeweils mindestens eine faserreaktive Gruppe der Formeln -SO₂-Z oder -Z² enthalten.

2. Farbstoffmischung gemäß Anspruch 1, **dadurch gekennzeichnet, dass** sie mindestens einen Farbstoff der allgemeinen Formel (la) 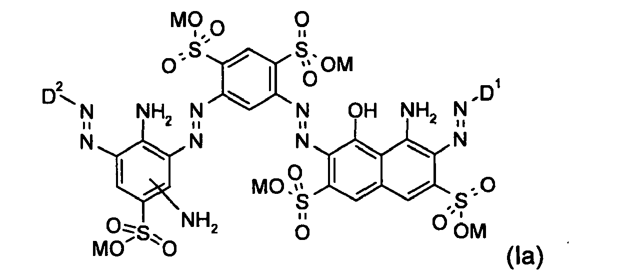 oder der Formel (Ib) 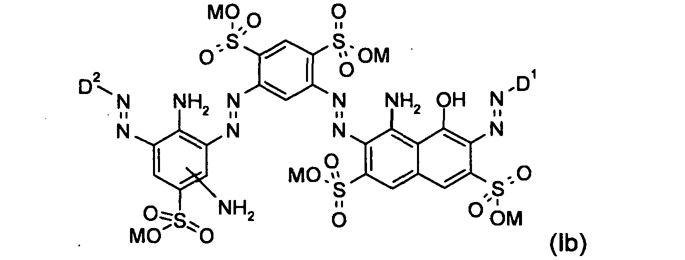 mindestens einen Farbstoff der allgemeinen Formel (IIa) 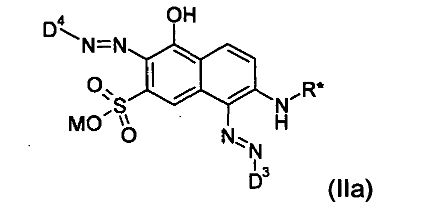 und/oder mindestens einen Farbstoff der allgemeinen Formel (IIIa) 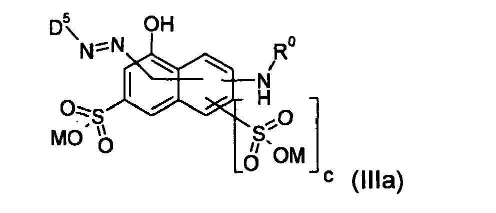 enthält, worin D¹ bis D⁵, R*, R⁰, M und c wie in Anspruch 1 angegeben definiert sind.

3. Farbstoffmischung gemäß Anspruch 2, **dadurch gekennzeichnet, dass** der Farbstoff der allgemeinen Formel (IIIa) den Farbstoff der allgemeinen Formel (IIIb) 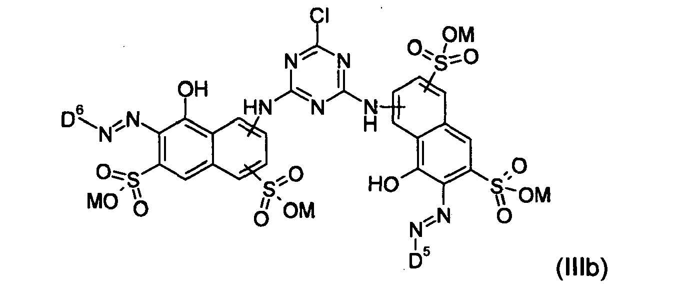 und/oder den Farbstoff der allgemeinen Formel (IIIc) 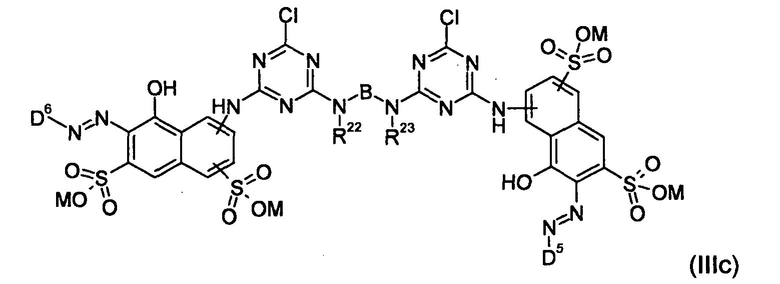 umfasst, worin D⁵, D⁶, B, R²², R²³ und M wie in Anspruch 1 angegeben definiert sind.

4. Farbstoffmischung gemäß einem oder mehreren der Ansprüche 1 bis 3, **dadurch gekennzeichnet, dass** sie mindestens einen Farbstoff der allgemeinen Formel (Ic) 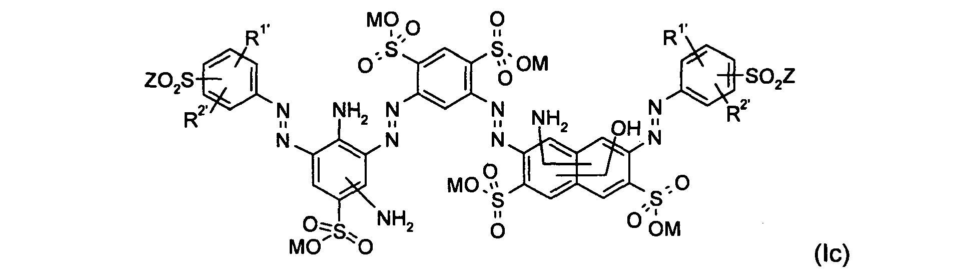 und mindestens einen Farbstoff der allgemeinen Formel (IIb) 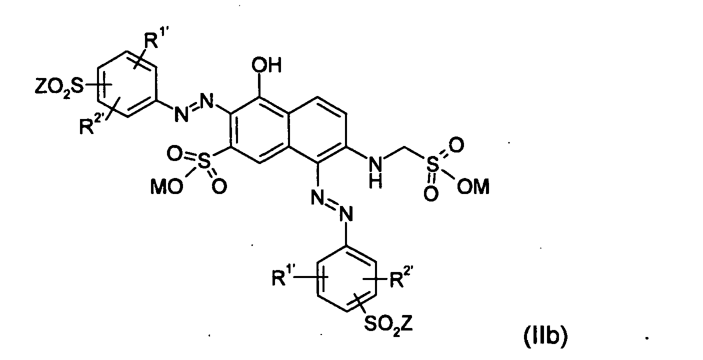 enthält, worin
R^{1'} und R^{2'} unabhängig voneinander für Wasserstoff, Methyl, Methoxy oder Sulfo stehen und Z und M wie in Anspruch 1 angegeben definiert sind.

5. Farbstoffmischung gemäß einem oder mehreren der Ansprüche 1 bis 4, **dadurch gekennzeichnet, dass** sie mindestens einen Farbstoff der allgemeinen Formel (Ic) 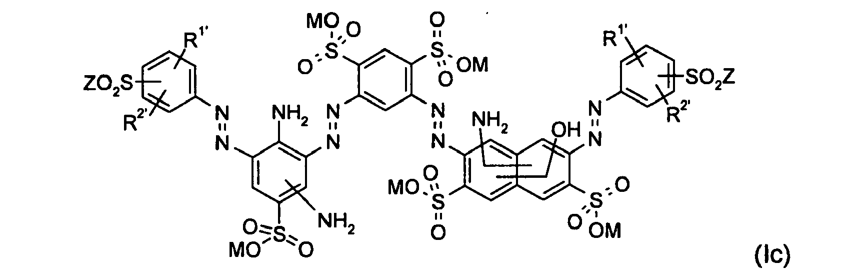 und mindestens einen Farbstoff der allgemeinen Formel (IIId) 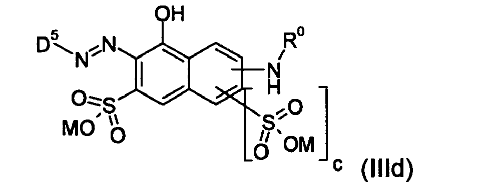 wobei D⁵, R⁰, M und c wie in Anspruch 1 angegeben definiert sind.

6. Farbstoffmischung gemäß Anspruch 5, **dadurch gekennzeichnet, dass** der Farbstoff der allgemeinen Formel (IIId) den Farbstoff der allgemeinen Formel (IIIe) 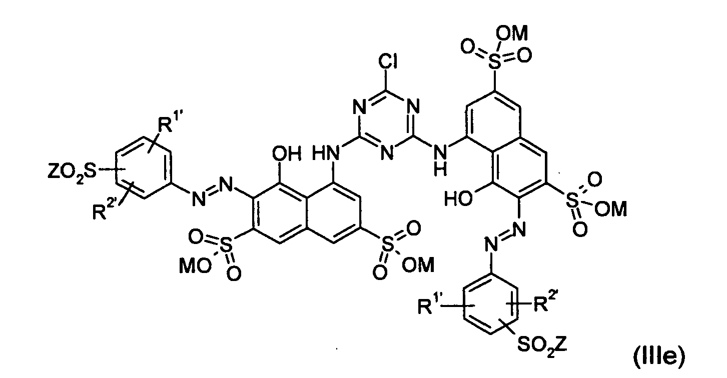 umfasst, worin R^{1'} und R^{2'} unabhängig voneinander für Wasserstoff, Methyl, Methoxy oder Sulfo stehen und Z und M wie in Anspruch 1 angegeben definiert sind.

7. Verfahren zur Herstellung einer Farbstoffmischung gemäß einem oder mehreren der Ansprüche 1 bis 6, **dadurch gekennzeichnet, dass** die Farbstoffe der allgemeinen Formeln (I), (II) bzw. (III) in dem gewünschten Mischungsverhältnis miteinander gemischt werden.

8. Farbstoff der allgemeinen Formel (I) 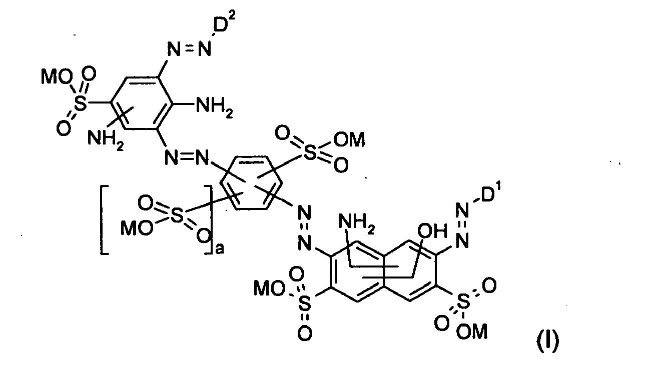 worin
D¹ und D² unabhängig voneinander eine Gruppe der allgemeinen Formel (IV) 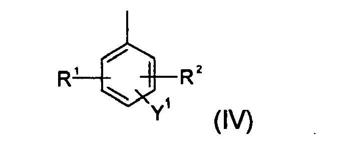 sind, worin
R¹ und R² unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen,
Y¹ für Wasserstoff oder eine Gruppe der Formel -SO₂-Z, -NH-CO-(CH₂)ₘ-SO₂-Z, -NH-CO-CH(Hal)-CH₂-Hal oder -NH-CO-CH(Hal)=CH₂,
Z für -CH=CH₂, -CH₂CH₂Z¹ oder Hydroxy,
Z¹ für Hydroxy oder eine unter Alkaliwirkung abspaltbare Gruppe und
Hal für Chlor oder Brom stehen; oder
D¹ und D² unabhängig voneinander eine Gruppe der allgemeinen Formel (V) 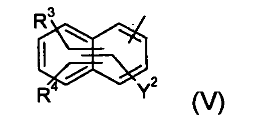 sind, worin
R³ und R⁴ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen und Y² eine der Bedeutungen von Y¹ hat; oder
D¹ und D² unabhängig voneinander eine Gruppe der allgemeinen Formel (VI) 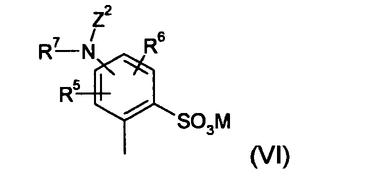 sind, worin
R⁵ und R⁶ unabhängig voneinander eine der Bedeutungen von R¹ oder R² haben; R⁷ für Wasserstoff, (C₁-C₄)-Alkyl, unsubstituiertes oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl steht; und
Z² eine Gruppe der allgemeinen Formel (VII), (VIII) oder (IX) 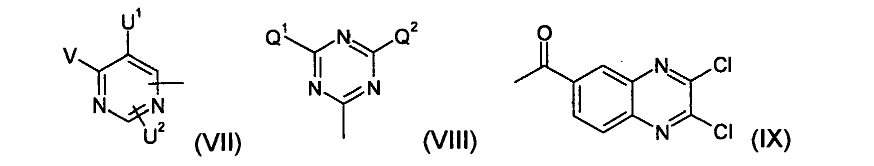 bedeutet, worin
V für Fluor oder Chlor;
U¹ und U² unabhängig voneinander für Wasserstoff, Fluor oder Chlor; und Q¹ und Q² unabhängig voneinander für Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (X) oder (XI) 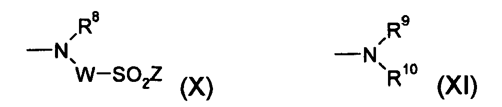 stehen, worin
R⁸ Wasserstoff, (C₁-C₆)-Alkyl, Sulfo-(C₁-C₆)-Alkyl unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl ist;
R⁹ und R¹⁰ unabhängig voneinander eine der Bedeutungen von R⁸ haben oder zusammen eine Gruppe der Formel -(CH₂)ⱼ- oder -(CH₂)₂-E-(CH₂)₂- bilden, wobei j 4 oder 5 ist und E für Sauerstoff, Schwefel, Sulfonyl oder -NR¹¹ steht und R¹¹ für (C₁-C₆)-Alkyl bedeutet;
W für unsubstituiertes Phenylen, durch 1 oder 2 Substituenten aus der Reihe (C₁-C₄)-Alkyl, (C₁-C₄)-Alkoxy, Carboxy, Sulfo, Chlor und Brom substituiertes Phenylen, unsubstituiertes Naphthylen, durch ein oder zwei Sulfogruppen substituiertes Naphthylen, (C₂-C₆)-Alkylen, durch Sauerstoff, Schwefel, Sulfonyl, Amino, Carbonyl oder Carbonamido unterbrochenes (C₂-C₆)-Alkylen, (C₁-C₄)-Alkylen-phenylen, (C₁-C₄)-Alkylen-naphtylen, unsubstituiertes Phenylen-CONH-Phenylen oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenylen-CONH-Phenylen steht; und
Z die obengenannte Bedeutung hat; oder
D¹ und D² unabhängig voneinander eine Gruppe der allgemeinen Formel (XII) 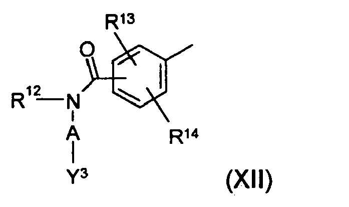 sind, worin
R¹² für Wasserstoff, (C₁-C₄)-Alkyl, unsubstituiertes Phenyl oder durch ein, zwei oder drei Substituenten aus der Reihe (C₁-C₄)-Alkyl, (C₁-C₄)-Alkoxy, Hydroxy, Sulfo, Halogen, Amido, Ureido und Carboxy substituiertes Phenyl;
R¹³ und R¹⁴ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; A eine Phenylengruppe der allgemeinen Formel (XIII) 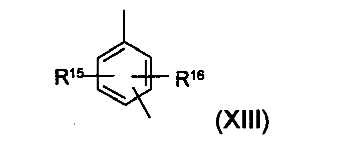 bedeutet, worin
R¹⁵ und R¹⁶ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; oder A eine Naphthylengruppe der allgemeinen Formel (XIV) 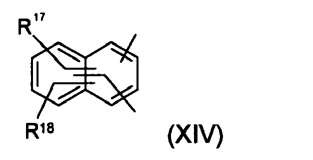 bedeutet, worin
R¹⁷ und R¹⁸ unabhängig voneinander für Wasserstoff, (C₁-C₄)-Alkyl, (C₁-C₄)-Alkoxy, Hydroxy, Sulfo, Carboxy, Cyano, Nitro, Amido, Ureido oder Halogen stehen; oder
A eine Polymethylengruppe der allgemeinen Formel (XV)
-(CR¹⁹R²⁰)ₑ- (VX)
bedeutet, worin
R¹⁹ und R²⁰ unabhängig voneinander für Wasserstoff, (C₁-C₄)-Alkyl, (C₁-C₄)-Alkoxy, Hydroxy, Cyano, Amido, Halogen oder Aryl stehen; und
Y³ für Wasserstoff oder eine Gruppe der Formel -SO₂-Z steht und Z wie oben angegeben definiert ist;
M Wasserstoff, ein Alkalimetall oder ein Äquivalent eines Erdalkalimetalls bedeutet; und
a für 0 oder 1;
e ganze Zahl größer 1;
steht und wobei er mindestens eine faserreaktive Gruppe der Formeln -SO₂-Z oder - Z² enthält.

9. Verfahren zur Herstellung eines Farbstoffes gemäß Anspruch 8, **dadurch gekennzeichnet, dass** er aus Verbindungen der allgemeinen Formeln (XX) bis (XXIV)
D¹- NH₂ (XX) D²-NH₂ (XXIV) 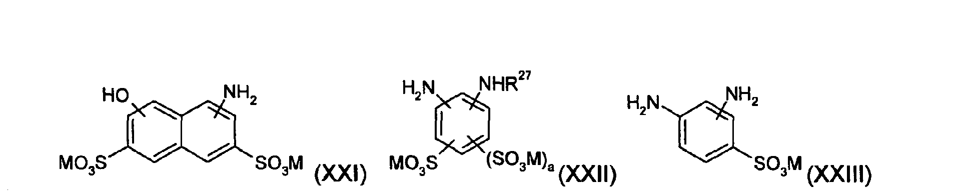
worin D¹, D², a und M wie in Anspruch 1 angegebend definiert sind und R²⁷ für eine Schutzgruppe steht, in Diazotierungs- und Kupplungsreaktionen in beliebiger Reihenfolge aufgebaut wird.

10. Verwendung einer Farbstoffmischung gemäß einem oder mehreren der Ansprüche 1 bis 6 oder eines Farbstoffes der allgemeinen Formel (I) gemäß Anspruch 8 zum Färben oder Bedrucken von Hydroxy- gruppenhaltigen Materialien

11. Tinte für den digitalen Textildruck nach dem Ink-Jet Verfahren, **dadurch gekennzeichnet sind, dass** sie eine Farbstoffmischung gemäß einem oder mehreren der Ansprüche 1 bis 6 oder einen Farbstoffes der allgemeinen Formel (I) gemäß Anspruch 8 enthält.

## Claims

1. A dye mixture comprising at least one dye of the general formula (I) 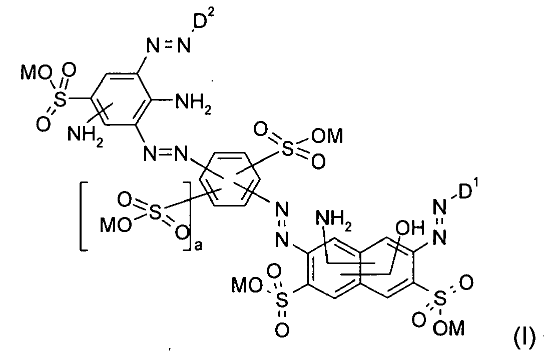 and at least one dye of the general formula (II) 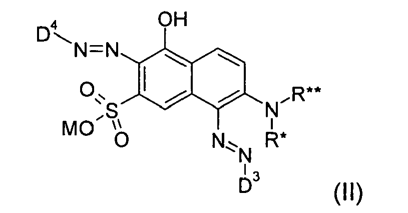 and/or at least one dye of the general formula (III) 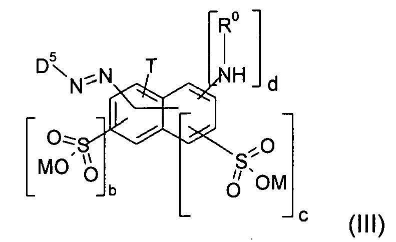 where
D¹ to D⁵ are independently a group of the general formula (IV) 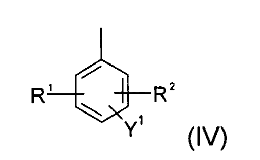 where
R¹ and R² are independently hydrogen, (C₁-C₄)-alkyl, (C₁-C₄)-alkoxy, hydroxyl, sulfo, carboxyl, cyano, nitro, amido, ureido or halogen,
Y¹ is hydrogen or a group of the formula -SO₂-Z, -NH-CO-(CH₂)ₘ-SO₂-Z, -NH-CO-CH(Hal)-CH₂-Hal or -NH-CO-CH(Hal)=CH₂,
Z is -CH=CH₂, -CH₂CH₂Z¹ or hydroxyl,
Z¹ is hydroxyl or an alkali-detachable group, and
Hal is chlorine or bromine; or
D¹ to D⁵ are independently a group of the general formula (V) 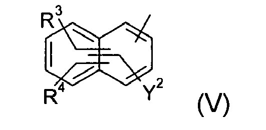 where
R³ and R⁴ are independently hydrogen, (C₁-C₄)-alkyl, (C₁-C₄)-alkoxy, hydroxyl, sulfo, carboxyl, cyano, nitro, amido, ureido or halogen, and Y² has one of the meanings of Y¹; or
D¹ to D⁵ are independently a group of the general formula (VI) 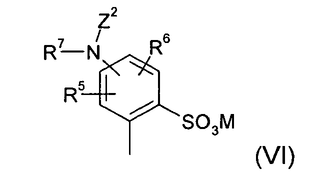 where
R⁵ and R⁶ independently have one of the meanings of R¹ or R²;
R⁷ is hydrogen, (C₁-C₄)-alkyl, unsubstituted phenyl or phenyl substituted by one, two or three substituents selected from the group consisting of (C₁-C₄)-alkyl, (C₁-C₄)-alkoxy, hydroxyl, sulfo, halogen, amido, ureido and carboxyl; and
Z² is a group of the general formula (VII), (VIII) or (IX) 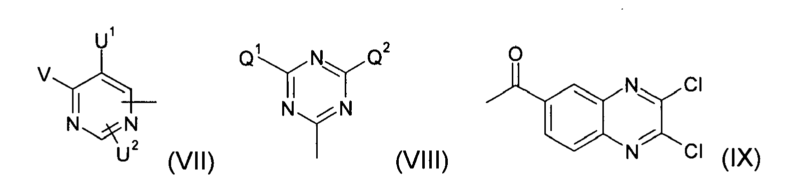 where
V is fluorine or chlorine;
U¹ and U² are independently hydrogen, fluorine or chlorine; and
Q¹ and Q² are independently chlorine, fluorine, cyanoamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the general formula (X) or (XI) 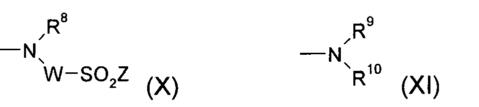 where
R⁸ is hydrogen, (C₁-C₆)-alkyl, sulfo-(C₁-C₆)-alkyl, unsubstituted phenyl or phenyl substituted by one, two or three substituents selected from the group consisting of (C₁-C₄)-alkyl, (C₁-C₄)-alkoxy, hydroxyl, sulfo, halogen, amido, ureido and carboxyl;
R⁹ and R¹⁰ independently have one of the meanings of R⁸ or combine to form a group of the formula -(CH₂)ⱼ- or -(CH₂)₂-E-(CH₂)₂-, where j is 4 or 5 and E is oxygen, sulfur, sulfonyl or -NR¹¹ and R¹¹ is (C₁-C₆)-alkyl;
W is unsubstituted phenylene, phenylene substituted by 1 or 2 substituents selected from the group consisting of (C₁-C₄)-alkyl, (C₁-C₄)-alkoxy, carboxyl, sulfo, chlorine and bromine, unsubstituted naphthylene, naphthylene substituted by one or two sulfo groups, (C₂-C₆)-alkylene, (C₂-C₆)-alkylene interrupted by oxygen, sulfur, sulfonyl, amino, carbonyl or carbonamido, (C₁-C₄)-alkylenephenylene, (C₁-C₄)-alkylenenaphthylene, unsubstituted phenylene-CONH-phenylene or phenylene-CONH-phenylene substituted by one, two or three substituents selected from the group consisting of (C₁-C₄)-alkyl, (C₁-C₄)-alkoxy, hydroxyl, sulfo, halogen, amido, ureido and carboxyl; and
Z is as defined above; or
D¹ to D⁵ are independently a group of the general formula (XII) 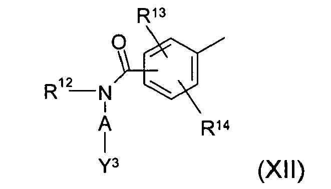 where
R¹² is hydrogen, (C₁-C₄)-alkyl, unsubstituted phenyl or phenyl substituted by one, two or three substituents selected from the group consisting of (C₁-C₄)-alkyl, (C₁-C₄)-alkoxy, hydroxyl, sulfo, halogen, amido, ureido and carboxyl;
R¹³ and R¹⁴ are independently hydrogen, (C₁-C₄)-alkyl, (C₁-C₄)-alkoxy, hydroxyl, sulfo, carboxyl, cyano, nitro, amido, ureido or halogen;
A is a phenylene group of the general formula (XIII) 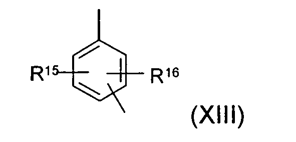 where
R¹⁵ and R¹⁶ are independently hydrogen, (C₁-C₄)-alkyl, (C₁-C₄)-alkoxy, hydroxyl, sulfo, carboxyl, cyano, nitro, amido, ureido or halogen; or
A is a naphthylene group of the general formula (XIV) 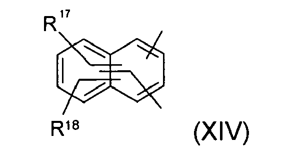 where
R¹⁷ and R¹⁸ are independently hydrogen, (C₁-C₄)-alkyl, (C₁-C₄)-alkoxy, hydroxyl, sulfo, carboxyl, cyano, nitro, amido, ureido or halogen; or
A is a polymethylene group of the general formula (XV)
-(CR¹⁹R²⁰)ₑ- (XV)
where
R¹⁹ and R²⁰ are independently hydrogen, (C₁-C₄)-alkyl, (C₁-C₄)-alkoxy, hydroxyl, cyano, amido, halogen or aryl; and
Y³ is hydrogen or a group of the formula -SO₂-Z and Z is as defined above;
R* and R** are independently hydrogen, (C₁-C₄)-alkyl or -CH₂-SO₃M;
R⁰ is hydrogen, one of the above-defined groups of the general formulae (VII) or (VIII) or a group of the general formula (XVI) 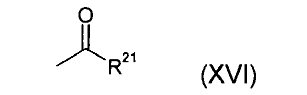 where
R²¹ is (C₁-C₆)-alkyl, sulfo-(C₁-C₆)-alkyl, carboxy-(C₁-C₆)-alkyl, unsubstituted phenyl or phenyl substituted by one, two or three substituents selected from the group consisting of (C₁-C₄)-alkyl, (C₁-C₄)-alkoxy, hydroxyl, sulfo, halogen, amido, ureido and carboxyl;
or R⁰ is a group of the general formula (XVII) 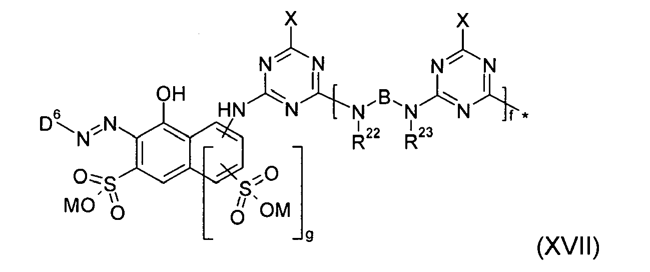 where
D⁶ has one of the meanings of D¹ to D⁵;
X is halogen or hydroxyl;
B is (C₂-C₆)-alkylene or oxygen-, sulfur-, sulfonyl-, amino-, carbonyl- or carbonamido- interrupted (C₂-C₆)-alkylene;
R²² and R²³ are independently hydrogen, unsubstituted (C₁-C₄)-alkyl or (C₁-C₄)-alkyl substituted by (C₁-C₄)-alkoxy, hydroxyl, cyano, amido, halogen;
or R⁰ is a group of the general formula (XVIII) 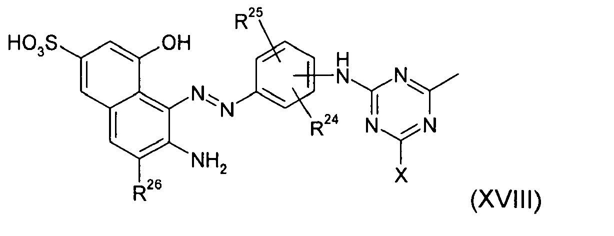 where
R²⁴ and R²⁵ are independently hydrogen, (C₁-C₄)-alkyl, (C₁-C₄)-alkoxy, sulfo, carboxyl, amido, ureido or halogen;
R²⁶ is hydrogen or sulfo; and
X is as defined above;
T is hydroxyl or NH₂, where d is 0 and T is NH₂;
M is hydrogen, an alkali metal or one equivalent of an alkaline earth metal; and
a is 0 or 1;
b, c and d are independently 0 or 1;
e is an integer greater than 1;
f is 0 or 1; and
g is 0 or 1;
the dyes of the general formulae (I), (II), (III) each containing at least one fiber-reactive group of the formulae -SO₂-Z or -Z².

2. The dye mixture of claim 1, comprising at least one dye of the general formula (Ia) 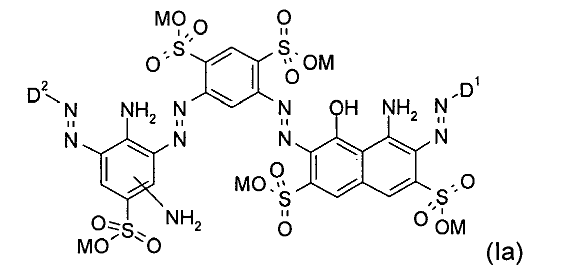 or of the formula (Ib) 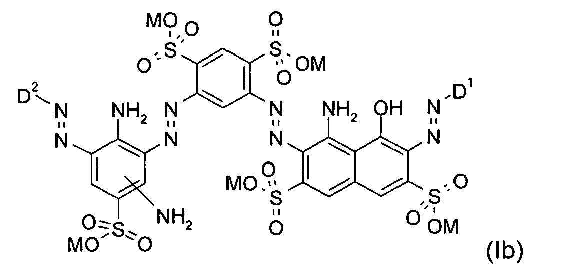 at least one dye of the general formula (IIa) 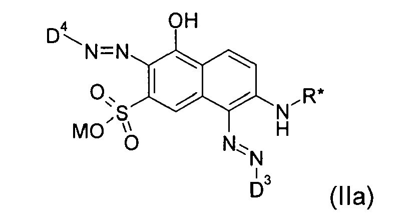 and/or at least one dye of the general formula (IIIa) 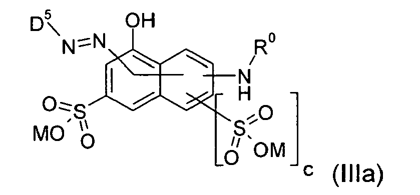 where D¹ to D⁵, R*, R⁰, M and c are each as defined in claim 1.

3. The dye mixture of claim 2 wherein the dye of the general formula (IIIa) comprises the dye of the general formula (IIIb) 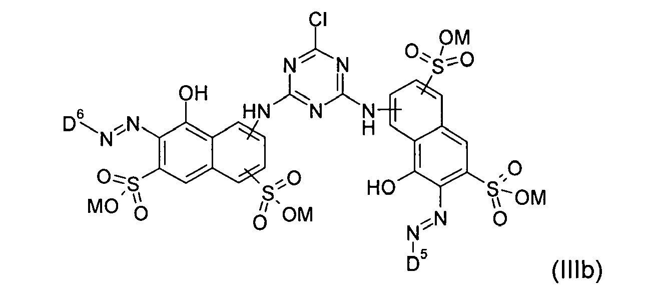 and/or the dye of the general formula (IIIc) 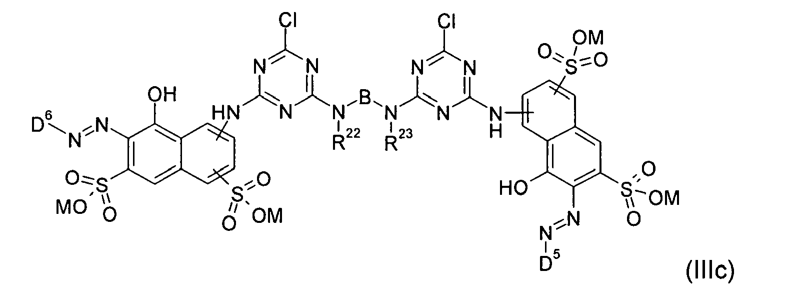 where D⁵, D⁶, B, R²², R²³ and M are each as defined in claim 1.

4. The dye mixture of one or more of claims 1 to 3, comprising at least one dye of the general formula (Ic) 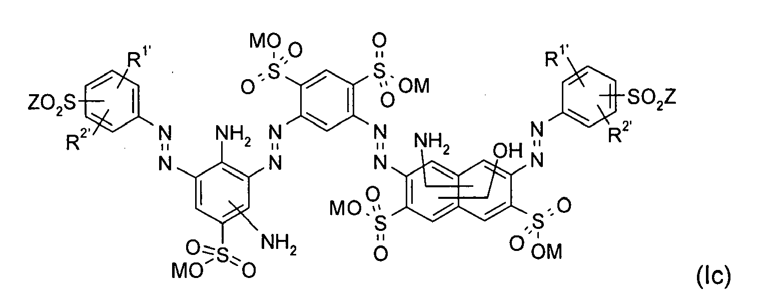 and at least one dye of the general formula (IIb) 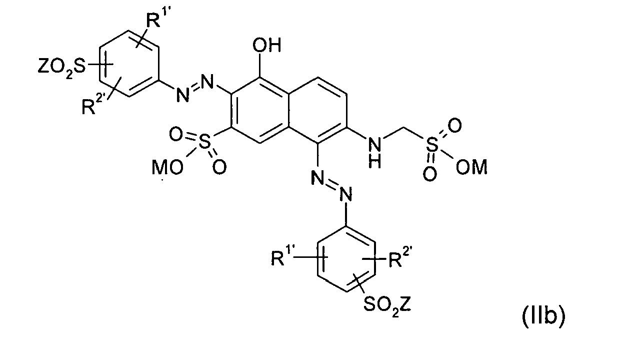 where
R^{1'} and R^{2'} are independently hydrogen, methyl, methoxy or sulfo and Z and M are each as defined in claim 1.

5. The dye mixture of one or more of claims 1 to 4, comprising at least one dye of the general formula (Ic) 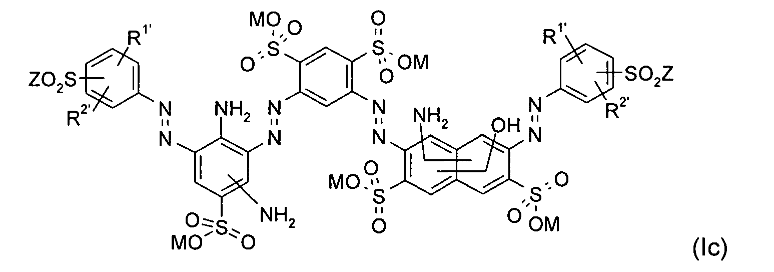 and at least one dye of the general formula (IIId) 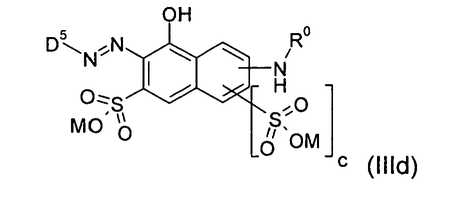 where D⁵, R⁰, M and c are each as defined in claim 1.

6. The dye mixture of claim 5 wherein the dye of the general formula (IIId) comprises the dye of the general formula (IIIe) 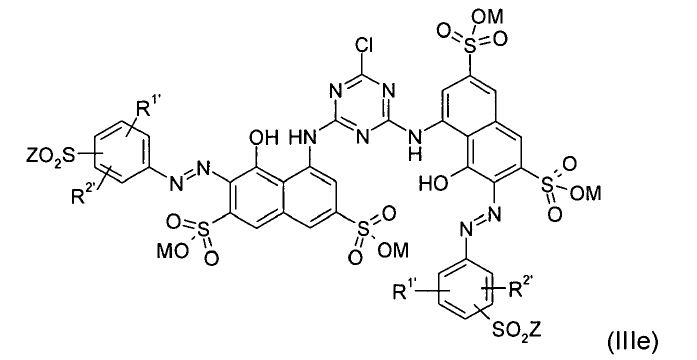 where R^{1'} and R^{2'} are independently hydrogen, methyl, methoxy or sulfo and Z and M are each as defined in claim 1.

7. A process for preparing a dye mixture as claimed in one or more of claims 1 to 6, which comprises mixing the dyes of the general formulae (I), (II) and (III) with each or one another in the desired mixing ratio.

8. A dye of the general formula (I) 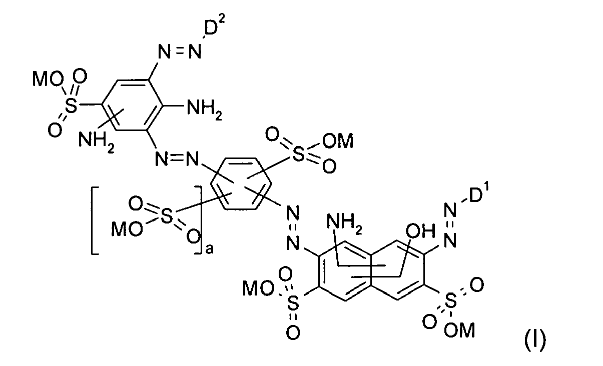 where
D¹ and D² are independently a group of the general formula (IV) 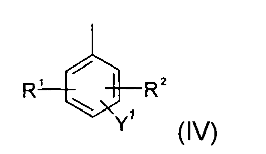 where
R¹ and R² are independently hydrogen, (C₁-C₄)-alkyl, (C₁-C₄)-alkoxy, hydroxyl, sulfo, carboxyl, cyano, nitro, amido, ureido or halogen,
Y¹ is hydrogen or a group of the formula -SO₂-Z, -NH-CO-(CH₂)ₘ-SO₂-Z, -NH-CO-CH(Hal)-CH₂-Hal or -NH-CO-CH(Hal)=CH₂,
Z is -CH=CH₂, -CH₂CH₂Z¹ or hydroxyl,
Z¹ is hydroxyl or an alkali-detachable group, and
Hal is chlorine or bromine; or
D¹ and D² are independently a group of the general formula (V) 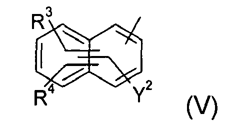 where
R³ and R⁴ are independently hydrogen, (C₁-C₄)-alkyl, (C₁-C₄)-alkoxy, hydroxyl, sulfo, carboxyl, cyano, nitro, amido, ureido or halogen, and Y² has one of the meanings of Y¹; or
D¹ and D² are independently a group of the general formula (VI) 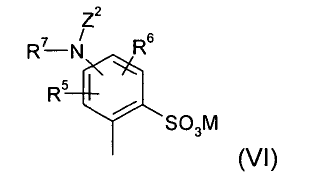 where
R⁵ and R⁶ independently have one of the meanings of R¹ or R²;
R⁷ is hydrogen, (C₁-C₄)-alkyl, unsubstituted phenyl or phenyl substituted by one, two or three substituents selected from the group consisting of (C₁-C₄)-alkyl, (C₁-C₄)-alkoxy, hydroxyl, sulfo, halogen, amido, ureido and carboxyl; and
Z² is a group of the general formula (VII), (VIII) or (IX) 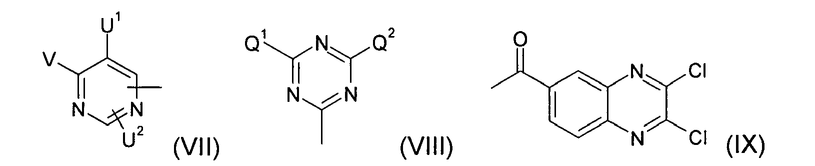 where
V is fluorine or chlorine;
U¹ and U² are independently hydrogen, fluorine or chlorine; and
Q¹ and Q² are independently chlorine, fluorine, cyanoamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the general formula (X) or (XI) 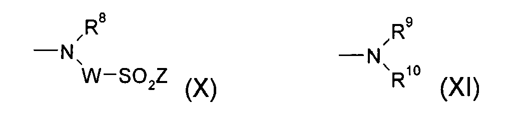 where
R⁸ is hydrogen, (C₁-C₆)-alkyl, sulfo-(C₁-C₆)-alkyl, unsubstituted phenyl or phenyl substituted by one, two or three substituents selected from the group consisting of (C₁-C₄)-alkyl, (C₁-C₄)-alkoxy, hydroxyl, sulfo, halogen, amido, ureido and carboxyl;
R⁹ and R¹⁰ independently have one of the meanings of R⁸ or combine to form a group of the formula -(CH₂)ⱼ- or -(CH₂)₂-E-(CH₂)₂-, where j is 4 or 5 and E is oxygen, sulfur, sulfonyl or -NR¹¹ and R¹¹ is (C₁-C₆)-alkyl;
W is unsubstituted phenylene, phenylene substituted by 1 or 2 substituents selected from the group consisting of (C₁-C₄)-alkyl, (C₁-C₄)-alkoxy, carboxyl, sulfo, chlorine and bromine, unsubstituted naphthylene, naphthylene substituted by one or two sulfo groups, (C₂-C₆)-alkylene, (C₂-C₆)-alkylene interrupted by oxygen, sulfur, sulfonyl, amino, carbonyl or carbonamido, (C₁-C₄)-alkylenephenylene, (C₁-C₄)-alkylenenaphthylene, unsubstituted phenylene-CONH-phenylene or phenylene-CONH-phenylene substituted by one, two or three substituents selected from the group consisting of (C₁-C₄)-alkyl, (C₁-C₄)-alkoxy, hydroxyl, sulfo, halogen, amido, ureido and carboxyl; and
Z is as defined above; or
D¹ and D² are independently a group of the general formula (XII) 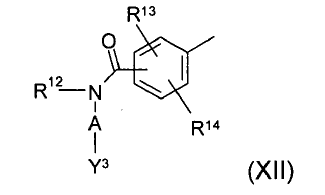 where
R¹² is hydrogen, (C₁-C₄)-alkyl, unsubstituted phenyl or phenyl substituted by one, two or three substituents selected from the group consisting of (C₁-C₄)-alkyl, (C₁-C₄)-alkoxy, hydroxyl, sulfo, halogen, amido, ureido and carboxyl;
R¹³ and R¹⁴ are independently hydrogen, (C₁-C₄)-alkyl, (C₁-C₄)-alkoxy, hydroxyl, sulfo, carboxyl, cyano, nitro, amido, ureido or halogen;
A is a phenylene group of the general formula (XIII) 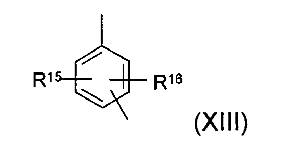 where
R¹⁵ and R¹⁶ are independently hydrogen, (C₁-C₄)-alkyl, (C₁-C₄)-alkoxy, hydroxyl, sulfo, carboxyl, cyano, nitro, amido, ureido or halogen; or
A is a naphthylene group of the general formula (XIV) 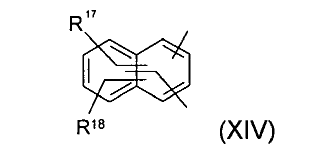 where
R¹⁷ and R¹⁸ are independently hydrogen, (C₁-C₄)-alkyl, (C₁-C₄)-alkoxy, hydroxyl, sulfo, carboxyl, cyano, nitro, amido, ureido or halogen; or
A is a polymethylene group of the general formula (XV)
-(CR¹⁹R²⁰)ₑ- (XV)
where
R¹⁹ and R²⁰ are independently hydrogen, (C₁-C₄)-alkyl, (C₁-C₄)-alkoxy, hydroxyl, cyano, amido, halogen or aryl; and
Y³ is hydrogen or a group of the formula -SO₂-Z and Z is as defined above;
M is hydrogen, an alkali metal or one equivalent of an alkaline earth metal; and
a is 0 or 1;
e is an integer greater than 1;
said dye containing at least one fiber-reactive group of the formulae -SO₂-Z or -Z².

9. A process for preparing a dye as claimed in claim 8, which comprises constructing it from the compounds of the general formulae (XX) to (XXIV)
D¹- NH₂ (XX) D²-NH₂ (XXIV) 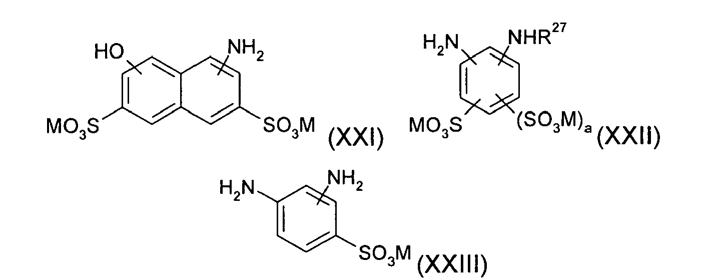
where D¹, D², a and M are each as defined in claim 1 and R²⁷ is a protective group, in diazotization and coupling reactions carried out in no particular order.

10. The use of a dye mixture as claimed in one or more of claims 1 to 6 or of a dye of the general formula (I) as claimed in claim 8 for dyeing or printing hydroxyl-containing materials.

11. An ink for digital textile printing by the ink jet process, comprising a dye mixture as claimed in one or more of claims 1 to 6 or a dye of the general formula (I) as claimed in claim 8.

## Revendications

1. Mélange de colorants, contenant au moins un colorant de formule générale (I) 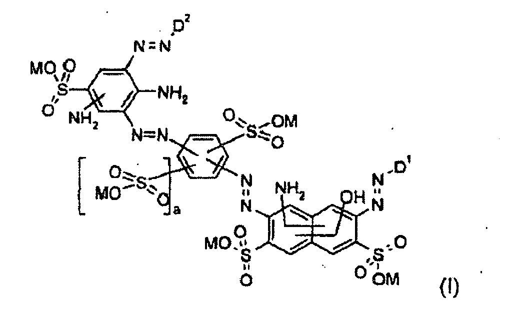 et au moins un colorant de formule générale (II) 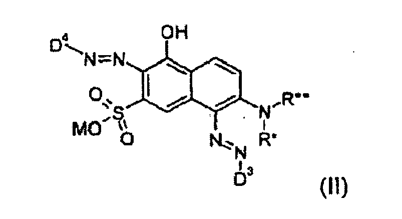 et/ou au moins un colorant de formule générale (III) 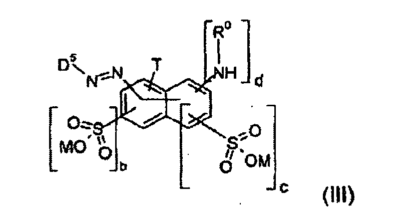 dans lesquelles
D¹ à D⁵ sont, indépendamment les uns des autres, un groupe de formule générale (IV) 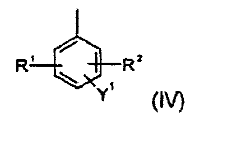 dans laquelle
R¹ et R² représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène, Y¹ représente un hydrogène ou un groupe de formule -SO₂-Z, -NH-CO-(CH₂)ₘ-SO₂-Z, -NH-CO-CH(Hal)-CH₂-Hal ou -NH-CO-CH(Hal)=CH₂,
Z représente -CH=CH₂, -CH₂CH₂Z¹ ou un hydroxyle,
Z¹ représente un hydroxyle ou un groupe pouvant être séparé sous l'effet d'une substance alcaline et Hal représente un chlore ou brome; ou
D¹ à D⁵ sont, indépendamment les uns des autres, un groupe de formule générale (V) 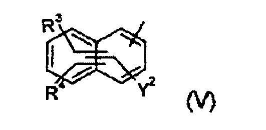 dans laquelle R³ et R⁴ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène et Y² a l'une des significations de Y¹; ou
D¹ à D⁵ sont, indépendamment les uns des autres, un groupe de formule générale (VI) 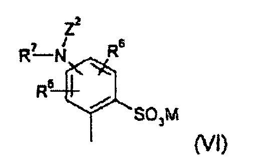 dans laquelle
R⁵ et R⁶ ont, indépendamment l'un de l'autre, l'une des significations de R¹ ou R²; R⁷ représente un hydrogène, (C₁-C₄)-alkyle, un phényle non-substitué ou substitué avec un, deux ou trois substituants de la série (C₁-C₄)-alkyle, (C₁-C₄)-alcoxy, hydroxyle, sulfo, halogène, amido, uréido et carboxy; et
Z² signifie un groupe de formule générale (VII), (VIII) ou (IX) 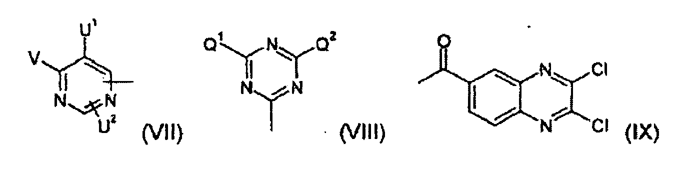 dans lesquelles
V représente un fluor ou chlore;
U¹ et U² représentent, indépendamment l'un de l'autre, un hydrogène, fluor ou chlore; et
Q¹ et Q² représentent, indépendamment l'un de l'autre, un chlore, fluor, cyanamido, hydroxyle, (C₁-C₆)-alcoxy, phénoxy, sulfophénoxy, mercapto, (C₁-C₆)-alkylmercapto, pyridino, carboxypyridino, carbamoylpyridino ou un groupe de formule générale (X) ou (XI) 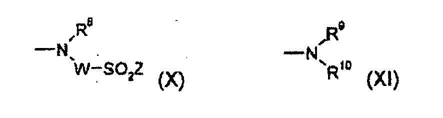 dans lesquelles
R⁸ est un hydrogène, (C₁-C₆)-alkyle, sulfo-(C₁-C₆)-alkyle, phényle non-substitué ou phényle substitué avec un, deux ou trois substituants de la série (C₁-C₄)-alkyle, (C₁-C₄)-alcoxy, hydroxyle, sulfo, halogène, amido, uréido et carboxy;
R⁹ et R¹⁰ ont, indépendamment l'un de l'autre, l'une des significations de R⁸ ou forment ensemble un groupe de formule -(CH₂)ⱼ- ou -(CH₂)₂-E-(CH₂)₂-, dans lesquelles j est 4 ou 5 et E représente de l'oxygène, du soufre, du sulfonyle ou du -NR¹¹ et R¹¹ représente un (C₁-C₆)-alkyle;
W réprésente un phénylène non-substitué, un phénylène substitué avec 1 ou 2 substituants de la série (C₁-C₄)-alkyle, (C₁-C₄)-alcoxy, carboxy, sulfo, chlore et brome, un naphtylène non-substitué, un naphtylène substitué avec un ou deux groupes sulfo, un (C₂-C₆)-alkylène, un (C₂-C₆)-alkylène un interrompu par de l'oxygène, du soufre, du sulfonyle, de l'amino, du carbonyle ou du carbonamido, un (C₁-C₄)-alkylène-phénylène, un (C₁-C₄)-alkylène-naphtylène un phénylène-CONH-phénylène non-substitué ou un phénylène-CONH-phénylène substitué avec un, deux ou trois substituants de la série (C₁-C₄)-alkyle, (C₁-C₄)-alcoxy, hydroxyle, sulfo, halogène, amido, uréido et carboxy; et
Z a la signification mentionnée ci-dessus; ou
D¹ à D⁵ sont, indépendamment les uns des autres, un groupe de formule générale (XII) 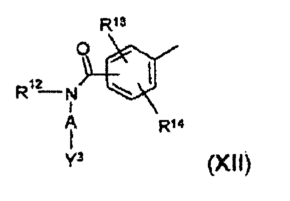 dans laquelle
R¹² représente un hydrogène, (C₁-C₄)-alkyle, phényle non-substitué ou phényle substitué avec un, deux ou trois substituants de la série (C₁-C₄)-alkyle, (C₁-C₄)-alcoxy, hydroxyle, sulfo, halogène, amido, uréido et carboxy;
R¹³ et R¹⁴ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou halogène; A signifie un groupe phénylène de formule générale (XIII) 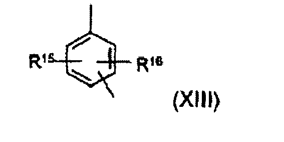 dans laquelle
R¹⁵ et R¹⁶ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène; ou A signifie un groupe naphtylène de formule générale (XIV) 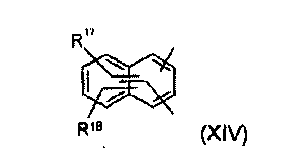 dans laquelle
R¹⁷ et R¹⁸ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène; ou A signifie un groupe polyméthylène de formule générale (XV)
-(CR¹⁹R²⁰)ₑ- (XV)
dans laquelle
R¹⁹ et R²⁰ représentent, indépendamment l'un de l'autre, un hydrogène, (C₁-C₄)-alkyle, (C₁-C₄)-alcoxy, hydroxyle, cyano, amido, halogène ou un aryle; et
Y³ représente un hydrogène ou un groupe de formule -SO₂-Z et Z correspond à la définition indiquée ci-dessus;
R* et R** représentent, indépendamment l'un de l'autre, un hydrogène, (C₁-C₄)-alkyle ou -CH₂-SO₃M;
R⁰ signifie l'un des groupes définis ci-dessus de formule générale (VII) ou (VIII) ou un groupe de formule générale (XVI) 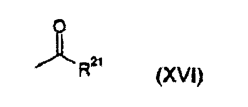 dans laquelle R²¹ est un (C₁-C₆)-alkyle, sulfo-(C₁-C₆)-alkyle, carboxy-(C₁-C₆)-alkyle, phényle non-substitué ou phényle substitué avec un, deux ou trois substituants de la série (C₁-C₄)-alkyle, (C₁-C₄)-alcoxy, hydroxyle, sulfo, halogène, amido, uréido et carboxy;
ou R⁰ représente un groupe de formule générale (XVII) 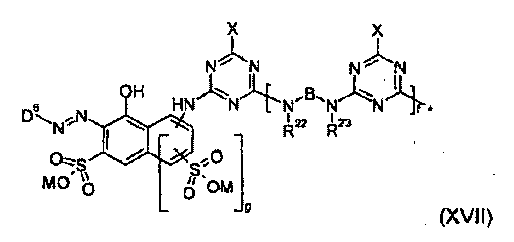 dans laquelle
D⁶ possède l'une des significations de D¹ à D⁵;
X est un halogène ou hydroxyle;
B représente un (C₂-C₆)-alkylène ou un (C₂-C₆)-alkylène interrompu par de l'oxygène, du soufre, du sulfonyle, de l'amino, du carbonyle ou du carbonamido;
R²² et R²³ représentent, indépendamment l'un de l'autre, un hydrogène, (C₁-C₄)-alkyle non-substitué ou un (C₁-C₄)-alkyle substitué avec un (C₁-C₄)-alcoxy, hydroxyle, cyano, amido, halogène;
ou R⁰ représente un groupe de formule générale (XVIII) 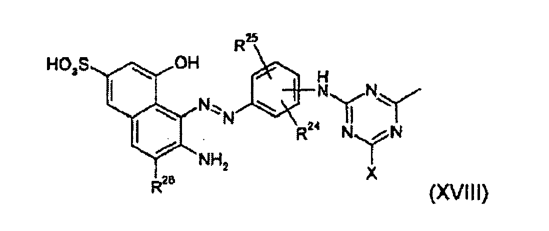 dans laquelle
R²⁴ et R²⁵ représentent, indépendamment l'un de l'autre, un hydrogène, (C₁-C₄) -alkyle, (C₁-C₄)-alcoxy, sulfo, carboxy, amido, ureido ou halogène; R²⁶ représente un hydrogène ou sulfo; et
X correspond à la définition indiquée ci-dessus;
T représente un hydroxyle ou NH₂, d représentant 0 si T est égal à NH₂;
M signifiant un hydrogène, un métal alcalin ou un équivalent d'un métal alcalino-terreux; et
a représentant 0 ou 1;
b, c et d représentant, indépendamment les uns des autres, 0 ou 1;
e étant un nombre entier supérieur à 1;
f représentant 0 ou 1; et
g représentant 0 ou 1;
les colorants de formules générales (I), (II), (III) contenant chacun au moins un groupe réagissant avec des fibres, lesdits groupes étant représentés par les formules -SO₂-Z ou -Z².

2. Mélange de colorants selon la revendication 1, **caractérisé en ce qu'**il contient au moins un colorant de formule générale (Ia) 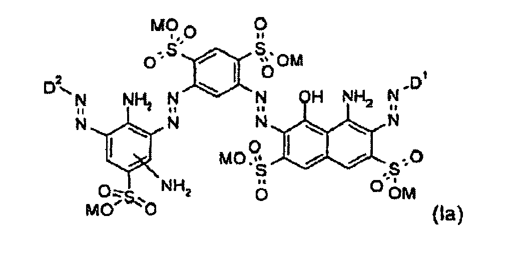 ou de formule (Ib) 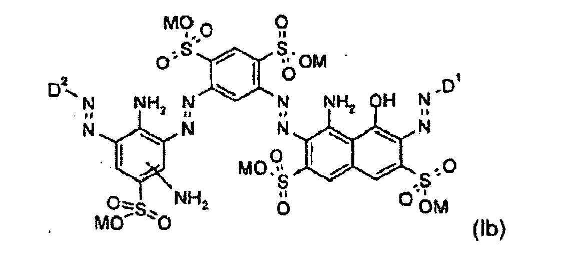 au moins un colorant de formule générale (IIa) 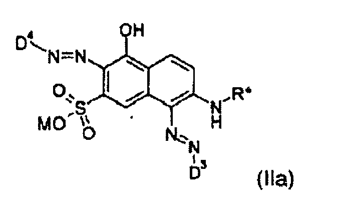 et/ou au moins un colorant de formule générale (IIIa) 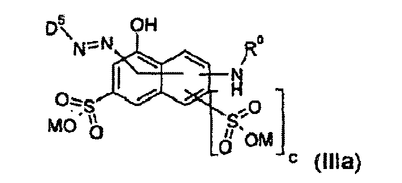 dans lesquelles D¹ à D⁵, R*, R⁰, M et c correspondent à leurs définitions indiquées dans la revendication 1.

3. Mélange de colorants selon la revendication 2, **caractérisé en ce que** le colorant de formule générale (IIIa) colorant de formule générale (IIIb) 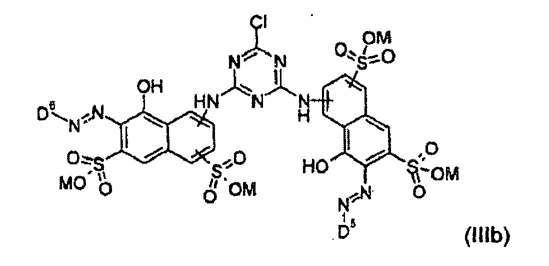 et/ou le colorant de formule générale (IIIc) 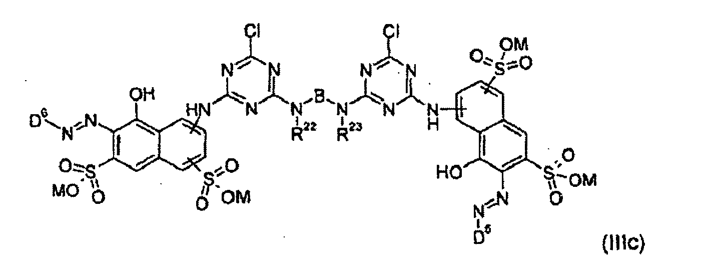 dans lesquelles D⁵, D⁶, B, R²², R²³ et M correspondent à leurs définitions indiquées dans la revendication 1.

4. Mélange de colorants selon une ou plusieurs des revendications 1 à 3, **caractérisé en ce qu'**il contient au moins un colorant de formule générale (Ic) 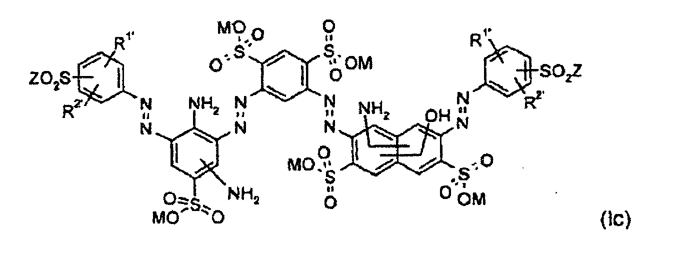 et au moins un colorant de formule générale (IIb) 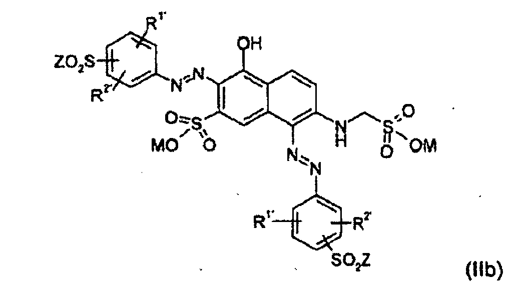 dans lesquelles
R^{1'} et R^{2'} représentent, indépendamment l'un de l'autre, un hydrogène, méthyle, méthoxy ou sulfo, et Z et M correspondent à leurs définitions indiquées dans la revendication 1.

5. Mélange de colorants selon une ou plusieurs des revendications 1 à 4, **caractérisé en ce qu'**il contient au moins un colorant de formule générale (Ic) 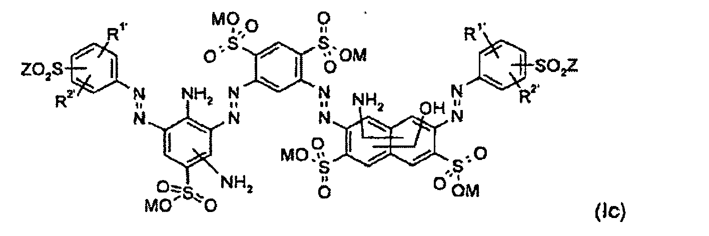 et au moins un colorant de formule générale (IIId) 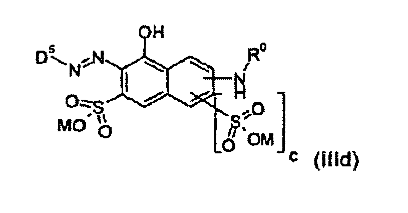 dans lesquelles D⁵, R⁰, M et c correspondent à leurs définitions indiquées dans la revendication 1.

6. Mélange de colorants selon la revendication 5, **caractérisé en ce que** le colorant de formule générale (IIId) comprend le colorant de formule générale (IIIe) 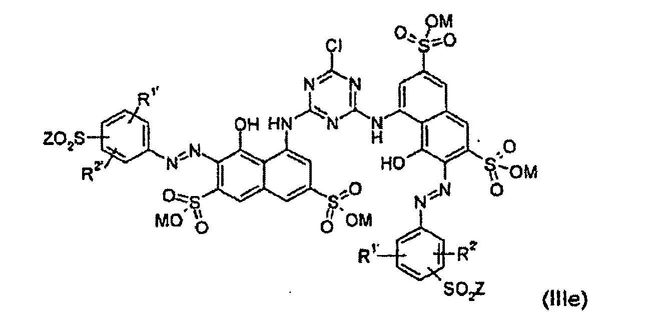 dans laquelle R^{1'} et R^{2'} représentent, indépendamment l'un de l'autre, un hydrogène, méthyle, méthoxy ou sulfo, et Z et M correspondent à leurs définitions indiquées dans la revendication 1.

7. Procédé de fabrication d'un mélange de colorants selon une ou plusieurs des revendications 1 à 6, **caractérisé en ce que** les colorants de formule générale (I), (II) ou, respectivement, (III) sont mélangés entre eux dans le rapport de mélange souhaité.

8. Colorant de formule générale (I) 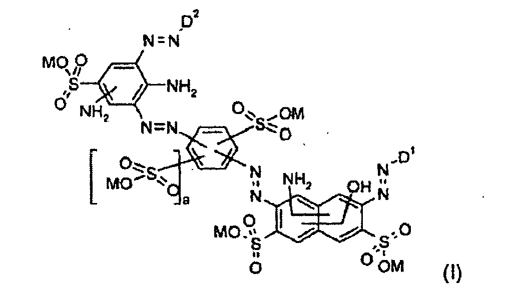 dans laquelle
D¹ et D² sont, indépendamment l'un de l'autre, un groupe de formule générale (IV) 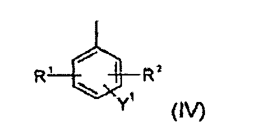 dans laquelle
R¹ et R² représentent, indépendamment l'un de l'autre, un hydrogène, (C₁-C₄) -alkyle, (C₁-C₄)-alcoxy, hydroxyle, sulfo, carboxy, cyano, nitro, amido, uréido ou un halogène,
Y¹ représente un hydrogène ou un groupe de formule -SO₂-Z, -NH-CO-(CH₂)ₘ-SO₂-Z, -NH-CO-CH(Hal)-CH₂-Hal ou -NH-CO-CH(Hal)=CH₂,
Z représente -CH=CH₂, -CH₂CH₂Z¹ ou hydroxyle,
Z¹ représente un hydroxyle ou un groupe pouvant être séparé sous l'effet d'une substance alcaline et Hal représente un chlore ou brome; ou
D¹ et D² sont, indépendamment l'un de l'autre, un groupe de formule générale (V) 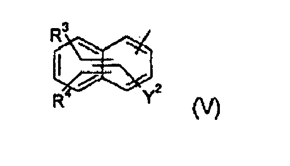 dans laquelle
R³ et R⁴ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène et Y² a l'une des significations de Y¹; ou
D¹ et D² sont, indépendamment l'un de l'autre, un groupe de formule générale (VI) 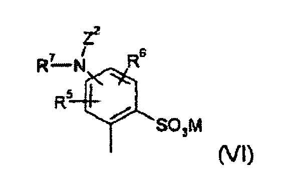 dans laquelle
R⁵ et R⁶ ont, indépendamment l'un de l'autre, l'une des significations de R¹ ou R²;
R⁷ représente un hydrogène, (C₁-C₄)-alkyle, phényle non-substitué ou substitué avec un, deux ou trois substituants de la série (C₁-C₉)-alkyle, (C₁-C₄)-alcoxy, hydroxyle, sulfo, halogène, amido, uréido et carboxy; et
Z² signifie un groupe de formule générale (VII), (VIII) ou (IX) 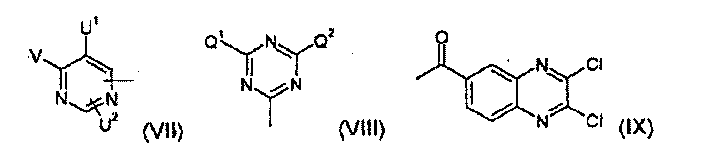 dans lesquelles
V représente un fluor ou chlore;
U¹ et U² représentent, indépendamment l'un de l'autre, un hydrogène, fluor ou chlore; et
Q¹ et Q² représentent, indépendamment l'un de l'autre, un chlore, fluor, cyanamido, hydroxyle, (C₁-C₆)-alcoxy, phénoxy, sulfophénoxy, mercapto, (C₁-C₆)-alkylmercapto, pyridino, carboxypyridino, carbamoylpyridino ou un groupe de formule générale (X) ou (XI) 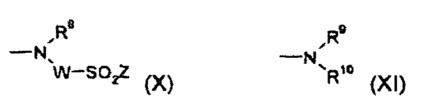 dans lesquelles
R⁸ est un hydrogène, (C₁-C₆)-alkyle, sulfo-(C₁-C₆)-alkyle, phényle non-substitué ou phényle substitué avec un, deux ou trois substituants de la série (C₁-C₄)-alkyle, (C₁-C₄)-alcoxy, hydroxyle, sulfo, halogène, amido, uréido et carboxy;
R⁹ et R¹⁰ ont, indépendamment l'un de l'autre, l'une des significations de R⁸ ou forment ensemble un groupe de formule -(CH₂)ⱼ- ou -(CH₂)₂-E-(CH₂)₂-, dans lesquelles j est 4 ou 5 et E représente de l'oxygène, du soufre, du sulfonyle ou du -NR¹¹ et R¹¹ signifie un (C₁-C₆)-alkyle;
W représente un phénylène non-substitué, un phénylène substitué avec 1 ou 2 substituants de la série (C₁-C₄)-alkyle, (C₁-C₄)-alcoxy, carboxy, sulfo, chlore et brome, un naphtylène non-substitué, un naphtylène substitué avec un ou deux groupes sulfo, un (C₂-C₆)-alkylène, un (C₂-C₆)-alkylène interrompu par de l'oxygène, du soufre, du sulfonyle, de l'amino, du carbonyle ou du carbonamido, un (C₁-C₄)-alkylène-phénylène, un (C₁-C₄)-alkylène-naphtylène, un phénylène-CONH-phénylène non-substitué ou un phénylène-CONH-phénylène substitué avec un, deux ou trois substituants de la série (C₁-C₄)-alkyle, (C₁-C₄)-alcoxy, hydroxyle, sulfo, halogène, amido, uréido et carboxy; et
Z a la signification mentionnée ci-dessus; ou
D¹ et D² sont, indépendamment l'un de l'autre, un groupe de formule générale (XII) 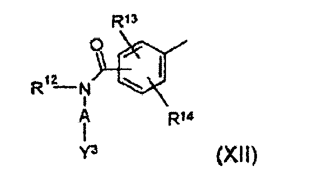 dans laquelle
R¹² représente un hydrogène, (C₁-C₄)-alkyle, phényle non-substitué ou phényle substitué avec un, deux ou trois substituants de la série (C₁-C₄)-alkyle, (C₁-C₄)-alcoxy, hydroxyle, sulfo, halogène, amido, uréido et carboxy;
R¹³ et R¹⁴ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène; A signifie un groupe phénylène de formule générale (XIII) 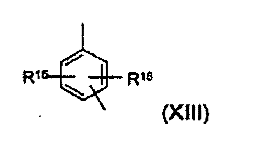 dans laquelle
R¹⁵ et R¹⁶ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène; ou A signifie un groupe naphtylène de formule générale (XIV) 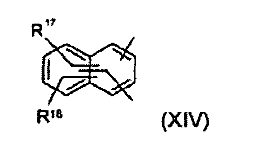 dans laquelle
R¹⁷ et R¹⁸ représentent, indépendamment l'un de l'autre, un hydrogène, (C₁-C₄)-alkyle, (C₁-C₄)-alcoxy, hydroxyle, sulfo, carboxy, cyano, nitro, amido, uréido ou un halogène; ou A signifie un groupe polyméthylène de formule générale (XV)
-(CR¹⁹R²⁰)ₑ- (XV)
dans laquelle
R¹⁹ et R²⁰ représentent, indépendamment l'un de l'autre, un hydrogène, (C₁-C₄)-alkyle, (C₁-C₄)-alcoxy, hydroxyle, cyano, amido, halogène ou un aryle; et
Y³ représente un hydrogène ou un groupe de formule -SO₂-Z et Z correspond à la définition indiquée ci-dessus;
M signifiant un hydrogène, un métal alcalin ou un équivalent d'un métal alcalino-terreux; et
a représentant 0 ou 1;
e étant un nombre entier supérieur à 1;
et lequel colorant contenant au moins un groupe réagissant avec des fibres, lesdits groupes étant représentés par les formules -SO₂-Z ou -Z².

9. Procédé de fabrication d'un colorant selon la revendication 8, **caractérisé en ce que** ledit colorant est constitué à partir de composés de formules générales (XX) à (XXIV)
D¹-NH₂ (XX) D²-NH₂ (XXIV) 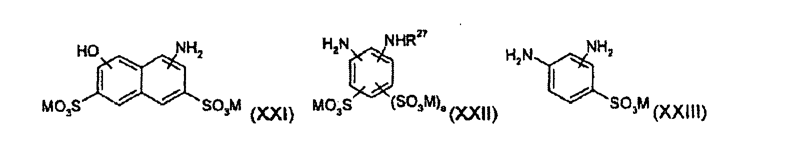
dans lesquelles D¹, D², a et M correspondent à leurs définitions indiquées dans la revendication 1 et R²⁷ représente un groupe de protection, moyennant des réactions de diazotation et de couplage réalisées dans un ordre quelconque.

10. Utilisation d'un mélange de colorants selon l'une ou plusieurs des revendications 1 à 6 ou d'un colorant de formule générale (I) selon la revendication 8, pour colorer ou imprimer des matériaux contenant des groupes hydroxyle.

11. Encre destinée à l'impression numérique sur textiles selon le procédé de jet d'encre, **caractérisée en ce qu'**elle contient un mélange de colorants selon l'une ou plusieurs des revendications 1 à 6 ou un colorant de formule générale (I) selon la revendication 8.
